(19) Europäisches Patentamt / European Patent Office / Office européen des brevets

(11) **EP 4 492 722 A1**

(12) **EUROPEAN PATENT APPLICATION**
published in accordance with Art. 153(4) EPC

(43) Date of publication:
**15.01.2025 Bulletin 2025/03**

(21) Application number: 23784172.1

(22) Date of filing: **23.03.2023**

(51) International Patent Classification (IPC):
*H04L 5/00* $^{(2006.01)}$

(52) Cooperative Patent Classification (CPC):
**H04L 5/00**

(86) International application number:
**PCT/CN2023/083271**

(87) International publication number:
**WO 2023/193608 (12.10.2023 Gazette 2023/41)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **08.04.2022 CN 202210369283**

(71) Applicant: **Huawei Technologies Co., Ltd.
Shenzhen, Guangdong 518129 (CN)**

(72) Inventors:
• **GAN, Ming
Shenzhen, Guangdong 518129 (CN)**
• **LIN, Yousi
Shenzhen, Guangdong 518129 (CN)**
• **GONG, Bo
Shenzhen, Guangdong 518129 (CN)**
• **YU, Jian
Shenzhen, Guangdong 518129 (CN)**
• **HU, Mengshi
Shenzhen, Guangdong 518129 (CN)**
• **LIU, Chenchen
Shenzhen, Guangdong 518129 (CN)**

(74) Representative: **Epping - Hermann - Fischer
Patentanwaltsgesellschaft mbH
Schloßschmidstraße 5
80639 München (DE)**

(54) **COMMUNICATION METHOD AND APPARATUS**

(57) This application provides a communication method and apparatus, to reduce costs and complexity of a baseband chip for processing a low-frequency signal and a high-frequency signal. This application is applied to a wireless local area network system that supports a WLAN protocol, for example, supports an IEEE 802.11be next-generation Wi-Fi protocol, for example, 802.11 series protocols such as Wi-Fi 8. In this application, a quantity of subcarriers corresponding to a first channel in a first frequency band is greater than or equal to a quantity of subcarriers corresponding to a second channel in a second frequency band, a ratio of a bandwidth of the first channel to a minimum channel bandwidth supported in the first frequency band is equal to a ratio of a bandwidth of the second channel to a minimum channel bandwidth supported in the second frequency band, and the minimum channel bandwidth supported in the first frequency band is greater than the minimum channel bandwidth supported in the second frequency band.

FIG. 3

**Description**

**CROSS-REFERENCE TO RELATED APPLICATIONS**

This application claims priority to Chinese Patent Application No. 202210369283.1, filed with the China National Intellectual Property Administration on April 8, 2022 and entitled "COMMUNICATION METHOD AND APPARATUS", which is incorporated herein by reference in its entirety.

**TECHNICAL FIELD**

This application relates to the field of communication technologies, and in particular, to a communication method and apparatus.

**BACKGROUND**

Development of a wireless local area network (wireless local area network, WLAN) makes wireless communication more and more popular. Standards (namely, the 802.11 protocol suite) formulated by the International Institute of Electrical and Electronics Engineers (Institute of Electrical and Electronics Engineers, IEEE) for the WLAN are continuously evolved. For example, a protocol standard for a low frequency band includes 802.11a/g, 802.11n, 802.11ac, 802.11ax, and 802.11be, and a supported frequency band includes one or more of 2.4 GHz/5 GHz/6 GHz; and a protocol standard for a high frequency band includes 802.11aj/ay, and a supported frequency band includes one or more of 45 GHz/60 GHz.

Frame structures of physical layer protocol data units (PHY protocol data units, PPDUs) corresponding to the foregoing different protocols are different. In particular, a frame structure of a PPDU corresponding to a protocol for the low frequency band is greatly different from a frame structure of a PPDU corresponding to a protocol for the high frequency band. Therefore, a method for processing a low-frequency signal is also different from a method for processing a high-frequency signal. In this case, hardware (for example, baseband chips of dedicated circuits) for processing the signals is also greatly different.

In view of this, baseband chips may be respectively designed for the high-frequency signal and the low-frequency signal, but costs are high. It is complex to design a converged baseband chip that can be used to process both the low-frequency signal and the high-frequency signal.

**SUMMARY**

This application provides a communication method and apparatus, to reduce costs and complexity of a baseband chip for processing a low-frequency signal and a high-frequency signal.

According to a first aspect, this application provides a communication method. The method may be performed by a transmit device, and the transmit device may be an access point, a station, a chip, or a circuit. The method includes: generating a first orthogonal frequency division multiplexing (orthogonal frequency division multiplexing, OFDM) signal, and sending the first OFDM signal on a first channel in a first frequency band. A quantity of subcarriers corresponding to the first channel is greater than or equal to a quantity of subcarriers corresponding to a second channel in a second frequency band, a lowest frequency of the first frequency band is higher than a highest frequency of the second frequency band, the first channel includes $2^M$ first fundamental channels, the second channel includes $2^M$ second fundamental channels, a bandwidth of the first fundamental channel is a minimum channel bandwidth supported in the first frequency band, a bandwidth of the second fundamental channel is a minimum channel bandwidth supported in the second frequency band, the bandwidth of the first fundamental channel is greater than the bandwidth of the second fundamental channel, and M is an integer greater than or equal to 0.

In this embodiment of this application, a ratio of the bandwidth of the first channel to the minimum channel bandwidth supported in the first frequency band is equal to a ratio of the bandwidth of the second channel to the minimum channel bandwidth supported in the second frequency band, for example, both the ratios are $2^M$, and the quantity of subcarriers corresponding to the first channel is greater than or equal to the quantity of subcarriers corresponding to the second channel in the second frequency band. It can be learned that, in this application, a correspondence between the bandwidth and the quantity of subcarriers in the first frequency band is similar to a correspondence between the bandwidth and the quantity of subcarriers in the second frequency band, so that the first frequency band and the second frequency band can share a signal processing device, for example, an IDFT device or a DFT device is reused. Therefore, device costs are low. The quantity of subcarriers may also be understood as an inverse discrete Fourier transform (inverse discrete fourier transform, IDFT) size/a discrete Fourier transform (discrete fourier transform, DFT) size.

According to a second aspect, this application provides a communication method. The method may be performed by a receive device, and the receive device may be an access point, a station, a chip, or a circuit. The method includes: receiving a first OFDM signal on a first channel in a first frequency band, and processing the first OFDM symbol. A quantity of subcarriers corresponding to the first channel is greater than or equal to a quantity of subcarriers corresponding to a second channel in a second frequency band, a lowest frequency of the first frequency band is higher than a highest frequency of the second frequency band, the first channel includes $2^M$ first fundamental channels, the second channel includes $2^M$ second fundamental channels, a bandwidth of the first fundamental channel is a minimum channel bandwidth supported in the first frequency band, a bandwidth of the second fundamental channel is a minimum channel bandwidth supported in the second frequency band, the bandwidth of the first fundamental channel is greater than the bandwidth of the second fundamental channel, and M is an integer greater than or equal to 0.

In this embodiment of this application, a correspondence between the bandwidth and the quantity of subcarriers (or an IDFT size/a DFT size) in the second frequency band is reused in the first frequency band, so that the first frequency band and the second frequency band can share a signal processing device, for example, an IDFT device or a DFT device is reused. Device costs are low.

According to a third aspect, this application further provides a communication apparatus. The apparatus may be a transmit device or a chip in the transmit device, and the transmit device may be an access point or a station. The communication apparatus has a function of implementing any method provided in the first aspect. The communication apparatus may be implemented by hardware, or may be implemented by hardware executing corresponding software. The hardware or the software includes one or more units or modules corresponding to the foregoing function.

In a possible design, the communication apparatus includes a processor, and the processor is configured to support the communication apparatus in performing a corresponding function of a distance measurement initiator in the foregoing method. The communication apparatus may further include a memory. The memory may be coupled to the processor, and the memory stores program instructions and data that are necessary for the communication apparatus. Optionally, the communication apparatus further includes an interface circuit. The interface circuit is configured to support communication between the communication apparatus and a device such as a receive device.

For example, the communication apparatus has a function of implementing the method provided in the first aspect, and the processor may be configured to generate a first OFDM signal. The interface circuit may be configured to send the first OFDM signal on a first channel in a first frequency band, where a quantity of subcarriers corresponding to the first channel is greater than or equal to a quantity of subcarriers corresponding to a second channel in a second frequency band, a lowest frequency of the first frequency band is higher than a highest frequency of the second frequency band, the first channel includes $2^M$ first fundamental channels, the second channel includes $2^M$ second fundamental channels, a bandwidth of the first fundamental channel is a minimum channel bandwidth supported in the first frequency band, a bandwidth of the second fundamental channel is a minimum channel bandwidth supported in the second frequency band, the bandwidth of the first fundamental channel is greater than the bandwidth of the second fundamental channel, and M is an integer greater than or equal to 0.

In a possible design, the communication apparatus includes corresponding functional modules, which are respectively configured to implement the steps in the foregoing method. The function may be implemented by hardware, or may be implemented by hardware executing corresponding software. The hardware or the software includes one or more modules corresponding to the foregoing function.

In a possible design, a structure of the communication apparatus includes a processing unit (or a processing module) and a transceiver unit (or a transceiver module). These units may perform corresponding functions in the foregoing method example. For details, refer to the descriptions in the method provided in the first aspect. Details are not described herein again.

For example, the communication apparatus has a function of implementing the method provided in the first aspect, and the processing unit may be configured to generate a first OFDM signal. The transceiver unit may be configured to send the first OFDM signal on a first channel in a first frequency band, where a quantity of subcarriers corresponding to the first channel is greater than or equal to a quantity of subcarriers corresponding to a second channel in a second frequency band, a lowest frequency of the first frequency band is higher than a highest frequency of the second frequency band, the first channel includes $2^M$ first fundamental channels, the second channel includes $2^M$ second fundamental channels, a bandwidth of the first fundamental channel is a minimum channel bandwidth supported in the first frequency band, a bandwidth of the second fundamental channel is a minimum channel bandwidth supported in the second frequency band, the bandwidth of the first fundamental channel is greater than the bandwidth of the second fundamental channel, and M is an integer greater than or equal to 0.

According to a fourth aspect, this application further provides a communication apparatus. The apparatus may be a receive device or a chip in the receive device, and the receive device may be an access point or a station. The communication apparatus has a function of implementing any method provided in the second aspect. The communication apparatus may be implemented by hardware, or may be implemented by hardware executing corresponding software. The hardware or the software includes one or more units or modules corresponding to the foregoing function.

In a possible design, the communication apparatus includes a processor, and the processor is configured to support the communication apparatus in performing a corresponding function of a terminal device in the foregoing method. The communication apparatus may further include a memory. The memory may be coupled to the processor, and the memory stores program instructions and data that are necessary for the communication apparatus. Optionally, the communication apparatus further includes an interface circuit. The interface circuit is configured to support communication between the communication apparatus and a device such as a transmit device.

For example, the communication apparatus has a function of implementing the method provided in the second aspect, and the interface circuit may be configured to: receive a first OFDM signal on a first channel in a first frequency band, where a quantity of subcarriers corresponding to the first channel is greater than or equal to a quantity of subcarriers corresponding to a second channel in a second frequency band, a lowest frequency of the first frequency band is higher than a highest frequency of the second frequency band, the first channel includes $2^M$ first fundamental channels, the second channel includes $2^M$ second fundamental channels, a bandwidth of the first fundamental channel is a minimum channel bandwidth supported in the first frequency band, a bandwidth of the second fundamental channel is a minimum channel bandwidth supported in the second frequency band, the bandwidth of the first fundamental channel is greater than the bandwidth of the second fundamental channel, and M is an integer greater than or equal to 0. The processor may be configured to process the first OFDM symbol.

In a possible design, the communication apparatus includes corresponding functional modules, which are respectively configured to implement the steps in the foregoing method. The function may be implemented by hardware, or may be implemented by hardware executing corresponding software. The hardware or the software includes one or more modules corresponding to the foregoing function.

In a possible design, a structure of the communication apparatus includes a processing unit (or a processing module) and a transceiver unit (or a transceiver module). These units may perform corresponding functions in the foregoing method example. For details, refer to the descriptions in the method provided in the second aspect. Details are not described herein again.

For example, the communication apparatus has a function of implementing the method provided in the second aspect, and the transceiver module may be configured to: receive a first OFDM signal on a first channel in a first frequency band, where a quantity of subcarriers corresponding to the first channel is greater than or equal to a quantity of subcarriers corresponding to a second channel in a second frequency band, a lowest frequency of the first frequency band is higher than a highest frequency of the second frequency band, the first channel includes $2^M$ first fundamental channels, the second channel includes $2^M$ second fundamental channels, a bandwidth of the first fundamental channel is a minimum channel bandwidth supported in the first frequency band, a bandwidth of the second fundamental channel is a minimum channel bandwidth supported in the second frequency band, the bandwidth of the first fundamental channel is greater than the bandwidth of the second fundamental channel, and M is an integer greater than or equal to 0. The processor may be configured to process the first OFDM symbol.

For the first aspect to the fourth aspect:

In a possible design, a subcarrier spacing of the first channel is greater than or equal to a threshold. In this manner, impact of a frequency offset on signal transmission on the first channel can be reduced, and signal transmission performance can be improved.

In a possible design, the bandwidth of the first fundamental channel is N times the bandwidth of the second fundamental channel, and N is an integer greater than 1. In this manner, a signal in the first frequency band and a signal in the second frequency band may be transmitted by reusing a same crystal oscillator. This can reduce hardware complexity and reduce hardware overheads.

In a possible design, the bandwidth of the first fundamental channel is 320 MHz. In this manner, a spectrum resource in the first frequency band can be used as much as possible through smaller-granularity channel division. This reduces a resource waste and improves resource utilization.

In a possible design, the quantity of subcarriers corresponding to the first channel meets any one of the following:

if the bandwidth of the first channel is 320 MHz, the first channel corresponds to 64 subcarriers;
if the bandwidth of the first channel is 640 MHz, the first channel corresponds to 128 subcarriers;
if the bandwidth of the first channel is 1280 MHz, the first channel corresponds to 256 subcarriers;
if the bandwidth of the first channel is 2560 MHz, the first channel corresponds to 512 subcarriers; or
if the bandwidth of the first channel is 5120 MHz, the first channel corresponds to 1024 subcarriers.

In a possible design, the bandwidth of the first fundamental channel is 640 MHz.

In a possible design, the quantity of subcarriers corresponding to the first channel meets any one of the following:

if the bandwidth of the first channel is 640 MHz, the first channel corresponds to 64 subcarriers;

if the bandwidth of the first channel is 1280 MHz, the first channel corresponds to 128 subcarriers;
if the bandwidth of the first channel is 2560 MHz, the first channel corresponds to 256 subcarriers;
if the bandwidth of the first channel is 5120 MHz, the first channel corresponds to 512 subcarriers; or
if the bandwidth of the first channel is 10240 MHz, the first channel corresponds to 1024 subcarriers.

In a possible design, the bandwidth of the first fundamental channel is 80 MHz.

In a possible design, the quantity of subcarriers corresponding to the first channel meets any one of the following:

if the bandwidth of the first channel is 80 MHz, the first channel corresponds to 64 subcarriers;
if the bandwidth of the first channel is 160 MHz, the first channel corresponds to 128 subcarriers;
if the bandwidth of the first channel is 320 MHz, the first channel corresponds to 256 subcarriers;
if the bandwidth of the first channel is 640 MHz, the first channel corresponds to 512 subcarriers; or
if the bandwidth of the first channel is 1280 MHz, the first channel corresponds to 1024 subcarriers.

In a possible design, the bandwidth of the first fundamental channel is 160 MHz.

In a possible design, the quantity of subcarriers corresponding to the first channel meets any one of the following:

if the bandwidth of the first channel is 160 MHz, the first channel corresponds to 64 subcarriers;
if the bandwidth of the first channel is 320 MHz, the first channel corresponds to 128 subcarriers;
if the bandwidth of the first channel is 640 MHz, the first channel corresponds to 256 subcarriers;
if the bandwidth of the first channel is 1280 MHz, the first channel corresponds to 512 subcarriers; or
if the bandwidth of the first channel is 2560 MHz, the first channel corresponds to 1024 subcarriers.

In a possible design, the bandwidth of the first fundamental channel is obtained by separately performing R times of bisection on a frequency band obtained by dividing the first frequency band based on a minimum channel bandwidth supported in a millimeter wave band, where R is an integer greater than or equal to 0. In this manner, a signal in the first frequency band, a signal in the second frequency band, and a signal in the millimeter wave band may be transmitted by reusing a same crystal oscillator.

In a possible design, the bandwidth of the first fundamental channel is 270 MHz. A spectrum resource in the first frequency band can be used as much as possible through smaller-granularity channel division. This reduces a resource waste and improves resource utilization.

In a possible design, the quantity of subcarriers corresponding to the first channel meets any one of the following:

if the bandwidth of the first channel is 270 MHz, the first channel corresponds to 64 subcarriers;
if the bandwidth of the first channel is 540 MHz, the first channel corresponds to 128 subcarriers;
if the bandwidth of the first channel is 1080 MHz, the first channel corresponds to 256 subcarriers;
if the bandwidth of the first channel is 2160 MHz, the first channel corresponds to 512 subcarriers; or
if the bandwidth of the first channel is 4320 MHz, the first channel corresponds to 1024 subcarriers.

In a possible design, the bandwidth of the first fundamental channel is 540 MHz. A spectrum resource in the first frequency band can be used as much as possible through smaller-granularity channel division. This reduces a resource waste and improves resource utilization.

In a possible design, the quantity of subcarriers corresponding to the first channel meets any one of the following:

if the bandwidth of the first channel is 540 MHz, the first channel corresponds to 64 subcarriers;
if the bandwidth of the first channel is 1080 MHz, the first channel corresponds to 128 subcarriers;
if the bandwidth of the first channel is 2160 MHz, the first channel corresponds to 256 subcarriers;
if the bandwidth of the first channel is 4320 MHz, the first channel corresponds to 512 subcarriers; or
if the bandwidth of the first channel is 8640 MHz, the first channel corresponds to 1024 subcarriers.

In a possible design, the bandwidth of the first fundamental channel is obtained by performing K times of bisection on a first subband, a bandwidth of the first subband is less than a minimum channel bandwidth supported in a millimeter wave band, and K is an integer greater than or equal to 0. A part of bandwidth is selected from the minimum channel bandwidth supported in the millimeter wave band, so that interference between channels can be further reduced.

In a possible design, the bandwidth of the first fundamental channel is 250 MHz. A spectrum resource in the first frequency band can be used as much as possible through smaller-granularity channel division. This reduces a resource waste and improves resource utilization.

In a possible design, the quantity of subcarriers corresponding to the first channel meets any one of the following:

if the bandwidth of the first channel is 250 MHz, the first channel corresponds to 64 subcarriers;
if the bandwidth of the first channel is 500 MHz, the first channel corresponds to 128 subcarriers;
if the bandwidth of the first channel is 1000 MHz, the first channel corresponds to 256 subcarriers;
if the bandwidth of the first channel is 2000 MHz, the first channel corresponds to 512 subcarriers; or
if the bandwidth of the first channel is 4000 MHz, the first channel corresponds to 1024 subcarriers.

In a possible design, the bandwidth of the first fundamental channel is 500 MHz. A spectrum resource in the first frequency band can be used as much as possible through smaller-granularity channel division. This reduces a resource waste and improves resource utilization.

In a possible design, the quantity of subcarriers corresponding to the first channel meets any one of the following:

if the bandwidth of the first channel is 500 MHz, the first channel corresponds to 64 subcarriers;
if the bandwidth of the first channel is 1000 MHz, the first channel corresponds to 128 subcarriers;
if the bandwidth of the first channel is 2000 MHz, the first channel corresponds to 256 subcarriers;
if the bandwidth of the first channel is 4000 MHz, the first channel corresponds to 512 subcarriers; or
if the bandwidth of the first channel is 8000 MHz, the first channel corresponds to 1024 subcarriers.

In a possible design, the first frequency band is a 60 GHz frequency band, or the first frequency band is a 45 GHz frequency band; and the second frequency band is a 2.45 GHz frequency band, or the second frequency band is a 6 GHz frequency band.

According to a fifth aspect, a communication apparatus is provided. The communication apparatus includes a processor and an interface circuit. The interface circuit is configured to: receive a signal from a communication apparatus other than the communication apparatus and transmit the signal to the processor, or send a signal from the processor to a communication apparatus other than the communication apparatus. The processor is configured to implement the method in any one of the first aspect and the possible designs of the first aspect through a logic circuit or by executing code instructions.

According to a sixth aspect, a communication apparatus is provided. The communication apparatus includes a processor and an interface circuit. The interface circuit is configured to: receive a signal from a communication apparatus other than the communication apparatus and transmit the signal to the processor, or send a signal from the processor to a communication apparatus other than the communication apparatus. The processor is configured to implement the method in any one of the second aspect and the possible designs of the second aspect through a logic circuit or by executing code instructions.

According to a seventh aspect, a computer-readable storage medium is provided. The computer-readable storage medium stores a computer program or instructions. When the computer program or the instructions are executed by a processor, the method in any one of the first aspect or the second aspect and the possible designs of the first aspect or the second aspect is implemented.

According to an eighth aspect, a computer program product storing instructions is provided. When the instructions are run by a processor, the method in any one of the first aspect or the second aspect and the possible designs of the first aspect or the second aspect is implemented.

According to a ninth aspect, a chip system is provided. The chip system includes a processor, and may further include a memory, configured to implement the method in the first aspect and the possible designs of the first aspect. The chip system may include a chip, or may include a chip and another discrete device.

According to a tenth aspect, a chip system is provided. The chip system includes a processor, and may further include a memory, configured to implement the method in the second aspect and the possible designs of the second aspect. The chip system may include a chip, or may include a chip and another discrete device.

According to an eleventh aspect, a communication system is provided. The communication system includes the apparatus (for example, the transmit device) in the first aspect and/or the apparatus (for example, the receive device) in the second aspect.

## BRIEF DESCRIPTION OF DRAWINGS

FIG. 1 is a diagram of an architecture of a communication system according to an embodiment of this application;

FIG. 2 is a diagram of a structure of a DFT-s-OFDM transmitter according to an embodiment of this application;

FIG. 3 is a schematic flowchart of a communication method according to an embodiment of this application;

FIG. 4 is a diagram of channel division according to an embodiment of this application;

FIG. 5 is a diagram of channel division according to an embodiment of this application;

FIG. 6 is a diagram of channel division according to an embodiment of this application;

FIG. 7 is a diagram of channel division according to an embodiment of this application;

FIG. 8 is a diagram of channel division according to an embodiment of this application;

FIG. 9 is a diagram of channel division according to an embodiment of this application;

FIG. 10 is a diagram of channel division according to an embodiment of this application;

FIG. 11 is a diagram of channel division according to an embodiment of this application;

FIG. 12 is a diagram of a structure of a communication apparatus according to an embodiment of this application; and

FIG. 13 is a diagram of a structure of a communication apparatus according to an embodiment of this application.

## DESCRIPTION OF EMBODIMENTS

The following describes in detail embodiments of this application with reference to accompanying drawings.

Development of a wireless local area network (wireless local area network, WLAN) makes wireless communication more and more popular. Standards (namely, the 802.11 protocol suite) formulated by the International Institute of Electrical and Electronics Engineers (IEEE) for the WLAN are continuously evolved. For example, a protocol standard for a low frequency band includes 802.11a/g, 802.11n, 802.11ac, 802.11ax, and 802.11be, and a supported frequency band includes one or more of 2.4 GHz/5 GHz/6 GHz; and a protocol standard for a high frequency band includes 802.11aj/ay, and a supported frequency band includes one or more of 45 GHz/60 GHz.

Based on a forward compatibility principle, a next-generation WLAN technology supports both a high frequency and a low frequency band and is compatible with a WLAN technology (such as 802.11n/802.11ac/802.11ax/802.11be) on the low frequency band. However, frame structures of physical layer protocol data units (PHY protocol data units, PPDUs) corresponding to the foregoing different protocols are different. In particular, a frame structure of a PPDU corresponding to a protocol for the low frequency band is greatly different from a frame structure of a PPDU corresponding to a protocol for the high frequency band. Therefore, a method for processing a low-frequency signal is also different from a method for processing a high-frequency signal. In this case, hardware (for example, baseband chips of dedicated circuits) for processing the signals are also greatly different. For this problem, baseband chips may be respectively designed for the high-frequency signal and the low-frequency signal, but costs are high. It is complex to design a converged baseband chip that can be used to process both the low-frequency signal and the high-frequency signal.

In view of this, embodiments of this application provide a communication method and apparatus, to reduce costs and complexity of a baseband chip for processing a low-frequency signal and a high-frequency signal. The method and the apparatus are based on a same concept. The method and the apparatus have similar principles for resolving problems. Therefore, for implementations of the apparatus and the method, refer to each other. No repeated description is provided.

The technical solutions provided in this application are applicable to a WLAN system, for example, are applicable to IEEE 802.11 system standards, for example, the 802.11a/b/g standard, the 802.11n standard, the 802.11ac standard, the 802.11 ax standard, or a next-generation standard of the 802.11ax standard, for example, the 802.11be standard, wireless fidelity (wireless-fidelity, Wi-Fi) Wi-Fi 7, or an extremely high throughput (extremely high throughput, EHT), for another example, a next-generation standard of 802.11be, Wi-Fi 8, or a next-generation standard of Wi-Fi 8.

Although embodiments of this application are mainly described by using an example of a deployed WLAN network, especially a network to which the IEEE 802.11 system standard is applied, persons skilled in the art easily understand that various aspects in this application may be extended to other networks that use various standards or protocols, for example, Bluetooth (Bluetooth), a high-performance radio LAN (high performance radio LAN, HIPERLAN) (which is a wireless standard similar to the IEEE 802.11 standard, and is mainly used in Europe), a wide area network (WAN), a personal area network (personal area network, PAN), or other networks known or developed in future. Therefore, regardless of a used coverage area and wireless access protocol, various aspects provided in this application are applicable to any suitable wireless network.

Alternatively, embodiments of this application is applicable to a wireless local area network system, for example, an internet of things (internet of things, IoT) or a vehicle-to-everything (Vehicle to X, V2X) network. Certainly, embodiments of this application are further applicable to another possible communication system, for example, a narrowband internet of things (narrow band internet of things, NB-IoT) system, a long term evolution (long term evolution, LTE) system, an LTE frequency division duplex (frequency division duplex, FDD) system, an LTE time division duplex (time division duplex, TDD) system, or a worldwide interoperability for microwave access (worldwide interoperability for microwave access, WiMAX) communication system, a 5th generation (5th generation, 5G) communication system, a hybrid architecture of LTE and 5G, a 5G NR system, a 6th generation (6th generation, 6G) communication system, a new communication system emerging in future communication development, or the like. The foregoing communication systems applicable to this application are merely examples for descriptions, and the communication systems applicable to this application are not limited thereto. This is uniformly described herein, and details are not described below again.

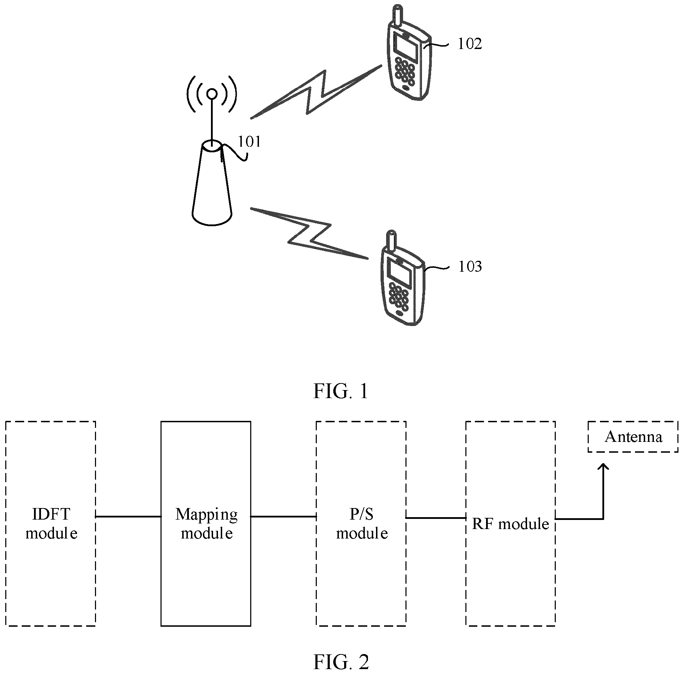

This application may be applied to a communication system. The communication system may include one or more access point (access point, AP) stations and one or more non-access point (non-access point stations, non-AP STAs). For ease of description, an access point station is referred to as an access point (AP), and a non-access point station is referred to as a station (STA) in this specification. In FIG. 1, descriptions are provided by using an example in which a network structure includes one AP and two stations (a STA 102 and a STA 103). WLAN communication is performed between the AP and the STA, and the STA may be at a fixed location or may be movable. Quantities of APs and STAs included in the communication system are not limited in this application. The communication method provided in this application is applicable to data communication between an access point and one or more stations (for example, data communication between an AP 101 and the STA 102 and between the AP 101 and the STA 103), and is also applicable to data communication between APs and data communication between STAs (for example, data communication between the STA 102 and the STA 103).

The AP is also referred to as an access point, a hotspot, or the like, and is configured to provide a wireless access service, allow another wireless device to access, and provide a data access. In other words, the AP may be an access point used by a terminal device (such as a mobile phone) to access a wired (or wireless) network, and is mainly deployed at home, in a building, and in a park. A typical coverage radius is tens of meters to hundreds of meters. Certainly, the access point may alternatively be deployed outdoors. The AP is equivalent to a bridge that connects a wired network and a wireless network. The AP is mainly used to connect wireless network clients together, and then connect the wireless network to an ethernet. Specifically, the access point may be a terminal (such as a mobile phone) or a network device (such as a router) with a Wi-Fi chip. The access point may be a device that supports the 802.11be standard. The access point may alternatively be a device that supports a plurality of wireless local area network standards of the 802.11 family, such as 802.11ax, 802.11ac, 802.11n, 802.11g, 802.11b, 802.11a, and a next-generation standard of 802.11be. The access point in this application may be a high efficient (high efficient, HE) AP or an EHT AP, or may be an access point applicable to a future-generation Wi-Fi standard. Alternatively, the AP may be a base station (base station), an evolved NodeB (evolved NodeB, eNodeB), a transmission reception point (transmission reception point, TRP), a next generation NodeB (next generation NodeB, gNB) in a 5G communication system, or a base station in a future communication system; or may be a module or unit that completes some functions of the base station, for example, may be a central unit (central unit, CU), may be a distributed unit (distributed unit, DU), may be a router, may be a switch, or may be a network bridge or the like. A specific technology and a specific device form used by the AP are not limited in this application.

The STA is a communication device connected to a wireless network, and may be, for example, a wireless communication chip, a wireless sensor, or a wireless communication terminal. The station may also be referred to as a terminal, user equipment (user equipment, UE), a mobile station, a mobile terminal, or the like. For example, the station may be a mobile phone, a tablet computer, a set-top box, a smart television, a smart wearable device, a vehicle-mounted communication device, or a computer that supports a Wi-Fi communication function. Optionally, the station may support the 802.11be standard. The station may alternatively support a plurality of WLAN standards of the 802.11 family, such as 802.11ax, 802.11ac, 802.11n, 802.11g, 802.11b, 802.11a, 802.11be, Wi-Fi 7, Wi-Fi 8, or a next-generation standard of Wi-Fi 8.

The access point in this application may be an HE STA or an EHT STA, or may be a STA applicable to a future-generation Wi-Fi standard.

For example, the access point and the station each may be a device used in an internet of vehicles, an internet of things node, a sensor, or the like in an internet of things, a smart camera, a smart remote control, and a smart water or electricity meter in a smart home, a sensor in a smart city, or the like.

The AP and the STA may communicate with each other on a 2.4 gigahertz (gigahertz, GHz) frequency band, may communicate with each other on a 5 GHz or 6 GHz frequency band, or may communicate with each other on a 45 GHz or 60 GHz frequency band. For example, the 45 GHz frequency band may include 42.3-47.0 GHz and 47.2-48.4 GHz, and the 60 GHz frequency band may include a 57-66 GHz frequency band, or the 60 GHz frequency band may include 56.16-73.44 GHz. It should be understood that, with development of communication, the 45 GHz frequency band and the 60 GHz frequency band each may further include another frequency band. This is not specifically limited herein.

It should be noted that the AP and the STA may further communicate with each other on another frequency band. This is not limited in embodiments of this application.

In a possible implementation, the communication apparatus may be a discrete Fourier transform orthogonal frequency division multiplexing (DFT-s-OFDM) transmitter. FIG. 2 is a diagram of a structure of a DFT-s-OFDM transmitter according to this application. The DFT-s-OFDM transmitter includes a mapping (Mapping) module. Optionally, the DFT-s-OFDM may further include an IDFT module, a parallel/serial (parallel/serial, P/S) converter, a radio frequency (radio frequency, RF) module, and an antenna. The IDFT module may be configured to perform IDFT processing on a to-be-sent signal, and the mapping module may be configured to map a signal output by the IDFT module to a subcarrier. It may be understood that the communication apparatus may alternatively be a DFT-s-OFDM receiver. For a structure of the DFT-s-OFDM receiver, refer to the foregoing diagram depicting the structure of the DFT-s-OFDM transmitter. A signal processing process performed by the DFT-s-OFDM receiver is an inverse process of signal processing performed by the DFT-s-OFDM transmitter.

In embodiments of this application, "at least one" means one or more, and "a plurality of" means two or more. The term "and/or" describes an association relationship between associated objects, and indicates that three relationships may exist. For example, A and/or B may indicate the following cases: Only A exists, both A and B exist, and only B exists, where A and B may be singular or plural. The character "/" usually indicates an "or" relationship between the associated objects. "At least one of the following items (pieces)" or a similar expression thereof means any combination of these items, including a singular item (piece) or any combination of plural items (pieces). For example, at least one item (piece) of a, b, or c may indicate: a, b, c, a-b, a-c, b-c, or a-b-c, where a, b, and c may be singular or plural.

In addition, unless otherwise stated, ordinal numbers such as "first" and "second" in embodiments of this application are intended to distinguish between a plurality of objects, and are not intended to limit sizes, content, an order, a time sequence, priorities, or importance degrees of the plurality of objects. For example, a first fundamental channel and a second fundamental channel are merely used to distinguish between different fundamental channels, but do not indicate different bandwidth values, priorities, importance degrees, or the like of the two fundamental channels.

A network architecture and a service scenario that are described in embodiments of this application are intended to describe the technical solutions in embodiments of this application more clearly, and do not constitute a limitation on the technical solutions provided in embodiments of this application. Persons of ordinary skill in the art may know that with evolution of the network architecture and emergence of new service scenarios, the technical solutions provided in embodiments of this application are also applicable to a similar technical problem.

It should be noted that in the following description, an example in which a first device is a transmit device and a second device is a receive device is used for description. The first device may be an AP, and the second device is a STA, in other words, the AP sends a signal to the STA; or the first device is a STA, and the second device is an AP, in other words, the STA sends a signal to the AP. In the following description, only the first device and the second device are used as execution bodies for description. Optionally, an operation of the first device may be alternatively performed by a processor, a chip, or a functional module in the first device, and an operation of the second device may be alternatively performed by a processor, a chip, or a functional module in the second device. This is not limited in this application.

In embodiments of this application, a bandwidth of the channel may be in a unit of hertz. Details are not described below again.

The method provided in this application may be applied to a first frequency band. The following further relates to a second frequency band, where a lowest frequency of the first frequency band is higher than a highest frequency of the second frequency band. For example, the first frequency band is a 60 GHz frequency band, or the first frequency band is a 45 GHz frequency band or the like; and the second frequency band is a 2.45 GHz frequency band, or the second frequency band is a 5 GHz/6 GHz frequency band or the like. For ease of understanding of the solution, this application is described by using an example in which the 45 GHz frequency band includes 42.3-47.0 GHz and 47.2-48.4 GHz, the 60 GHz frequency band includes 57-66 GHz, and the 60 GHz frequency band includes 56.16-73.44 GHz. A method for another frequency band is similar to the method for the 45 GHz frequency band and the 60 GHz frequency band, and details are not described herein again.

In embodiments of this application, a quantity of subcarriers corresponding to a channel may also be understood as an IDFT size/a DFT size corresponding to the channel, and the two are described alternatively. The IDFT size/the DFT size may also be understood as a quantity of sampling points used during IDFT/DFT processing or a size of a filter used during IDFT/DFT processing.

In embodiments of this application, a millimeter wave band may be understood as a frequency band whose wavelength is at a millimeter level, for example, a frequency band whose wavelength is 1 to 10 millimeters. For example, the millimeter wave band may be a 30-300 GHz frequency band or the like. It should be understood that the 30-300 GHz frequency band is merely an example of the millimeter wave band for description, or may be another frequency band. This is not specifically limited herein.

**Embodiment 1**

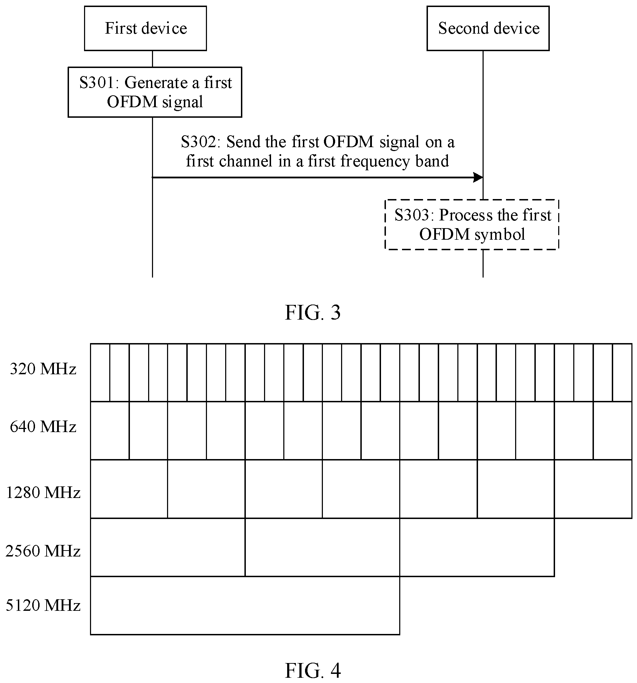

FIG. 3 is a schematic flowchart of a communication method according to this application. The method includes the following steps.

S301: A first device generates a first OFDM signal.

In a possible implementation, the first device may perform IDFT on a to-be-sent signal based on a first size, to obtain the first OFDM signal. Correspondingly, a second device may perform DFT on the received first OFDM signal based on the first size, to convert the received first OFDM signal into a signal in frequency domain. The first size may be a quantity of subcarriers corresponding to a first channel in a first frequency band.

In another possible implementation, the first device generates a single carrier (single carrier, SC) signal. Correspondingly, a second device performs DFT on the received SC signal based on the first size, to convert the received SC signal into a signal in frequency domain for processing.

The quantity of subcarriers corresponding to the first channel is greater than or equal to a quantity of subcarriers corresponding to a second channel in a second frequency band, a lowest frequency of the first frequency band is higher than a highest frequency of the second frequency band, the first channel includes $2^M$ first fundamental channels, the second channel includes $2^M$ second fundamental channels, a bandwidth of the first fundamental channel is a minimum channel bandwidth supported in the first frequency band, a bandwidth of the second fundamental channel is a minimum channel bandwidth supported in the second frequency band, the bandwidth of the first fundamental channel is greater than the bandwidth of the second fundamental channel, and M is an integer greater than or equal to 0.

Optionally, a subcarrier spacing of the first channel is greater than or equal to a threshold (for example, 2 MHz, 2.5 MHz, or 5 MHz). In this manner, impact of a frequency offset on signal transmission on the first channel can be reduced, and signal transmission performance can be improved.

It should be noted that the "first fundamental channel" is merely an example name, and represents a channel corresponding to the minimum channel bandwidth supported in the first frequency band. For example, if a bandwidth supported in the first frequency band is 320 MHz, 640 MHz, 1280 MHz, or 2560 MHz, the minimum channel bandwidth supported in the first frequency band is 320 MHz. Correspondingly, a channel with a bandwidth of 320 MHz in the first frequency band may be understood as the first fundamental channel in this application. Understanding of the second fundamental channel is similar to that of the first fundamental channel. For example, if a bandwidth supported in the second fundamental channel is 20 MHz, 40 MHz, 80 MHz, 160 MHz, or 320 MHz, the minimum channel bandwidth supported in the second frequency band is 20 MHz. Correspondingly, a channel with a bandwidth of 20 MHz in the second frequency band may be understood as the second fundamental channel in this application.

A related description of the first channel is described in detail below.

S302: The first device sends the first OFDM signal on the first channel in the first frequency band. Correspondingly, the second device receives the first OFDM symbol on the first channel in the first frequency band.

S303: The second device processes the first OFDM symbol.

It should be noted that S303 may be an optional step.

The following describes the quantity of subcarriers of the first channel by using an example with reference to the bandwidth of the first channel.

Example 1: The bandwidth of the first fundamental channel is N times the bandwidth of the second fundamental channel, and N is an integer greater than 1. For example, the bandwidth of the second fundamental channel is 20 MHz, in other words, the minimum channel bandwidth supported in the second frequency band is 20 MHz. The bandwidth of the first fundamental channel is (20*N) MHz, for example, 40 MHz, 80 MHz, 160 MHz, 320 MHz, or 640 MHz.

Example 1 is described below by using an example.

In an example 1, the minimum channel bandwidth supported in the first frequency band is 320 MHz, in other words, the bandwidth of the first fundamental channel is 320 MHz. The first frequency band may support one or more bandwidths of 320 MHz, 640 MHz, 1280 MHz, 2560 MHz, and 5120 MHz.

Based on this example, the quantity of subcarriers of the first channel may meet any one of the following.

If the bandwidth of the first channel is 320 MHz, the first channel corresponds to 64 subcarriers. This implementation may be achieved through direct extension of a subcarrier spacing of a second signal at a 20 MHz bandwidth.

For example, the second signal may be a signal in the second frequency band, for example, 802.11ax/be legacy preamble signaling such as L-SIG (legacy signaling or non-HT SIGNAL) signaling, or a data field in 802.11n/ac. Understanding of the second signal in the following is the same as that described herein, and details are not described again below.

Optionally, the quantity of subcarriers corresponding to the first channel may also be greater than 64. For example, the first channel may correspond to 128 subcarriers, 256 subcarriers, or the like.

If the bandwidth of the first channel is 640 MHz, the first channel corresponds to 128 subcarriers. This implementation may be achieved through direct extension of a subcarrier spacing of a second signal at a 40 MHz bandwidth.

Optionally, the quantity of subcarriers corresponding to the first channel may also be greater than 128. For example, the first channel may correspond to 256 subcarriers, 512 subcarriers, or the like.

If the bandwidth of the first channel is 1280 MHz, the first channel corresponds to 256 subcarriers. This implementation may be achieved through direct extension of a subcarrier spacing of a second signal at an 80 MHz bandwidth.

Optionally, the quantity of subcarriers corresponding to the first channel may also be greater than 256. For example, the first channel may correspond to 512 subcarriers, 1024 subcarriers, or the like.

If the bandwidth of the first channel is 2560 MHz, the first channel corresponds to 512 subcarriers. This implementation may be achieved through direct extension of a subcarrier spacing of a second signal at a 160 MHz bandwidth.

Optionally, the first channel corresponds to 512 subcarriers. For example, the first channel may alternatively correspond to 1024 subcarriers or the like.

If the bandwidth of the first channel is 5120 MHz, the first channel corresponds to 1024 subcarriers. This implementation may be achieved through direct extension of a subcarrier spacing of a second signal at a 320 MHz bandwidth.

For example, a correspondence between each bandwidth supported in the first frequency band and the quantity of subcarriers (or an IDFT size/a DFT size) may be shown in Table 1.

**Table 1**

| Bandwidth supported in the first frequency band | Quantity of subcarriers (or IDTF size/DFT size) |
| --- | --- |
| 320 MHz | 64 |
| 640 MHz | 128 |
| 1280 MHz | 256 |
| 2560 MHz | 512 |
| 5120 MHz | 1024 |

In an example 2, the minimum channel bandwidth supported in the first frequency band is 640 MHz, in other words, the bandwidth of the first fundamental channel is 640 MHz. The first frequency band may support one or more bandwidths of 640 MHz, 1280 MHz, 2560 MHz, 5120 MHz, and 10240 MHz.

Based on this example, the quantity of subcarriers of the first channel may meet any one of the following:

If the bandwidth of the first channel is 640 MHz, the first channel corresponds to 64 subcarriers. This implementation may be achieved through direct extension of a subcarrier spacing of a second signal (namely, a signal in the second frequency band) at a 20 MHz bandwidth.

Optionally, the quantity of subcarriers corresponding to the first channel may also be greater than 64. For example, the first channel may correspond to 128 subcarriers, 256 subcarriers, 512 subcarriers, or the like.

If the bandwidth of the first channel is 1280 MHz, the first channel corresponds to 128 subcarriers. This implementation may be achieved through direct extension of a subcarrier spacing of a second signal (namely, a signal in the second frequency band) at a 40 MHz bandwidth.

Optionally, the quantity of subcarriers corresponding to the first channel may also be greater than 128. For example, the first channel may correspond to 256 subcarriers, 512 subcarriers, 1024 subcarriers, or the like.

If the bandwidth of the first channel is 2560 MHz, the first channel corresponds to 256 subcarriers. This implementation may be achieved through direct extension of a subcarrier spacing of a second signal (namely, a signal in the second frequency band) at an 80 MHz bandwidth.

Optionally, the quantity of subcarriers corresponding to the first channel may also be greater than 256. For example, the first channel may correspond to 512 subcarriers, 1024 subcarriers, or the like.

If the bandwidth of the first channel is 5120 MHz, the first channel corresponds to 512 subcarriers. This implementation may be achieved through direct extension of a subcarrier spacing of a second signal (namely, a signal in the second frequency band) at a 160 MHz bandwidth.

Optionally, the quantity of subcarriers corresponding to the first channel may also be greater than 512. For example, the first channel may correspond to 1024 subcarriers or the like.

If the bandwidth of the first channel is 10240 MHz, the first channel corresponds to 1024 subcarriers. This implementation may be achieved through direct extension of a subcarrier spacing of a second signal (namely, a signal in the second frequency band) at a 320 MHz bandwidth.

For example, a correspondence between each bandwidth supported in the first frequency band and the quantity of subcarriers (or an IDFT size/a DFT size) may be shown in Table 2.

Table 2

| Bandwidth supported in the first frequency band | Quantity of subcarriers (or IDFT size/DFT size) |
|---|---|
| 640 MHz | 64 |
| 1280 MHz | 128 |
| 2560 MHz | 256 |
| 5120 MHz | 512 |
| 10240 MHz | 1024 |

In an example 3, the minimum channel bandwidth supported in the first frequency band is 40 MHz, in other words, the bandwidth of the first fundamental channel is 40 MHz. The first frequency band may support one or more bandwidths of 40 MHz, 80 MHz, 160 MHz, 320 MHz, and 640 MHz.

Based on this example, the quantity of subcarriers of the first channel may meet any one of the following.

If the bandwidth of the first channel is 40 MHz, the first channel corresponds to 64 subcarriers. This implementation may be achieved through direct extension of a subcarrier spacing of a second signal at a 20 MHz bandwidth. Optionally, the quantity of subcarriers corresponding to the first channel may also be greater than 64. For example, the first channel may correspond to 128 subcarriers, 256 subcarriers, or the like.

If the bandwidth of the first channel is 80 MHz, the first channel corresponds to 128 subcarriers. This implementation may be achieved through direct extension of a subcarrier spacing of a second signal at a 40 MHz bandwidth. Optionally, the quantity of subcarriers corresponding to the first channel may also be greater than 128. For example, the first channel may correspond to 256 subcarriers, 512 subcarriers, or the like.

If the bandwidth of the first channel is 160 MHz, the first channel corresponds to 256 subcarriers. This implementation may be achieved through direct extension of a subcarrier spacing of a second signal at an 80 MHz bandwidth. Optionally, the quantity of subcarriers corresponding to the first channel may also be greater than 256. For example, the first channel may correspond to 512 subcarriers, 1024 subcarriers, or the like.

If the bandwidth of the first channel is 320 MHz, the first channel corresponds to 512 subcarriers. This implementation may be achieved through direct extension of a subcarrier spacing of a second signal at a 160 MHz bandwidth. Optionally, the quantity of subcarriers corresponding to the first channel may also be greater than 512. For example, the first channel may correspond to 1024 subcarriers or the like.

If the bandwidth of the first channel is 640 MHz, the first channel corresponds to 1024 subcarriers. This implementation may be achieved through direct extension of a subcarrier spacing of a second signal at a 320 MHz bandwidth.

For example, a correspondence between each bandwidth supported in the first frequency band and the quantity of subcarriers (or an IDFT size/a DFT size) may be shown in Table 3.

Table 3

| Bandwidth supported in the first frequency band | Quantity of subcarriers (or IDFT size/DFT size) |
|---|---|
| 40 MHz | 64 |
| 80 MHz | 128 |
| 160 MHz | 256 |
| 320 MHz | 512 |
| 640 MHz | 1024 |

In an example 4, the minimum channel bandwidth supported in the first frequency band is 80 MHz, in other words, the bandwidth of the first fundamental channel is 80 MHz. The first frequency band may support one or more bandwidths of 80 MHz, 160 MHz, 320 MHz, 640 MHz, and 1280 MHz.

Based on this example, the quantity of subcarriers of the first channel may meet any one of the following.

If the bandwidth of the first channel is 80 MHz, the first channel corresponds to 64 subcarriers. This implementation may be achieved through direct extension of a subcarrier spacing of a second signal at a 20 MHz bandwidth. Optionally, the quantity of subcarriers corresponding to the first channel may also be greater than 64. For example, the first channel may correspond to 128 subcarriers, 256 subcarriers, or the like.

If the bandwidth of the first channel is 160 MHz, the first channel corresponds to 128 subcarriers. This implementation may be achieved through direct extension of a subcarrier spacing of a second signal at a 40 MHz bandwidth. Optionally, the quantity of subcarriers corresponding to the first channel may also be greater than 128. For example, the first channel may correspond to 256 subcarriers, 512 subcarriers, or the like.

If the bandwidth of the first channel is 320 MHz, the first channel corresponds to 256 subcarriers. This implementation may be achieved through direct extension of a subcarrier spacing of a second signal at an 80 MHz bandwidth. Optionally, the quantity of subcarriers corresponding to the first channel may also be greater than 256. For example, the first channel may correspond to 512 subcarriers, 1024 subcarriers, or the like.

If the bandwidth of the first channel is 640 MHz, the first channel corresponds to 512 subcarriers. This implementation may be achieved through direct extension of a subcarrier spacing of a second signal at a 160 MHz bandwidth. Optionally, the quantity of subcarriers corresponding to the first channel may also be greater than 512. For example, the first channel may correspond to 1024 subcarriers or the like.

If the bandwidth of the first channel is 1280 MHz, the first channel corresponds to 1024 subcarriers. This implementation may be achieved through direct extension of a subcarrier spacing of a second signal at a 320 MHz bandwidth.

For example, a correspondence between each bandwidth supported in the first frequency band and the quantity of subcarriers (or an IDFT size/a DFT size) may be shown in Table 4.

**Table 4**

| Bandwidth supported in the first frequency band | Quantity of subcarriers (or IDFT size/DFT size) |
| --- | --- |
| 80 MHz | 64 |
| 160 MHz | 128 |
| 320 MHz | 256 |
| 640 MHz | 512 |
| 1280 MHz | 1024 |

In an example 5, the minimum channel bandwidth supported in the first frequency band is 160 MHz, in other words, the bandwidth of the first fundamental channel is 160 MHz. The first frequency band may support one or more bandwidths of 160 MHz, 320 MHz, 640 MHz, 1280 MHz, and 2560 MHz.

Based on this example, the quantity of subcarriers of the first channel may meet any one of the following.

If the bandwidth of the first channel is 160 MHz, the first channel corresponds to 64 subcarriers. This implementation may be achieved through direct extension of a subcarrier spacing of a second signal in 802. 11ax/be at a 20 MHz bandwidth. Optionally, the quantity of subcarriers corresponding to the first channel may also be greater than 64. For example, the first channel may correspond to 128 subcarriers, 256 subcarriers, or the like.

If the bandwidth of the first channel is 320 MHz, the first channel corresponds to 128 subcarriers. This implementation may be achieved through direct extension of a subcarrier spacing of a second signal at a 40 MHz bandwidth. Optionally, the quantity of subcarriers corresponding to the first channel may also be greater than 128. For example, the first channel may correspond to 256 subcarriers, 512 subcarriers, or the like.

If the bandwidth of the first channel is 640 MHz, the first channel corresponds to 256 subcarriers. This implementation may be achieved through direct extension of a subcarrier spacing of a second signal at an 80 MHz bandwidth. Optionally, the quantity of subcarriers corresponding to the first channel may also be greater than 256. For example, the first channel may correspond to 512 subcarriers, 1024 subcarriers, or the like.

If the bandwidth of the first channel is 1280 MHz, the first channel corresponds to 512 subcarriers. This implementation may be achieved through direct extension of a subcarrier spacing of a second signal at a 160 MHz bandwidth. Optionally, the quantity of subcarriers corresponding to the first channel may also be greater than 512. For example, the first channel may correspond to 1024 subcarriers or the like.

If the bandwidth of the first channel is 2560 MHz, the first channel corresponds to 1024 subcarriers. This implementation may be achieved through direct extension of a subcarrier spacing of a second signal at a 320 MHz bandwidth.

For example, a correspondence between each bandwidth supported in the first frequency band and the quantity of subcarriers (or an IDFT size/a DFT size) may be shown in Table 5.

**Table 5**

| Bandwidth supported in the first frequency band | Quantity of subcarriers (or IDFT size/DFT size) |
| --- | --- |
| 160 MHz | 64 |
| 320 MHz | 128 |

(continued)

| Bandwidth supported in the first frequency band | Quantity of subcarriers (or IDFT size/DFT size) |
|---|---|
| 640 MHz | 256 |
| 1280 MHz | 512 |
| 2560 MHz | 1024 |

Example 2: The bandwidth of the first fundamental channel is obtained by separately performing R times of bisection on a frequency band obtained by dividing the first frequency band based on a minimum channel bandwidth supported in a millimeter wave band in the IEEE 802.11ad/ay standard, where R is an integer greater than or equal to 0. For example, it is assumed that the minimum channel bandwidth supported in the millimeter wave band is 2160 MHz. In this case, the bandwidth of the first fundamental channel may be 2160 MHz, 1080 MHz, 540 MHz, 270 MHz, or the like.

In an example 6, the minimum channel bandwidth supported in the first frequency band is 270 MHz, in other words, the bandwidth of the first fundamental channel is 270 MHz. The first frequency band may support one or more bandwidths of 270 MHz, 540 MHz, 1080 MHz, 2160 MHz, and 4320 MHz.

Based on this example, the quantity of subcarriers of the first channel may meet any one of the following.

If the bandwidth of the first channel is 270 MHz, the first channel corresponds to 64 subcarriers. This implementation may be achieved through direct extension of a subcarrier spacing of a second signal at a 20 MHz bandwidth.

Optionally, the quantity of subcarriers corresponding to the first channel may also be greater than 64. For example, the first channel may correspond to 128 subcarriers, 256 subcarriers, 512 subcarriers, or the like.

If the bandwidth of the first channel is 540 MHz, the first channel corresponds to 128 subcarriers. This implementation may be achieved through direct extension of a subcarrier spacing of a second signal at a 40 MHz bandwidth.

Optionally, the quantity of subcarriers corresponding to the first channel may also be greater than 128. For example, the first channel may correspond to 256 subcarriers, 512 subcarriers, 1024 subcarriers, or the like.

If the bandwidth of the first channel is 1080 MHz, the first channel corresponds to 256 subcarriers. This implementation may be achieved through direct extension of a subcarrier spacing of a second signal at an 80 MHz bandwidth.

Optionally, the quantity of subcarriers corresponding to the first channel may also be greater than 256. For example, the first channel may correspond to 512 subcarriers, 1024 subcarriers, or the like.

If the bandwidth of the first channel is 2160 MHz, the first channel corresponds to 512 subcarriers. This implementation may be achieved through direct extension of a subcarrier spacing of a second signal at a 160 MHz bandwidth.

Optionally, the quantity of subcarriers corresponding to the first channel may also be greater than 512. For example, the first channel may correspond to 1024 subcarriers or the like.

If the bandwidth of the first channel is 4320 MHz, the first channel corresponds to 1024 subcarriers. This implementation may be achieved through direct extension of a subcarrier spacing of a second signal at a 3200 MHz bandwidth.

For example, a correspondence between each bandwidth supported in the first frequency band and the quantity of subcarriers (or an IDFT size/a DFT size) may be shown in Table 6.

**Table 6**

| Bandwidth supported in the first frequency band | Quantity of subcarriers (or IDFT size/DFT size) |
|---|---|
| 270 MHz | 64 |
| 540 MHz | 128 |
| 1080 MHz | 256 |
| 2160 MHz | 512 |
| 4320 MHz | 1024 |

In an example 7, the minimum channel bandwidth supported in the first frequency band is 540 MHz, in other words, the bandwidth of the first fundamental channel is 540 MHz. The first frequency band may support one or more bandwidths of 540 MHz, 1080 MHz, 2160 MHz, 4320 MHz, and 8640 MHz.

Based on this example, the quantity of subcarriers of the first channel may meet any one of the following.

If the bandwidth of the first channel is 540 MHz, the first channel corresponds to 64 subcarriers. This implementation may be achieved through direct extension of a subcarrier spacing of a second signal at a 20 MHz bandwidth.

Optionally, the quantity of subcarriers corresponding to the first channel may also be greater than 64. For example, the first channel may correspond to 128 subcarriers, 256 subcarriers, 512 subcarriers, or the like.

If the bandwidth of the first channel is 1080 MHz, the first channel corresponds to 128 subcarriers. This implementation may be achieved through direct extension of a subcarrier spacing of a second signal at a 40 MHz bandwidth.

Optionally, the quantity of subcarriers corresponding to the first channel may also be greater than 128. For example, the first channel may correspond to 256 subcarriers, 512 subcarriers, 1024 subcarriers, or the like.

If the bandwidth of the first channel is 2160 MHz, the first channel corresponds to 256 subcarriers. This implementation may be achieved through direct extension of a subcarrier spacing of a second signal at an 80 MHz bandwidth.

Optionally, the quantity of subcarriers corresponding to the first channel may also be greater than 256. For example, the first channel may correspond to 512 subcarriers, 1024 subcarriers, or the like.

If the bandwidth of the first channel is 4320 MHz, the first channel corresponds to 512 subcarriers. This implementation may be achieved through direct extension of a subcarrier spacing of a second signal at a 160 MHz bandwidth.

Optionally, the quantity of subcarriers corresponding to the first channel may also be greater than 512. For example, the first channel may correspond to 1024 subcarriers or the like.

If the bandwidth of the first channel is 8640 MHz, the first channel corresponds to 1024 subcarriers. This implementation may be achieved through direct extension of a subcarrier spacing of a second signal at a 320 MHz bandwidth.

For example, a correspondence between each bandwidth supported in the first frequency band and the quantity of subcarriers (or an IDFT size/a DFT size) may be shown in Table 7.

**Table 7**

| Bandwidth supported in the first frequency band | Quantity of subcarriers (or IDFT size/DFT size) |
| --- | --- |
| 540 MHz | 64 |
| 1080 MHz | 128 |
| 2160 MHz | 256 |
| 4320 MHz | 512 |
| 8640 MHz | 1024 |

Example 3: The bandwidth of the first fundamental channel is obtained by performing K times of bisection on a first subband, a bandwidth of the first subband is less than a minimum channel bandwidth supported in a millimeter wave band, and K is an integer greater than or equal to 0. For example, it is assumed that the minimum channel bandwidth supported in the millimeter wave band is 2160 MHz. In this case, the first subband may be 1000 MHz, 1800 MHz, 1940 MHz, 2000 MHz, 2100 MHz, or the like. In a possible implementation, the bandwidth of the first subband may be an integer multiple of 20 MHz.

For ease of description, an example in which the first subband is 2000 MHz is used for description. The bandwidth of the first fundamental channel may be 2000 MHz, 1000 MHz, 500 MHz, 250 MHz, or the like.

In an example 8, the minimum channel bandwidth supported in the first frequency band is 250 MHz, in other words, the bandwidth of the first fundamental channel is 250 MHz. The first frequency band may support one or more bandwidths of 250 MHz, 500 MHz, 1000 MHz, 2000 MHz, and 4000 MHz.

Based on this example, the quantity of subcarriers of the first channel may meet any one of the following.

If the bandwidth of the first channel is 250 MHz, the first channel corresponds to 64 subcarriers. This implementation may be achieved through direct extension of a subcarrier spacing of a second signal at a 20 MHz bandwidth.

Optionally, the quantity of subcarriers corresponding to the first channel may also be greater than 64. For example, the first channel may correspond to 128 subcarriers, 256 subcarriers, 512 subcarriers, or the like.

If the bandwidth of the first channel is 500 MHz, the first channel corresponds to 128 subcarriers. This implementation may be achieved through direct extension of a subcarrier spacing of a second signal at a 40 MHz bandwidth.

Optionally, the quantity of subcarriers corresponding to the first channel may also be greater than 128. For example, the first channel may correspond to 256 subcarriers, 512 subcarriers, 1024 subcarriers, or the like.

If the bandwidth of the first channel is 1000 MHz, the first channel corresponds to 256 subcarriers. This implementation may be achieved through direct extension of a subcarrier spacing of a second signal at an 80 MHz bandwidth.

Optionally, the quantity of subcarriers corresponding to the first channel may also be greater than 256. For example, the first channel may correspond to 512 subcarriers, 1024 subcarriers, or the like.

If the bandwidth of the first channel is 2000 MHz, the first channel corresponds to 512 subcarriers. This implementation may be achieved through direct extension of a subcarrier spacing of a second signal at a 160 MHz bandwidth.

Optionally, the quantity of subcarriers corresponding to the first channel may also be greater than 512. For example, the first channel may correspond to 1024 subcarriers or the like.

If the bandwidth of the first channel is 4000 MHz, the first channel corresponds to 1024 subcarriers. This implementation may be achieved through direct extension of a subcarrier spacing of a second signal at a 320 MHz bandwidth.

For example, a correspondence between each bandwidth supported in the first frequency band and the quantity of subcarriers (or an IDFT size/a DFT size) may be shown in Table 8.

**Table 8**

| Bandwidth supported in the first frequency band | Quantity of subcarriers (or IDFT size/DFT size) |
| --- | --- |
| 250 MHz | 64 |
| 500 MHz | 128 |
| 1000 MHz | 256 |
| 2000 MHz | 512 |
| 4000 MHz | 1024 |

In an example 9, the minimum channel bandwidth supported in the first frequency band is 250 MHz, in other words, the bandwidth of the first fundamental channel is 250 MHz. The first frequency band may support one or more bandwidths of 500 MHz, 1000 MHz, 2000 MHz, and 4000 MHz.

Based on this example, the quantity of subcarriers of the first channel may meet any one of the following.

If the bandwidth of the first channel is 500 MHz, the first channel corresponds to 64 subcarriers. This implementation may be achieved through direct extension of a subcarrier spacing of a second signal at a 20 MHz bandwidth.

Optionally, the quantity of subcarriers corresponding to the first channel may also be greater than 64. For example, the first channel may correspond to 128 subcarriers, 256 subcarriers, 512 subcarriers, or the like.

If the bandwidth of the first channel is 1000 MHz, the first channel corresponds to 128 subcarriers. This implementation may be achieved through direct extension of a subcarrier spacing of a second signal at a 40 MHz bandwidth.

Optionally, the quantity of subcarriers corresponding to the first channel may also be greater than 128. For example, the first channel may correspond to 256 subcarriers, 512 subcarriers, 1024 subcarriers, or the like.

If the bandwidth of the first channel is 2000 MHz, the first channel corresponds to 256 subcarriers. This implementation may be achieved through direct extension of a subcarrier spacing of a second signal at an 80 MHz bandwidth.

Optionally, the quantity of subcarriers corresponding to the first channel may also be greater than 256. For example, the first channel may correspond to 512 subcarriers, 1024 subcarriers, or the like.

If the bandwidth of the first channel is 4000 MHz, the first channel corresponds to 512 subcarriers. This implementation may be achieved through direct extension of a subcarrier spacing of a second signal at a 160 MHz bandwidth.

Optionally, the quantity of subcarriers corresponding to the first channel may also be greater than 512. For example, the first channel may correspond to 1024 subcarriers or the like.

If the bandwidth of the first channel is 8000 MHz, the first channel corresponds to 1024 subcarriers. This implementation may be achieved through direct extension of a subcarrier spacing of a second signal at a 320 MHz bandwidth.

For example, a correspondence between each bandwidth supported in the first frequency band and the quantity of subcarriers (or an IDFT size/a DFT size) may be shown in Table 9.

**Table 9**

| Bandwidth supported in the first frequency band | Quantity of subcarriers (or IDFT size/DFT size) |
|---|---|
| 500 MHz | 64 |
| 1000 MHz | 128 |
| 2000 MHz | 256 |
| 4000 MHz | 512 |
| 8000 MHz | 1024 |

In this embodiment of this application, a ratio of the bandwidth of the first channel to the minimum channel bandwidth supported in the first frequency band is equal to a ratio of the bandwidth of the second channel to the minimum channel bandwidth supported in the second frequency band, for example, both the ratios are $2^M$, and the quantity of subcarriers corresponding to the first channel is greater than or equal to the quantity of subcarriers corresponding to the second channel in the second frequency band. It can be learned that a correspondence between a bandwidth in a high frequency band (for example, the first frequency band) and the IDFT size/DFT size (or the quantity of subcarriers) is similar with a correspondence between a bandwidth in a low frequency band (for example, the second frequency band) and the quantity of subcarriers, so that the high frequency band and the low frequency band can share a signal processing device, for example, an IDFT device or a DFT device is reused. Therefore, device costs are low.

Embodiment 1 describes the quantity of subcarriers (or the IDFT size/DFT size) corresponding to each bandwidth supported in the first frequency band above. The following describes a channel division method for the first frequency band as an example. For details, refer to Embodiment 2, Embodiment 3, and Embodiment 4.

The channel division method provided in this application may be implemented in combination with Embodiment 1. Specifically, a channel division method provided in Embodiment 2 may be implemented in combination with Example 1 in Embodiment 1, or it may be understood that if the first frequency band is divided into a channel in a manner in Embodiment 2, for a correspondence between each channel bandwidth and the quantity of subcarriers, refer to Example 1 in Embodiment 1. A channel division method provided in Embodiment 3 may be implemented in combination with Example 2 in Embodiment 1, or it may be understood that if the first frequency band is divided into a channel in a manner in Embodiment 3, for a correspondence between each channel bandwidth and the quantity of subcarriers, refer to Example 2 in Embodiment 1. A channel division method provided in Embodiment 4 may be implemented in combination with Example 3 in Embodiment 1, or it may be understood that if the first frequency band is divided into a channel in a manner in Embodiment 4, for a correspondence between each channel bandwidth and the quantity of subcarriers, refer to Example 3 in Embodiment 1.

**Embodiment 2**

It is assumed that the minimum bandwidth (for example, a low-frequency minimum bandwidth defined in 802. 11be) of the second frequency band is 20 MHz. In the channel division method provided in Embodiment 2 of this application, the bandwidth of the first frequency band may be divided based on an integer multiple of 20 MHz, for example, 40 MHz, 80 MHz, 160 MHz, 320 MHz, or 640 MHz. In Embodiment 2 of this application, a channel bandwidth of a high frequency band (namely, the first frequency band) is an integer multiple of a minimum channel bandwidth of a low frequency band (namely, the second frequency band), so that a signal in the high frequency band and a signal in the low frequency band can be transmitted by reusing a same crystal oscillator. This can reduce hardware complexity and reduce hardware overheads.

The following describes a channel division method for the first frequency band by using an example with reference to a specific frequency band.

Example 4: The minimum channel bandwidth supported in the first frequency band is 320 MHz, in other words, the bandwidth of the first fundamental channel is 320 MHz. The bandwidth supported in the first frequency band may include one or more bandwidths of 320 MHz, 640 MHz, 1280 MHz, 2560 MHz, and 5120 MHz.

Optionally, for the quantity of subcarriers (or the IDFT size/DFT size) corresponding to each channel bandwidth in a channel division manner in Example 4, refer to related descriptions of the example 1 in Example 1 in Embodiment 1. Details are not described herein again.

For example, the first frequency band is a 57-66 GHz frequency band. The first frequency band may be divided into 28 320 MHz channels, 14 640 MHz channels, seven 1280 MHz channels, three 2560 MHz channels, or one 5120 MHz channel, as shown in FIG. 4.

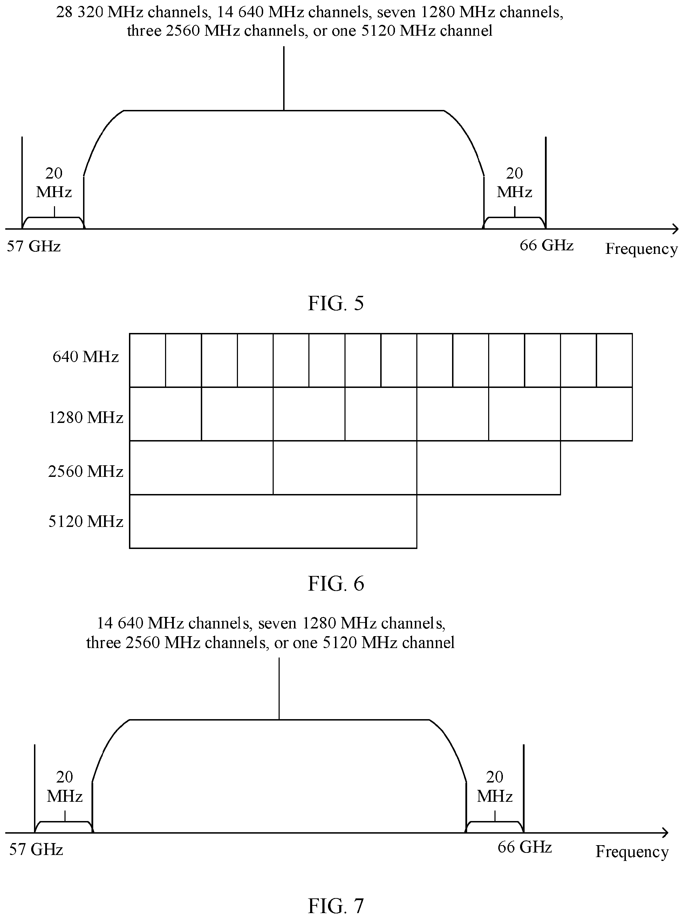

A channel division manner for the 57-66 GHz frequency band is described herein. In this division manner, a 20 MHz bandwidth remains at each of a front portion and a rear portion of the first frequency band, as shown in FIG. 5.

320 MHz channel division: A formula for calculating a center frequency is $f_C(n)[GHz] = 57.180 + (n-1) \times 0.320, 1$

$\leq n \leq 28$, a formula for calculating a lowest frequency is $f_L(n)[GHz] = 57.020 + (n - 1) \times 0.320, 1 \leq n \leq 28$, and a formula for calculating a highest frequency is $f_H(n)[GHz] = 57.340 + (n - 1) \times 0.320, 1 \leq n \leq 28$. $f_C(n)$ indicates the center frequency, $f_L(n)$ indicates the lowest frequency, and $f_H(n)$ indicates the highest frequency. Meanings of $f_C(n)$, $f_L(n)$, and $f_H(n)$ below are the same as those herein, and are not described one by one.

640 MHz channel division: A formula for calculating a center frequency is $f_C(n)[GHz] = 57.340 + (n - 1) \times 0.640, 1 \leq n \leq 14$, a formula for calculating a lowest frequency is $f_L(n)[GHz] = 57.020 + (n - 1) \times 0.640, 1 \leq n \leq 14$, and a formula for calculating a highest frequency is $f_H(n)[GHz] = 57.660 + (n - 1) \times 0.640, 1 \leq n \leq 14$.

1280 MHz channel division: A formula for calculating a center frequency is $f_C(n)[GHz] = 57.660 + (n - 1) \times 1.280, 1 \leq n \leq 7$, a formula for calculating a lowest frequency is $f_L(n)[GHz] = 57.020 + (n - 1) \times 1.280, 1 \leq n \leq 7$, and a formula for calculating a highest frequency is $f_H(n)[GHz] = 58.300 + (n - 1) \times 1.280, 1 \leq n \leq 7$.

2560 MHz channel division: A formula for calculating a center frequency is $f_C(n)[GHz] = 58.300 + (n - 1) \times 2.560, 1 \leq n \leq 3$, a formula for calculating a lowest frequency is $f_L(n)[GHz] = 57.020 + (n - 1) \times 2.560, 1 \leq n \leq 3$, and a formula for calculating a highest frequency is $f_H(n)[GHz] = 59.580 + (n - 1) \times 2.560, 1 \leq n \leq 3$.

5120 MHz channel division: A formula for calculating a center frequency is $f_C(n)[GHz] = 59.580 + (n - 1) \times 5.120, n = 1$, a formula for calculating a lowest frequency is $f_L(n)[GHz] = 57.020 + (n - 1) \times 5.120, n = 1$, and a formula for calculating a highest frequency is $f_H(n)[GHz] = 62.140 + (n - 1) \times 5.120, n = 1$.

In the channel division manner provided in this application, n is a sequence number or an index number of a channel. Details are not described below again.

For example, the first frequency band includes a 42.3-47.0 GHz frequency band and a 47.2-48.4 GHz frequency band. The first frequency band may be divided into 17 320 MHz channels, eight 640 MHz channels, three 1280 MHz channels, or one 2560 MHz channel.

A channel division manner for the 42.3-47.0 GHz frequency band and the 47.2-48.4 GHz frequency band is described herein. In this division method, both remaining bandwidths at a front portion and a rear portion of the 42.3-47.0 GHz frequency band are 110 MHz, and both remaining bandwidths at a front portion and a rear portion of the 47.2-48.4 GHz frequency band are 120 MHz.

320 MHz channel division: The 42.3-47.0 GHz frequency band includes 14 320 MHz channels, and the 47.2-48.4 GHz frequency band includes three 320 MHz channels. For the 42.3-47.0 GHz frequency band, a formula for calculating a center frequency is $f_C(n)[GHz] = 42.570 + (n - 1) \times 0.320, 1 \leq n \leq 14$, a formula for calculating a lowest frequency is $f_L(n)[GHz] = 42.410 + (n - 1) \times 0.320, 1 \leq n \leq 14$, and a formula for calculating a highest frequency is $f_H(n)[GHz] = 42.730 + (n - 1) \times 0.320, 1 \leq n \leq 14$. For the 47.2-48.4 GHz frequency band, a formula for calculating a center frequency is $f_C(n)[GHz] = 47.480 + (n - 15) \times 0.320, 15 \leq n \leq 17$, a formula for calculating a lowest frequency is $f_L(n)[GHz] = 47.320 + (n - 15) \times 0.320, 15 \leq n \leq 17$, and a formula for calculating a highest frequency is $f_H(n)[GHz] = 47.640 + (n - 15) \times 0.320, 15 \leq n \leq 17$.

640 MHz channel division: The 42.3-47.0 GHz frequency band includes seven 640 MHz channels, and the 47.2-48.4 GHz frequency band includes one 640 MHz channel. For the 42.3-47.0 GHz frequency band, a formula for calculating a center frequency is $f_C(n)[GHz] = 42.730 + (n - 1) \times 0.640, 1 \leq n \leq 7$, a formula for calculating a lowest frequency is $f_L(n)[GHz] = 42.410 + (n - 1) \times 0.640, 1 \leq n \leq 7$, and a formula for calculating a highest frequency is $f_H(n)[GHz] = 43.050 + (n - 1) \times 0.640, 1 \leq n \leq 7$; and for the 47.2-48.4 GHz frequency band, a formula for calculating a center frequency is $f_C(n)[GHz] = 47.640 + (n - 8) \times 0.640, n = 8$, a formula for calculating a lowest frequency is $f_L(n)[GHz] = 47.320 + (n - 8) \times 0.640, n = 8$, and a formula for calculating a highest frequency is $f_H(n)[GHz] = 47.960 + (n - 8) \times 0.640, n = 8$.

1280 MHz channel division: A formula for calculating a center frequency is $f_C(n)[GHz] = 43.050 + (n - 1) \times 1.280, 1 \leq n \leq 3$, a formula for calculating a lowest frequency is $f_L(n)[GHz] = 42.410 + (n - 1) \times 1.280, 1 \leq n \leq 3$, and a formula for calculating a highest frequency is $f_H(n)[GHz] = 43.690 + (n - 1) \times 1.280, 1 \leq n \leq 3$.

2560 MHz channel division: A formula for calculating a center frequency is $f_C(n)[GHz] = 43.690 + (n - 1) \times 2.560, n = 1$, a formula for calculating a lowest frequency is $f_L(n)[GHz] = 42.410 + (n - 1) \times 2.560, n = 1$, and a formula for calculating a highest frequency is $f_H(n)[GHz] = 44.970 + (n - 1) \times 2.560, n = 1$.

For example, the first frequency band is a 56.16-73.44 GHz frequency band. The first frequency band may be divided into 54 320 MHz channels, 27 640 MHz channels, 13 1280 MHz channels, six 2560 MHz channels, or three 5120 MHz channels.

A channel division manner for the 56.16-73.44 GHz frequency band is described herein. In this division method, there is no remaining bandwidth at a front portion and a rear portion of the first frequency band.

320 MHz channel division: A formula for calculating a center frequency is $f_C(n)[GHz] = 56.320 + (n - 1) \times 0.320, 1 \leq n \leq 54$, a formula for calculating a lowest frequency is $f_L(n)[GHz] = 56.160 + (n - 1) \times 0.320, 1 \leq n \leq 54$, and a formula for calculating a highest frequency is $f_H(n)[GHz] = 56.480 + (n - 1) \times 0.320, 1 \leq n \leq 54$.

640 MHz channel division: A formula for calculating a center frequency is $f_C(n)[GHz] = 56.480 + (n - 1) \times 0.640, 1 \leq n \leq 27$, a formula for calculating a lowest frequency is $f_L(n)[GHz] = 56.160 + (n - 1) \times 0.640, 1 \leq n \leq 27$, and a formula for calculating a highest frequency is $f_H(n)[GHz] = 56.800 + (n - 1) \times 0.640, 1 \leq n \leq 27$.

1280 MHz channel division: A formula for calculating a center frequency is $f_C(n)[GHz] = 56.800 + (n - 1) \times 1.280, 1 \leq n \leq 13$, a formula for calculating a lowest frequency is $f_L(n)[GHz] = 56.160 + (n - 1) \times 1.280, 1 \leq n \leq 13$, and a formula for calculating a highest frequency is $f_H(n)[GHz]$ = 57.440 + ($n$ - 1) × 1.280,1 ≤ $n$ ≤ 13.

2560 MHz channel division: A formula for calculating a center frequency is $f_C(n)[GHz]$ = 57.440 + ($n$ - 1) × 2.560,1 ≤ $n$ ≤ 6, a formula for calculating a lowest frequency is $f_L(n)[GHz]$ = 56.160 + ($n$ - 1) × 2.560,1 ≤ $n$ ≤ 6, and a formula for calculating a highest frequency is $f_H(n)[GHz]$ = 58.720 + ($n$ - 1) × 2.560,1 ≤ $n$ ≤ 6.

5120 MHz channel division: A formula for calculating a center frequency is $f_C(n)[GHz]$ = 58.720 + ($n$ - 1) × 5.120,1 ≤ $n$ ≤ 3, a formula for calculating a lowest frequency is $f_L(n)[GHz]$ = 56.160 + ($n$ - 1) × 5.120,1 ≤ $n$ ≤ 3, and a formula for calculating a highest frequency is $f_H(n)[GHz]$ = 61.280 + ($n$ - 1) × 5.120,1 ≤ $n$ ≤ 3.

Example 5: The minimum channel bandwidth supported in the first frequency band is 80 MHz, in other words, the bandwidth of the first fundamental channel is 80 MHz. The bandwidth supported in the first frequency band may include one or more bandwidths of 80 MHz, 160 MHz, 320 MHz, 640 MHz, and 1280 MHz.

Optionally, for the quantity of subcarriers (or the IDFT size/DFT size) corresponding to each channel bandwidth in a channel division manner in Example 5, refer to related descriptions of the example 4 in Example 1 in Embodiment 1. Details are not described herein again.

For example, the first frequency band is a 57-66 GHz frequency band. The first frequency band may be divided into 112 80 MHz channels, 56 160 MHz channels, 28 320 MHz channels, 14 640 MHz channels, or seven 1280 MHz channels. In this division manner, a 20 MHz bandwidth remains at each of a front portion and a rear portion of the first frequency band.

80 MHz channel division: A formula for calculating a center frequency is $f_C(n)[GHz]$ = 57.060 + ($n$ - 1) × 0.080,1 ≤ $n$ ≤ 112, a formula for calculating a lowest frequency is $f_L(n)[GHz]$ = 57.020 + ($n$ - 1) × 0.080,1 ≤ $n$ ≤ 112, and a formula for calculating a highest frequency is $f_H(n)[GHz]$ = 57.100 + ($n$ - 1) × 0.080,1 ≤ $n$ ≤ 112.

160 MHz channel division: A formula for calculating a center frequency is $f_C(n)[GHz]$ = 57.100 + ($n$ - 1) × 0.160,1 ≤ $n$ ≤ 56, a formula for calculating a lowest frequency is $f_L(n)[GHz]$ = 57.020 + ($n$ - 1) × 0.160,1 ≤ $n$ ≤ 56, and a formula for calculating a highest frequency is $f_H(n)[GHz]$ = 57.180 + ($n$ - 1) × 0.160,1 ≤ $n$ ≤ 56.

320 MHz channel division: A formula for calculating a center frequency is $f_C(n)[GHz]$ = 57.180 + ($n$ - 1) × 0.320,1 ≤ $n$ ≤ 28, a formula for calculating a lowest frequency is $f_L(n)[GHz]$ = 57.020 + ($n$ - 1) × 0.320,1 ≤ $n$ ≤ 28, and a formula for calculating a highest frequency is $f_H(n)[GHz]$ = 57.340 + ($n$ - 1) × 0.320,1 ≤ $n$ ≤ 28.

640 MHz channel division: A formula for calculating a center frequency is $f_C(n)[GHz]$ = 57.340 + ($n$ - 1) × 0.640,1 ≤ $n$ ≤ 14, a formula for calculating a lowest frequency is $f_L(n)[GHz]$ = 57.020 + ($n$ - 1) × 0.640,1 ≤ $n$ ≤ 14, and a formula for calculating a highest frequency is $f_H(n)[GHz]$ = 57.660 + ($n$ - 1) × 0.640,1 ≤ $n$ ≤ 14.

1280 MHz channel division: A formula for calculating a center frequency is $f_C(n)[GHz]$ = 57.660 + (n - 1) × 1.280,1 ≤ n ≤ 7, a formula for calculating a lowest frequency is $f_L(n)[GHz]$ = 57.020 + (n - 1) × 1.280,1 ≤ n ≤ 7, and a formula for calculating a highest frequency is $f_H(n)[GHz]$ = 58.300 + (n - 1) × 1.280,1 ≤ n ≤ 7.

For example, the first frequency band includes a 42.3-47.0 GHz frequency band and a 47.2-48.4 GHz frequency band. The first frequency band may be divided into 73 80 MHz channels, 36 160 MHz channels, 17 320 MHz channels, eight 640 MHz channels, or three 1280 MHz channels.

A channel division manner for the 42.3-47.0 GHz frequency band and the 47.2-48.4 GHz frequency band is described herein. In this division method, both remaining bandwidths at a front portion and a rear portion of the 42.3-47.0 GHz frequency band are 30 MHz, and there is no remaining bandwidth at a front portion and a rear portion of the 47.2-48.4 GHz frequency band.

80 MHz channel division: The 42.3-47.0 GHz frequency band includes 58 80 MHz channels, and the 47.2-48.4 GHz frequency band includes 15 80 MHz channels. For the 42.3-47.0 GHz frequency band, a formula for calculating a center frequency is $f_C(n)[GHz]$ = 42.370 + ($n$ - 1) × 0.080,1 ≤ $n$ ≤ 58, a formula for calculating a lowest frequency is $f_L(n)[GHz]$ = 42.330 + ($n$ - 1) × 0.080,1 ≤ $n$ ≤ 58, and a formula for calculating a highest frequency is $f_H(n)[GHz]$ = 42.410 + ($n$ - 1) × 0.080,1 ≤ $n$ ≤ 58. For the 47.2-48.4 GHz frequency band, a formula for calculating a center frequency is $f_C(n)[GHz]$ = 47.240 + ($n$ - 58) × 0.160,58 ≤ $n$ ≤ 73, a formula for calculating a lowest frequency is $f_L(n)[GHz]$ = 47.200 + ($n$ - 58) × 0.080,58 ≤ $n$ ≤ 73, and a formula for calculating a highest frequency is $f_H(n)[GHz]$ = 47.280 + ($n$ - 58) × 0.080,58 ≤ $n$ ≤ 73.

160 MHz channel division: The 42.3-47.0 GHz frequency band includes 29 160 MHz channels, and the 47.2-48.4 GHz frequency band includes seven 160 MHz channels. For the 42.3-47.0 GHz frequency band, a formula for calculating a center frequency is $f_C(n)[GHz]$ = 42.410 + ($n$ - 1) × 0.160,1 ≤ $n$ ≤ 29, a formula for calculating a lowest frequency is $f_L(n)[GHz]$ = 42.330 + ($n$ - 1) × 0.160,1 ≤ $n$ ≤ 29, and a formula for calculating a highest frequency is $f_H(n)[GHz]$ = 42.490 + ($n$ - 1) × 0.160,1 ≤ $n$ ≤ 29. For the 47.2-48.4 GHz frequency band, a formula for calculating a center frequency is $f_C(n)[GHz]$ = 47.280 + ($n$ - 30) × 0.160,30 ≤ $n$ ≤ 36, a formula for calculating a lowest frequency is $f_L(n)[GHz]$ = 47.200 + ($n$ - 30) × 0.160,30 ≤ $n$ ≤ 36, and a formula for calculating a highest frequency is $f_H(n)[GHz]$ = 47.360 + ($n$ - 30) × 0.160,30 ≤ $n$ ≤ 36.

320 MHz channel division: The 42.3-47.0 GHz frequency band includes 14 320 MHz channels, and the 47.2-48.4 GHz frequency band includes three 320 MHz channels. For the 42.3-47.0 GHz frequency band, a formula for calculating a center frequency is $f_C(n)[GHz]$ = 42.490 + ($n$ - 1) × 0.320,1 ≤ $n$ ≤ 14, a formula for calculating a lowest frequency is $f_L(n)[GHz]$ = 42.330 + ($n$ - 1) × 0.320,1 ≤ $n$ ≤ 14, and a formula for calculating a highest frequency is $f_H(n)[GHz]$ = 42.650 + ($n$ - 1) × 0.320,1 ≤ $n$ ≤ 14. For the 47.2-48.4 GHz frequency band, a formula for calculating a center frequency is $f_C(n)[GHz]$ =

47.360 + (n - 15) × 0.320,15 ≤ n ≤ 17, a formula for calculating a lowest frequency is $f_L(n)[GHz]$ = 47.200 + (n - 15) × 0.320,15 ≤ n ≤ 17, and a formula for calculating a highest frequency is $f_H(n)[GHz]$ = 47.520 + (n - 15) × 0.320,15 ≤ n ≤ 17.

640 MHz channel division: The 42.3-47.0 GHz frequency band includes seven 640 MHz channels, and the 47.2-48.4 GHz frequency band includes one 640 MHz channel. For the 42.3-47.0 GHz frequency band, a formula for calculating a center frequency is $f_C(n)[GHz]$ = 42.650 + (n - 1) × 0.640,1 ≤ n ≤ 7, a formula for calculating a lowest frequency is $f_L(n)[GHz]$ = 42.330 + (n - 1) × 0.640,1 ≤ n ≤ 7, and a formula for calculating a highest frequency is $f_H(n)[GHz]$ = 42.970 + (n - 1) × 0.640,1 ≤ n ≤ 7; and for the 47.2-48.4 GHz frequency band, a formula for calculating a center frequency is $f_C(n)[GHz]$ = 47.520 + (n - 8) × 0.640, n = 8, a formula for calculating a lowest frequency is $f_L(n)[GHz]$ = 47.200 + (n - 8) × 0.640, n = 8, and a formula for calculating a highest frequency is $f_H(n)[GHz]$ = 47.840 + (n - 8) × 0.640, n = 8.

1280 MHz channel division: A formula for calculating a center frequency is $f_C(n)[GHz]$ = 42.970 + (n - 1) × 1.280,1 ≤ n ≤ 3, a formula for calculating a lowest frequency is $f_L(n)[GHz]$ = 42.330 + (n - 1) × 1.280,1 ≤ n ≤ 3, and a formula for calculating a highest frequency is $f_H(n)[GHz]$ = 43.610 + (n - 1) × 1.280,1 ≤ n ≤ 3.

For example, the first frequency band is a 56.16-73.44 GHz frequency band. The first frequency band may be divided into 216 80 MHz channels, 108 160 MHz channels, 54 320 MHz channels, 27 640 MHz channels, or 13 1280 MHz channels.

A channel division manner for the 56.16-73.44 GHz frequency band is described herein. In this division method, there is no remaining bandwidth at a front portion and a rear portion of the first frequency band.

80 MHz channel division: A formula for calculating a center frequency is $f_C(n)[GHz]$ = 56.200 + (n - 1) × 0.080,1 ≤ n ≤ 216, a formula for calculating a lowest frequency is $f_L(n)[GHz]$ = 56.160 + (n - 1) × 0.080,1 ≤ n ≤ 216, and a formula for calculating a highest frequency is $f_H(n)[GHz]$ = 56.240 + (n - 1) × 0.080,1 ≤ n ≤ 216.

160 MHz channel division: A formula for calculating a center frequency is $f_C(n)[GHz]$ = 56.240 + (n - 1) × 0.160,1 ≤ n ≤ 108, a formula for calculating a lowest frequency is $f_L(n)[GHz]$ = 56.160 + (n - 1) × 0.160,1 ≤ n ≤ 108, and a formula for calculating a highest frequency is $f_H(n)[GHz]$ = 56.320 + (n - 1) × 0.160,1 ≤ n ≤ 108.

320 MHz channel division: A formula for calculating a center frequency is $f_C(n)[GHz]$ = 56.320 + (n - 1) × 0.320,1 ≤ n ≤ 54, a formula for calculating a lowest frequency is $f_L(n)[GHz]$ = 56.160 + (n - 1) × 0.320,1 ≤ n ≤ 54, and a formula for calculating a highest frequency is $f_H(n)[GHz]$ = 56.480 + (n - 1) × 0.320,1 ≤ n ≤ 54.

640 MHz channel division: A formula for calculating a center frequency is $f_C(n)[GHz]$ = 56.480 + (n - 1) × 0.640,1 ≤ n ≤ 27, a formula for calculating a lowest frequency is $f_L(n)[GHz]$ = 56.160 + (n - 1) × 0.640,1 ≤ n ≤ 27, and a formula for calculating a highest frequency is $f_H(n)[GHz]$ = 56.800 + (n - 1) × 0.640,1 ≤ n ≤ 27.

1280 MHz channel division: A formula for calculating a center frequency is $f_C(n)[GHz]$ = 56.800 + (n - 1) × 1.280,1 ≤ n ≤ 13, a formula for calculating a lowest frequency is $f_L(n)[GHz]$ = 56.160 + (n - 1) × 1.280,1 ≤ n ≤ 13, and a formula for calculating a highest frequency is $f_H(n)[GHz]$ = 57.440 + (n - 1) × 1.280,1 ≤ n ≤ 13.

Example 6: The minimum channel bandwidth supported in the first frequency band is 160 MHz, in other words, the bandwidth of the first fundamental channel is 160 MHz. The bandwidth supported in the first frequency band may include one or more bandwidths of 160 MHz, 320 MHz, 640 MHz, 1280 MHz, and 2560 MHz.

Optionally, for the quantity of subcarriers (or the IDFT size/DFT size) corresponding to each channel bandwidth in a channel division manner in Example 6, refer to related descriptions of the example 5 in Example 1 in Embodiment 1. Details are not described herein again.

For example, the first frequency band is a 57-66 GHz frequency band. The first frequency band may be divided into 56 160 MHz channels, 28 320 MHz channels, 14 640 MHz channels, seven 1280 MHz channels, or three 2560 MHz channels. In this division manner, a 20 MHz bandwidth remains at each of a front portion and a rear portion of the first frequency band.

160 MHz channel division: A formula for calculating a center frequency is $f_C(n)[GHz]$ = 57.100 + (n - 1) × 0.160,1 ≤ n ≤ 56, a formula for calculating a lowest frequency is $f_L(n)[GHz]$ = 57.020 + (n - 1) × 0.160,1 ≤ n ≤ 56, and a formula for calculating a highest frequency is $f_H(n)[GHz]$ = 57.180 + (n - 1) × 0.160,1 ≤ n ≤ 56.

320 MHz channel division: A formula for calculating a center frequency is $f_C(n)[GHz]$ = 57.180 + (n - 1) × 0.320,1 ≤ n ≤ 28, a formula for calculating a lowest frequency is $f_L(n)[GHz]$ = 57.020 + (n - 1) × 0.320,1 ≤ n ≤ 28, and a formula for calculating a highest frequency is $f_H(n)[GHz]$ = 57.340 + (n - 1) × 0.320,1 ≤ n ≤ 28.

640 MHz channel division: A formula for calculating a center frequency is $f_C(n)[GHz]$ = 57.340 + (n - 1) × 0.640,1 ≤ n ≤ 14, a formula for calculating a lowest frequency is $f_L(n)[GHz]$ = 57.020 + (n - 1) × 0.640,1 ≤ n ≤ 14, and a formula for calculating a highest frequency is $f_H(n)[GHz]$ = 57.660 + (n - 1) × 0.640,1 ≤ n ≤ 14.

1280 MHz channel division: A formula for calculating a center frequency is $f_C(n)[GHz]$ = 57.660 + (n - 1) × 1.280,1 ≤ n ≤ 7, a formula for calculating a lowest frequency is $f_L(n)[GHz]$ = 57.020 + (n - 1) × 1.280,1 ≤ n ≤ 7, and a formula for calculating a highest frequency is $f_H(n)[GHz]$ = 58.300 + (n - 1) × 1.280,1 ≤ n ≤ 7.

2560 MHz channel division: A formula for calculating a center frequency is $f_C(n)[GHz]$ = 58.300 + (n - 1) × 2.560,1 ≤ n ≤ 3, a formula for calculating a lowest frequency is $f_L(n)[GHz]$ = 57.020 + (n - 1) × 2.560,1 ≤ n ≤ 3, and a formula for calculating a highest frequency is $f_H(n)[GHz]$ = 59.580 + (n - 1) × 2.560,1 ≤ n ≤ 3.

For example, the first frequency band includes a 42.3-47.0 GHz frequency band and a 47.2-48.4 GHz frequency band. The first frequency band may be divided into 35 160 MHz channels, 17 320 MHz channels, eight 640 MHz channels, three 1280 MHz channels, or one 2560 MHz channel.

A channel division manner for the 42.3-47.0 GHz frequency band and the 47.2-48.4 GHz frequency band is described herein. In this division method, both remaining bandwidths at a front portion and a rear portion of the 42.3-47.0 GHz frequency band are 110 MHz, and both remaining bandwidths at a front portion and a rear portion of the 47.2-48.4 GHz frequency band are 40 MHz.

160 MHz channel division: The 42.3-47.0 GHz frequency band includes 28 160 MHz channels, and the 47.2-48.4 GHz frequency band includes seven 160 MHz channels. For the 42.3-47.0 GHz frequency band, a formula for calculating a center frequency is $f_C(n)[GHz] = 42.490 + (n - 1) \times 0.160, 1 \leq n \leq 28$, a formula for calculating a lowest frequency is $f_L(n)[GHz] = 42.410 + (n - 1) \times 0.160, 1 \leq n \leq 28$, and a formula for calculating a highest frequency is $f_H(n)[GHz] = 42.570 + (n - 1) \times 0.160, 1 \leq n \leq 28$. For the 47.2-48.4 GHz frequency band, a formula for calculating a center frequency is $f_C(n)[GHz] = 47.320 + (n - 29) \times 0.160, 29 \leq n \leq 35$, a formula for calculating a lowest frequency is $f_L(n)[GHz] = 47.240 + (n - 29) \times 0.160, 29 \leq n \leq 35$, and a formula for calculating a highest frequency is $f_H(n)[GHz] = 47.400 + (n - 29) \times 0160, 29 \leq n \leq 35$.

320 MHz channel division: The 42.3-47.0 GHz frequency band includes 14 320 MHz channels, and the 47.2-48.4 GHz frequency band includes three 320 MHz channels. For the 42.3-47.0 GHz frequency band, a formula for calculating a center frequency is $f_C(n)[GHz] = 42.570 + (n - 1) \times 0.320, 1 \leq n \leq 14$, a formula for calculating a lowest frequency is $f_L(n)[GHz] = 42.410 + (n - 1) \times 0.320, 1 \leq n \leq 14$, and a formula for calculating a highest frequency is $f_H(n)[GHz] = 42.730 + (n - 1) \times 0.320, 1 \leq n \leq 14$. For the 47.2-48.4 GHz frequency band, a formula for calculating a center frequency is $f_C(n)[GHz] = 47.400 + (n - 15) \times 0.320, 15 \leq n \leq 17$, a formula for calculating a lowest frequency is $f_L(n)[GHz] = 47.240 + (n - 15) \times 0.320, 15 \leq n \leq 17$, and a formula for calculating a highest frequency is $f_H(n)[GHz] = 47.560 + (n - 15) \times 0.320, 15 \leq n \leq 17$.

640 MHz channel division: The 42.3-47.0 GHz frequency band includes seven 640 MHz channels, and the 47.2-48.4 GHz frequency band includes one 640 MHz channel. For the 42.3-47.0 GHz frequency band, a formula for calculating a center frequency is $f_C(n)[GHz] = 42.730 + (n - 1) \times 0.640, 1 \leq n \leq 7$, a formula for calculating a lowest frequency is $f_L(n)[GHz] = 42.410 + (n - 1) \times 0.640, 1 \leq n \leq 7$, and a formula for calculating a highest frequency is $f_H(n)[GHz] = 43.050 + (n - 1) \times 0.640, 1 \leq n \leq 7$; and for the 47.2-48.4 GHz frequency band, a formula for calculating a center frequency is $f_C(n)[GHz] = 47.560 + (n - 8) \times 0.640, n = 8$, a formula for calculating a lowest frequency is $f_L(n)[GHz] = 47.240 + (n - 8) \times 0.640, n = 8$, and a formula for calculating a highest frequency is $f_H(n)[GHz] = 47.880 + (n - 8) \times 0.640, n = 8$.

1280 MHz channel division: A formula for calculating a center frequency is $f_C(n)[GHz] = 43.050 + (n - 1) \times 1.280, 1 \leq n \leq 3$, a formula for calculating a lowest frequency is $f_L(n)[GHz] = 42.410 + (n - 1) \times 1.280, 1 \leq n \leq 3$, and a formula for calculating a highest frequency is $f_H(n)[GHz] = 43.690 + (n - 1) \times 1.280, 1 \leq n \leq 3$.

2560 MHz channel division: A formula for calculating a center frequency is $f_C(n)[GHz] = 43.690 + (n - 1) \times 2.560, n = 1$, a formula for calculating a lowest frequency is $f_L(n)[GHz] = 42.410 + (n - 1) \times 2.560, n = 1$, and a formula for calculating a highest frequency is $fH(n)[GHz] = 44.970 + (n - 1) \times 2.560, n = 1$.

For example, the first frequency band is a 56.16-73.44 GHz frequency band. The first frequency band may be divided into 108 160 MHz channels, 54 320 MHz channels, 27 640 MHz channels, 13 1280 MHz channels, or six 2560 MHz channels.

A channel division manner for the 56.16-73.44 GHz frequency band is described herein. In this division method, there is no remaining bandwidth at a front portion and a rear portion of the first frequency band.

160 MHz channel division: A formula for calculating a center frequency is $f_C(n)[GHz] = 56.240 + (n - 1) \times 0.160, 1 \leq n \leq 108$, a formula for calculating a lowest frequency is $f_L(n)[GHz] = 56.160 + (n - 1) \times 0.160, 1 \leq n \leq 108$, and a formula for calculating a highest frequency is $f_H(n)[GHz] = 56.320 + (n - 1) \times 0.160, 1 \leq n \leq 108$.

320 MHz channel division: A formula for calculating a center frequency is $f_C(n)[GHz] = 56.320 + (n - 1) \times 0.320, 1 \leq n \leq 54$, a formula for calculating a lowest frequency is $f_L(n)[GHz] = 56.160 + (n - 1) \times 0.320, 1 \leq n \leq 54$, and a formula for calculating a highest frequency is $f_H(n)[GHz] = 56.480 + (n - 1) \times 0.320, 1 \leq n \leq 54$.

640 MHz channel division: A formula for calculating a center frequency is $f_C(n)[GHz] = 56.480 + (n - 1) \times 0.640, 1 \leq n \leq 27$, a formula for calculating a lowest frequency is $f_L(n)[GHz] = 56.160 + (n - 1) \times 0.640, 1 \leq n \leq 27$, and a formula for calculating a highest frequency is $f_H(n)[GHz] = 56.800 + (n - 1) \times 0.640, 1 \leq n \leq 27$.

1280 MHz channel division: A formula for calculating a center frequency is $f_C(n)[GHz] = 56.800 + (n - 1) \times 1.280, 1 \leq n \leq 13$, a formula for calculating a lowest frequency is $f_L(n)[GHz] = 56.160 + (n - 1) \times 1.280, 1 \leq n \leq 13$, and a formula for calculating a highest frequency is $f_H(n)[GHz] = 57.440 + (n - 1) \times 1.280, 1 \leq n \leq 13$.

2560 MHz channel division: A formula for calculating a center frequency is $f_C(n)[GHz] = 57.440 + (n - 1) \times 2.560, 1 \leq n \leq 6$, a formula for calculating a lowest frequency is $f_L(n)[GHz] = 56.160 + (n - 1) \times 2.560, 1 \leq n \leq 6$, and a formula for calculating a highest frequency is $f_H(n)[GHz] = 58.720 + (n - 1) \times 2.560, 1 \leq n \leq 6$.

Example 7: The minimum channel bandwidth supported in the first frequency band is 640 MHz, in other words, the bandwidth of the first fundamental channel is 640 MHz. The bandwidth supported in the first frequency band may include one or more bandwidths of 640 MHz, 1280 MHz, 2560 MHz, and 5120 MHz.

Optionally, for the quantity of subcarriers (or the IDFT size/DFT size) corresponding to each channel bandwidth in a channel division manner in Example d, refer to related descriptions of the example 2 in Example 1 in Embodiment 1.

Details are not described herein again.

For example, the first frequency band is a 57-66 GHz frequency band. The first frequency band may be divided into 14 640 MHz channels, seven 1280 MHz channels, three 2560 MHz channels, or one 5120 MHz channel, as shown in FIG. 6. In this division manner, a 20 MHz bandwidth remains at each of a front portion and a rear portion of the first frequency band, as shown in FIG. 7.

A channel division manner for the 57-66 GHz frequency band is described herein.

640 MHz channel division: A formula for calculating a center frequency is $f_C(n)[GHz] = 57.340 + (n - 1) \times 0.640, 1 \leq n \leq 14$, a formula for calculating a lowest frequency is $f_L(n)[GHz] = 57.020 + (n - 1) \times 0.640, 1 \leq n \leq 14$, and a formula for calculating a highest frequency is $f_H(n)[GHz] = 57.660 + (n - 1) \times 0.640, 1 \leq n \leq 14$.

1280 MHz channel division: A formula for calculating a center frequency is $f_C(n)[GHz] = 57.660 + (n - 1) \times 1.280, 1 \leq n \leq 7$, a formula for calculating a low frequency is $f_L(n)[GHz] = 57.020 + (n - 1) \times 1.280, 1 \leq n \leq 7$, and a formula for calculating a high frequency is $f_H(n)[GHz] = 58.300 + (n - 1) \times 1.280, 1 \leq n \leq 7$.

2560 MHz channel division: A formula for calculating a center frequency is $f_C(n)[GHz] = 58.300 + (n - 1) \times 2.560, 1 \leq n \leq 3$, a formula for calculating a low frequency is $f_L(n)[GHz] = 57.020 + (n - 1) \times 2.560, 1 \leq n \leq 3$, and a formula for calculating a high frequency is $f_H(n)[GHz] = 59.580 + (n - 1) \times 2.560, 1 \leq n \leq 3$.

5120 MHz channel division: A formula for calculating a center frequency is $f_C(n)[GHz] = 59.580 + (n - 1) \times 5.120, n = 1$, a formula for calculating a low frequency is $f_L(n)[GHz] = 57.020 + (n - 1) \times 5.120, n = 1$, and a formula for calculating a high frequency is $f_H(n)[GHz] = 62.140 + (n - 1) \times 5.120, n = 1$.

For example, the first frequency band includes a 42.3-47.0 GHz frequency band and a 47.2-48.4 GHz frequency band. The first frequency band may be divided into eight 640 MHz channels, three 1280 MHz channels, or one 2560 MHz channel.

A channel division manner for the 42.3-47.0 GHz frequency band and the 47.2-48.4 GHz frequency band is described herein. In this division method, both remaining bandwidths at a front portion and a rear portion of the 42.3-47.0 GHz frequency band are 110 MHz, and both remaining bandwidths at a front portion and a rear portion of the 47.2-48.4 GHz frequency band are 120 MHz.

640 MHz channel division: The 42.3-47.0 GHz frequency band includes seven 640 MHz channels, and the 47.2-48.4 GHz frequency band includes one 640 MHz channel. For the 42.3-47.0 GHz frequency band, a formula for calculating a center frequency is $f_C(n)[GHz] = 42.730 + (n - 1) \times 0.640, 1 \leq n \leq 7$, a formula for calculating a lowest frequency is $f_L(n)[GHz] = 42.410 + (n - 1) \times 0.640, 1 \leq n \leq 7$, and a formula for calculating a highest frequency is $f_H(n)[GHz] = 43.050 + (n - 1) \times 0.640, 1 \leq n \leq 7$; and for the 47.2-48.4 GHz frequency band, a formula for calculating a center frequency is $f_C(n)[GHz] = 47.640 + (n - 8) \times 0.640, n = 8$, a formula for calculating a lowest frequency is $f_L(n)[GHz] = 47.320 + (n - 8) \times 0.640, n = 8$, and a formula for calculating a highest frequency is $f_H(n)[GHz] = 47.960 + (n - 8) \times 0.640, n = 8$.

1280 MHz channel division: A formula for calculating a center frequency is $f_C(n)[GHz] = 43.050 + (n - 1) \times 1.280, 1 \leq n \leq 3$, a formula for calculating a lowest frequency is $f_L(n)[GHz] = 42.410 + (n - 1) \times 1.280, 1 \leq n \leq 3$, and a formula for calculating a highest frequency is $f_H(n)[GHz] = 43.690 + (n - 1) \times 1.280, 1 \leq n \leq 3$.

2560 MHz channel division: A formula for calculating a center frequency is $f_C(n)[GHz] = 43.690 + (n - 1) \times 2.560, n = 1$, a formula for calculating a lowest frequency is $f_L(n)[GHz] = 42.410 + (n - 1) \times 2.560, n = 1$, and a formula for calculating a highest frequency is $f_H(n)[GHz] = 44.970 + (n - 1) \times 2.560, n = 1$.

For example, the first frequency band is a 56.16-73.44 GHz frequency band. The first frequency band may be divided into 27 640 MHz channels, 13 1280 MHz channels, six 2560 MHz channels, three 5120 MHz channels, or one 10240 MHz channel.

A channel division manner for the 56.16-73.44 GHz frequency band is described herein. In this division method, there is no remaining bandwidth at a front portion and a rear portion of the first frequency band.

640 MHz channel division: A formula for calculating a center frequency is $f_C(n)[GHz] = 56.480 + (n - 1) \times 0.640, 1 \leq n \leq 27$, a formula for calculating a lowest frequency is $f_L(n)[GHz] = 56.160 + (n - 1) \times 0.640, 1 \leq n \leq 27$, and a formula for calculating a highest frequency is $f_H(n)[GHz] = 56.800 + (n - 1) \times 0.640, 1 \leq n \leq 27$.

1280 MHz channel division: A formula for calculating a center frequency is $f_C(n)[GHz] = 56.800 + (n - 1) \times 1.280, 1 \leq n \leq 13$, a formula for calculating a lowest frequency is $f_L(n)[GHz] = 56.160 + (n - 1) \times 1.280, 1 \leq n \leq 13$, and a formula for calculating a highest frequency is $f_H(n)[GHz] = 57.440 + (n - 1) \times 1.280, 1 \leq n \leq 13$.

2560 MHz channel division: A formula for calculating a center frequency is $f_C(n)[GHz] = 57.440 + (n - 1) \times 2.560, 1 \leq n \leq 6$, a formula for calculating a lowest frequency is $f_L(n)[GHz] = 56.160 + (n - 1) \times 2.560, 1 \leq n \leq 6$, and a formula for calculating a highest frequency is $f_H(n)[GHz] = 58.720 + (n - 1) \times 2.560, 1 \leq n \leq 6$.

5120 MHz channel division: A formula for calculating a center frequency is $f_C(n)[GHz] = 58.720 + (n - 1) \times 5.120, 1 \leq n \leq 3$, a formula for calculating a lowest frequency is $f_L(n)[GHz] = 56.160 + (n - 1) \times 5.120, 1 \leq n \leq 3$, and a formula for calculating a highest frequency is $f_H(n)[GHz] = 61.280 + (n - 1) \times 5.120, 1 \leq n \leq 3$.

10240 MHz channel division: A center frequency is 61.280, a lowest frequency is 56.160, and a highest frequency is 66.400.

In the channel division manner provided in this application, n is the sequence number or the index number of the channel. Details are not described below again.

It should be understood that the division manners in Example 4 to Example 7 are merely examples for description, and locations of the center frequency, the lowest frequency, and the highest frequency of the channel are not specifically limited. A channel division manner may be used provided that the bandwidth is divided based on the integer multiple of 20 MHz and a subcarrier spacing is proper.

In the channel division manner provided in Embodiment 2 of this application, a spectrum resource in the first frequency band can be used as much as possible through smaller-granularity channel division. This reduces a resource waste and improves resource utilization. In addition, the first frequency band is divided into the channel based on the integer multiple of the minimum channel bandwidth of the second frequency band, so that a signal in the first frequency band and a signal in the second frequency band can be transmitted by reusing a same crystal oscillator. In addition, a correspondence between a bandwidth and an IDFT size/a DFT size (or a quantity of subcarriers) in the second frequency band is reused in the first frequency band, so that the first frequency band and the second frequency band can share a signal processing device, for example, an IDFT device or a DFT device is reused. Therefore, according to Embodiment 2 above, hardware complexity can be reduced, hardware device overheads can be reduced, and device costs can be reduced.

**Embodiment 3**

In a channel division method provided in Embodiment 3 of this application, the bandwidth of the first frequency band may be divided based on a minimum channel bandwidth of a millimeter wave band. In other words, a channel boundary in Embodiment 3 is consistent with a channel boundary, of the millimeter wave band, in the first frequency band. In Embodiment 3, R times of bisection are performed on the minimum channel bandwidth of the millimeter wave band to obtain a channel in the first frequency band, or minimum channel bandwidths and performance of T millimeter wave bands are aggregated to obtain a channel in the first frequency band, where R is an integer greater than or equal to 0, and T is an integer greater than or equal to 0.

It is assumed that the minimum channel bandwidth of the millimeter wave band is 2160 MHz. In the channel division method provided in Embodiment 3 of this application, the bandwidth of the first frequency band may be divided based on 2160 MHz, in other words, the channel boundary in Embodiment 3 is consistent with the channel boundary, of the millimeter wave band, in the first frequency band. In Embodiment 3, R times of bisection are performed on the 2160 MHz bandwidth to obtain a channel in the first frequency band, or T 2160 MHz channels are aggregated to obtain a channel in the first frequency band, where R is an integer greater than or equal to 0, and T is an integer greater than or equal to 0.

It is assumed that the minimum channel bandwidth of the millimeter wave band is 540 MHz. In the channel division method provided in Embodiment 3 of this application, the bandwidth of the first frequency band may be divided based on 540 MHz, in other words, the channel boundary in Embodiment 3 is consistent with the channel boundary, of the millimeter wave band, in the first frequency band. In Embodiment 3, R times of bisection are performed on the 540 MHz bandwidth to obtain a channel in the first frequency band, or T 540 MHz channels are aggregated to obtain a channel in the first frequency band, where R is an integer greater than or equal to 0, and T is an integer greater than or equal to 0.

Therefore, the first frequency band can support the minimum channel bandwidth of the millimeter wave band, to be compatible with a device of the millimeter wave band. In Embodiment 3, a bandwidth supported in the first frequency band may be an integer multiple of the minimum channel bandwidth of the second frequency band, or may not be an integer multiple of the minimum channel bandwidth of the second frequency band. Optionally, if a bandwidth of a channel in the first frequency band is not an integer multiple of the minimum channel bandwidth of the second frequency band, a channel carrier frequency may be implemented by using a fractional-N phase-locked loop, in other words, a plurality of sampling clocks are implemented by using an external crystal oscillator and through internal fractional frequency multiplication.

According to the solution provided in Embodiment 3, a millimeter wave band device with a low frequency band (namely, the second frequency band) can be compatible, so that a signal in a high frequency band, a signal in a low frequency band, and a signal in a millimeter wave band can be transmitted by reusing a same crystal oscillator. This can reduce hardware complexity and reduce hardware overheads.

The following describes a channel division method for the first frequency band by using an example with reference to a specific frequency band.

Example 8: The minimum channel bandwidth supported in the first frequency band is 270 MHz, in other words, the bandwidth of the first fundamental channel is 270 MHz. The bandwidth supported in the first frequency band may include one or more bandwidths of 270 MHz, 540 MHz, 1080 MHz, 2160 MHz, and 4320 MHz.

Optionally, for the quantity of subcarriers (or the IDFT size/DFT size) corresponding to each channel bandwidth in a channel division manner in Example 8, refer to related descriptions of the example 6 in Example 2 in Embodiment 1. Details are not described herein again.

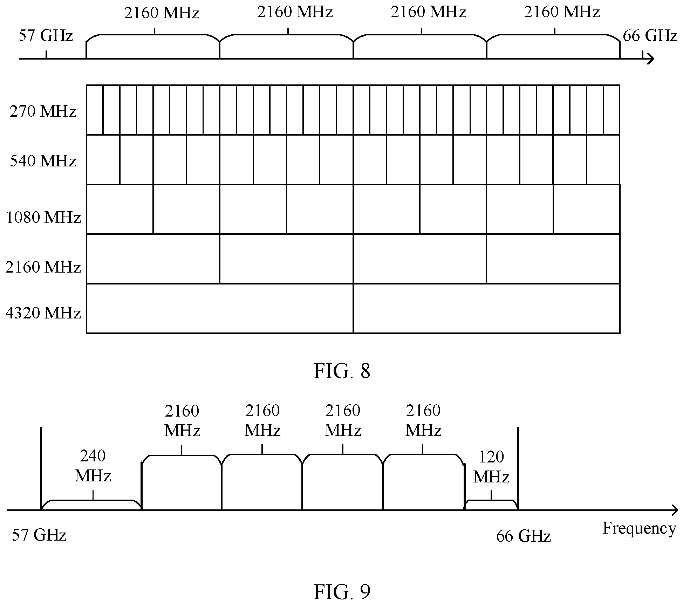

For example, the first frequency band is a 57-66 GHz frequency band. The first frequency band may be divided into 32 270 MHz channels, 16 540 MHz channels, eight 1080 MHz channels, four 2160 MHz channels, or two 4320 MHz channels, as shown in FIG. 8.

A channel division manner for the 57-66 GHz frequency band is described herein. In this division method, remaining bandwidths at a front portion and a rear portion of the first frequency band are respectively 240 MHz and 120 MHz, as shown in FIG. 9.

270 MHz channel division: A formula for calculating a center frequency is $f_C(n)[GHz] = 57.375 + (n-1) \times 0.270, 1 \leq n \leq 32$, a formula for calculating a lowest frequency is $f_L(n)[GHz] = 57.240 + (n-1) \times 0.270, 1 \leq n \leq 32$, and a formula for calculating a highest frequency is $f_H(n)[GHz] = 57.510 + (n-1) \times 0.270, 1 \leq n \leq 32$.

540 MHz channel division: A formula for calculating a center frequency is $f_C(n)[GHz] = 57.510 + (n-1) \times 0.540, 1 \leq n \leq 16$, a formula for calculating a lowest frequency is $f_L(n)[GHz] = 57.240 + (n-1) \times 0.540, 1 \leq n \leq 16$, and a formula for calculating a highest frequency is $f_H(n)[GHz] = 57.780 + (n-1) \times 0.540, 1 \leq n \leq 16$.

1080 MHz channel division: A formula for calculating a center frequency is $f_C(n)[GHz] = 57.780 + (n-1) \times 1.080, 1 \leq n \leq 8$, a formula for calculating a lowest frequency is $f_L(n)[GHz] = 57.240 + (n-1) \times 1.080, 1 \leq n \leq 8$, and a formula for calculating a highest frequency is $f_H(n)[GHz] = 58.320 + (n-1) \times 1.080, 1 \leq n \leq 8$.

2160 MHz channel division: A formula for calculating a center frequency is $f_C(n)[GHz] = 58.320 + (n-1) \times 2.160, 1 \leq n \leq 4$, a formula for calculating a lowest frequency is $f_L(n)[GHz] = 57.240 + (n-1) \times 2.160, 1 \leq n \leq 4$, and a formula for calculating a highest frequency is $f_H(n)[GHz] = 59.400 + (n-1) \times 2.160, 1 \leq n \leq 4$.

4320 MHz channel division: A formula for calculating a center frequency is $f_C(n)[GHz] = 59.400 + (n-1) \times 4.320, 1 \leq n \leq 2$, a formula for calculating a lowest frequency is $f_L(n)[GHz] = 57.240 + (n-1) \times 4.320, 1 \leq n \leq 2$, and a formula for calculating a highest frequency is $f_H(n)[GHz] = 61.560 + (n-1) \times 4.320, 1 \leq n \leq 2$.

For example, the first frequency band includes a 42.3-47.0 GHz frequency band and a 47.2-48.4 GHz frequency band. The first frequency band may be divided into 20 270 MHz channels, 10 540 MHz channels, five 1080 MHz channels, two 2160 MHz channels, or one 4320 MHz channel. Optionally, in the channel division manner, a channel division boundary is consistent with channel boundaries of the millimeter wave band in the 42.3-47.0 GHz frequency band and the 47.2-48.4 GHz frequency band.

A channel division manner for the 42.3-47.0 GHz frequency band and the 47.2-48.4 GHz frequency band is described herein. In this division method, remaining bandwidths at a front portion and a rear portion of the 42.3-47.0 GHz frequency band are respectively 90 MHz and 290 MHz, and remaining bandwidths at a front portion and a rear portion of the 47.2-48.4 GHz frequency band are respectively 50 MHz and 70 MHz.

270 MHz channel division: The 42.3-47.0 GHz frequency band includes 16 270 MHz channels, and the 47.2-48.4 GHz frequency band includes four 270 MHz channels. For the 42.3-47.0 GHz frequency band, a formula for calculating a center frequency is $f_C(n)[GHz] = 42.525 + (n-1) \times 0.270, 1 \leq n \leq 16$, a formula for calculating a lowest frequency is $f_L(n)[GHz] = 42.390 + (n-1) \times 0.270, 1 \leq n \leq 16$, and a formula for calculating a highest frequency is $f_H(n)[GHz] = 42.660 + (n-1) \times 0.270, 1 \leq n \leq 16$. For the 47.2-48.4 GHz frequency band, a formula for calculating a center frequency is $f_C(n)[GHz] = 47.385 + (n-9) \times 0.270, 17 \leq n \leq 20$, a formula for calculating a lowest frequency is $f_L(n)[GHz] = 47.250 + (n-9) \times 0.270, 17 \leq n \leq 20$, and a formula for calculating a highest frequency is $f_H(n)[GHz] = 47.520 + (n-9) \times 0.270, 17 \leq n \leq 20$.

540 MHz channel division: The 42.3-47.0 GHz frequency band includes eight 540 MHz channels, and the 47.2-48.4 GHz frequency band includes two 540 MHz channels. For the 42.3-47.0 GHz frequency band, a formula for calculating a center frequency is $f_C(n)[GHz] = 42.660 + (n-1) \times 0.540, 1 \leq n \leq 8$, a formula for calculating a lowest frequency is $f_L(n)[GHz] = 42.390 + (n-1) \times 0.540, 1 \leq n \leq 8$, and a formula for calculating a highest frequency is $f_H(n)[GHz] = 42.930 + (n-1) \times 0.540, 1 \leq n \leq 8$; and for the 47.2-48.4 GHz frequency band, a formula for calculating a center frequency is $f_C(n)[GHz] = 47.520 + (n-9) \times 0.540, 9 \leq n \leq 10$, a formula for calculating a lowest frequency is $f_L(n)[GHz] = 47.250 + (n-9) \times 0.540, 9 \leq n \leq 10$, and a formula for calculating a highest frequency is $f_H(n)[GHz] = 47.790 + (n-9) \times 0.540, 9 \leq n \leq 10$.

1080 MHz channel division: The 42.3-47.0 GHz frequency band includes four 1080 MHz channels, and the 47.2-48.4 GHz frequency band includes one 1080 MHz channel. For the 42.3-47.0 GHz frequency band, a formula for calculating a center frequency is $f_C(n)[GHz] = 42.930 + (n-1) \times 1.080, 1 \leq n \leq 4$, a formula for calculating a lowest frequency is $f_L(n)[GHz] = 42.390 + (n-1) \times 1.080, 1 \leq n \leq 4$, and a formula for calculating a highest frequency is $f_H(n)[GHz] = 43.470 + (n-1) \times 1.080, 1 \leq n \leq 4$; and for the 47.2-48.4 GHz frequency band, a formula for calculating a center frequency is $f_C(n)[GHz] = 47.790 + (n-5) \times 1.080, n = 5$, a formula for calculating a lowest frequency is $f_L(n)[GHz] = 47.250 + (n-5) \times 1.080, n = 5$, and a formula for calculating a highest frequency is $f_H(n)[GHz] = 47.330 + (n-5) \times 1.080, n = 5$.

2160 MHz channel division: A formula for calculating a center frequency is $f_C(n)[GHz] = 43.470 + (n-1) \times 2.160, 1 \leq n \leq 2$, a formula for calculating a lowest frequency is $f_L(n)[GHz] = 42.390 + (n-1) \times 2.160, 1 \leq n \leq 2$, and a formula for calculating a highest frequency is $f_H(n)[GHz] = 44.550 + (n-1) \times 2.160, 1 \leq n \leq 2$.

4320 MHz channel division: A formula for calculating a center frequency is $f_C(n)[GHz] = 44.550 + (n-1) \times 4.320, n = 1$, a formula for calculating a lowest frequency is $f_L(n)[GHz] = 42.390 + (n-1) \times 4.320, n = 1$, and a formula for calculating a highest frequency is $f_H(n)[GHz] = 46.710 + (n-1) \times 4.320, n = 1$.

For example, the first frequency band is a 56.16-73.44 GHz frequency band. The first frequency band may be divided into 64 270 MHz channels, 32 540 MHz channels, 16 1080 MHz channels, eight 2160 MHz channels, or four 4320 MHz channels.

A channel division manner for the 56.16-73.44 GHz frequency band is described herein. In this division method, there is no remaining bandwidth at a front portion and a rear portion of the first frequency band.

270 MHz channel division: A formula for calculating a center frequency is $f_C(n)[GHz] = 56.295 + (n - 1) \times 0.270, 1 \leq n \leq 64$, a formula for calculating a lowest frequency is $f_L(n)[GHz] = 56.160 + (n - 1) \times 0.270, 1 \leq n \leq 64$, and a formula for calculating a highest frequency is $f_H(n)[GHz] = 56.430 + (n - 1) \times 0.270, 1 \leq n \leq 64$.

540 MHz channel division: A formula for calculating a center frequency is $f_C(n)[GHz] = 56.430 + (n - 1) \times 0.540, 1 \leq n \leq 32$, a formula for calculating a lowest frequency is $f_L(n)[GHz] = 56.160 + (n - 1) \times 0.540, 1 \leq n \leq 32$, and a formula for calculating a highest frequency is $f_H(n)[GHz] = 56.700 + (n - 1) \times 0.540, 1 \leq n \leq 32$.

1080 MHz channel division: A formula for calculating a center frequency is $f_C(n)[GHz] = 56.700 + (n - 1) \times 1.080, 1 \leq n \leq 16$, a formula for calculating a lowest frequency is $f_L(n)[GHz] = 56.160 + (n - 1) \times 1.080, 1 \leq n \leq 16$, and a formula for calculating a highest frequency is $f_H(n)[GHz] = 57.240 + (n - 1) \times 1.080, 1 \leq n \leq 16$.

2160 MHz channel division: A formula for calculating a center frequency is $f_C(n)[GHz] = 57.240 + (n - 1) \times 2.160, 1 \leq n \leq 8$, a formula for calculating a lowest frequency is $f_L(n)[GHz] = 56.160 + (n - 1) \times 2.160, 1 \leq n \leq 8$, and a formula for calculating a highest frequency is $f_H(n)[GHz] = 58.320 + (n - 1) \times 2.160, 1 \leq n \leq 8$.

4320 MHz channel division: A formula for calculating a center frequency is $f_C(n)[GHz] = 58.320 + (n - 1) \times 4.320, 1 \leq n \leq 4$, a formula for calculating a lowest frequency is $f_L(n)[GHz] = 56.160 + (n - 1) \times 4.320, 1 \leq n \leq 4$, and a formula for calculating a highest frequency is $f_H(n)[GHz] = 60.480 + (n - 1) \times 4.320, 1 \leq n \leq 4$.

Example 9: The minimum channel bandwidth supported in the first frequency band is 540 MHz, in other words, the bandwidth of the first fundamental channel is 540 MHz. The bandwidth supported in the first frequency band may include one or more bandwidths of 540 MHz, 1080 MHz, 2160 MHz, and 4320 MHz.

Optionally, for the quantity of subcarriers (or the IDFT size/DFT size) corresponding to each channel bandwidth in a channel division manner in Example 9, refer to related descriptions of the example 7 in Example 2 in Embodiment 1. Details are not described herein again.

For example, the first frequency band is a 57-66 GHz frequency band. The first frequency band may be divided into 16 540 MHz channels, eight 1080 MHz channels, four 2160 MHz channels, two 4320 MHz channels, or one 8640 MHz channel.

A channel division manner for the 57-66 GHz frequency band is described herein. In this division method, remaining bandwidths at a front portion and a rear portion of the first frequency band are respectively 240 MHz and 120 MHz.

540 MHz channel division: A formula for calculating a center frequency is $f_C(n)[GHz] = 57.510 + (n - 1) \times 0.540, 1 \leq n \leq 16$, a formula for calculating a lowest frequency is $f_L(n)[GHz] = 57.240 + (n - 1) \times 0.540, 1 \leq n \leq 16$, and a formula for calculating a highest frequency is $f_H(n)[GHz] = 57.780 + (n - 1) \times 0.540, 1 \leq n \leq 16$.

1080 MHz channel division: A formula for calculating a center frequency is $f_C(n)[GHz] = 57.780 + (n - 1) \times 1.080, 1 \leq n \leq 8$, a formula for calculating a lowest frequency is $fL(n)[GHz] = 57.240 + (n - 1) \times 1.080, 1 \leq n \leq 8$, and a formula for calculating a highest frequency is $f_H(n)[GHz] = 58.320 + (n - 1) \times 1.080, 1 \leq n \leq 8$.

2160 MHz channel division: A formula for calculating a center frequency is $f_C(n)[GHz] = 58.320 + (n - 1) \times 2.160, 1 \leq n \leq 4$, a formula for calculating a lowest frequency is $fL(n)[GHz] = 57.240 + (n - 1) \times 2.160, 1 \leq n \leq 4$, and a formula for calculating a highest frequency is $f_H(n)[GHz] = 59.400 + (n - 1) \times 2.160, 1 \leq n \leq 4$.

4320 MHz channel division: A formula for calculating a center frequency is $f_C(n)[GHz] = 59.400 + (n - 1) \times 4.320, 1 \leq n \leq 2$, a formula for calculating a lowest frequency is $f_L(n)[GHz] = 57.240 + (n - 1) \times 4.320, 1 \leq n \leq 2$, and a formula for calculating a highest frequency is $f_H(n)[GHz] = 61.560 + (n - 1) \times 4.320, 1 \leq n \leq 2$.

8640 MHz channel division: A formula for calculating a center frequency is $f_C(n)[GHz] = 61.560 + (n - 1) \times 8640, n = 1$, a formula for calculating a lowest frequency is $f_L(n)[GHz] = 57.240 + (n - 1) \times 8640, n = 1$, and a formula for calculating a highest frequency is $f_H(n)[GHz] = 65.880 + (n - 1) \times 8640, n = 1$.

For example, the first frequency band includes a 42.3-47.0 GHz frequency band and a 47.2-48.4 GHz frequency band. The first frequency band may be divided into 10 540 MHz channels, five 1080 MHz channels, two 2160 MHz channels, or one 4320 MHz channel. Optionally, in the channel division manner, a channel division boundary is consistent with channel boundaries of the millimeter wave band in the 42.3-47.0 GHz frequency band and the 47.2-48.4 GHz frequency band.

A channel division manner for the 42.3-47.0 GHz frequency band and the 47.2-48.4 GHz frequency band is described herein. In this division method, remaining bandwidths at a front portion and a rear portion of the 42.3-47.0 GHz frequency band are respectively 90 MHz and 290 MHz, and remaining bandwidths at a front portion and a rear portion of the 47.2-48.4 GHz frequency band are respectively 50 MHz and 70 MHz.

540 MHz channel division: The 42.3-47.0 GHz frequency band includes eight 540 MHz channels, and the 47.2-48.4 GHz frequency band includes two 540 MHz channels. For the 42.3-47.0 GHz frequency band, a formula for calculating a center frequency is $f_C(n)[GHz] = 42.660 + (n - 1) \times 0.540, 1 \leq n \leq 8$, a formula for calculating a lowest frequency is $f_L(n)[GHz] = 42.390 + (n - 1) \times 0.540, 1 \leq n \leq 8$, and a formula for calculating a highest frequency is $f_H(n)[GHz] = 42.930 + (n - 1) \times 0.540, 1 \leq n \leq 8$; and for the 47.2-48.4 GHz frequency band, a formula for calculating a center frequency is $f_C(n)$

$[GHz] = 47.520 + (n - 9) \times 0.540, 9 \leq n \leq 10$, a formula for calculating a lowest frequency is $f_L(n)[GHz] = 47.250 + (n - 9) \times 0.540, 9 \leq n \leq 10$, and a formula for calculating a highest frequency is $f_H(n)[GHz] = 47.790 + (n - 9) \times 0.540, 9 \leq n \leq 10$.

1080 MHz channel division: The 42.3-47.0 GHz frequency band includes four 1080 MHz channels, and the 47.2-48.4 GHz frequency band includes one 1080 MHz channel. For the 42.3-47.0 GHz frequency band, a formula for calculating a center frequency is $f_C(n)[GHz] = 42.930 + (n - 1) \times 1.080, 1 \leq n \leq 4$, a formula for calculating a lowest frequency is $f_L(n)[GHz] = 42.390 + (n - 1) \times 1.080, 1 \leq n \leq 4$, and a formula for calculating a highest frequency is $f_H(n)[GHz] = 43.470 + (n - 1) \times 1.080, 1 \leq n \leq 4$; and for the 47.2-48.4 GHz frequency band, a formula for calculating a center frequency is $f_C(n)[GHz] = 47.790 + (n - 5) \times 1.080, n = 5$, a formula for calculating a lowest frequency is $f_L(n)[GHz] = 47.250 + (n - 5) \times 1.080, n = 5$, and a formula for calculating a highest frequency is $f_H(n)[GHz] = 47.330 + (n - 5) \times 1.080, n = 5$.

2160 MHz channel division: A formula for calculating a center frequency is $f_C(n)[GHz] = 43.470 + (n - 1) \times 2.160, 1 \leq n \leq 2$, a formula for calculating a lowest frequency is $f_L(n)[GHz] = 42.390 + (n - 1) \times 2.160, 1 \leq n \leq 2$, and a formula for calculating a highest frequency is $f_H(n)[GHz] = 44.550 + (n - 1) \times 2.160, 1 \leq n \leq 2$.

4320 MHz channel division: A formula for calculating a center frequency is $f_C(n)[GHz] = 44.550 + (n - 1) \times 4.320, n = 1$, a formula for calculating a lowest frequency is $f_L(n)[GHz] = 42.390 + (n - 1) \times 4.320, n = 1$, and a formula for calculating a highest frequency is $f_H(n)[GHz] = 46.710 + (n - 1) \times 4.320, n = 1$.

For example, the first frequency band is a 56.16-73.44 GHz frequency band. The first frequency band may be divided into 32 540 MHz channels, 16 1080 MHz channels, eight 2160 MHz channels, four 4320 MHz channels, or two 8640 MHz channels.

A channel division manner for the 56.16-73.44 GHz frequency band is described herein. In this division method, there is no remaining bandwidth at a front portion and a rear portion of the first frequency band.

540 MHz channel division: A formula for calculating a center frequency is $f_C(n)[GHz] = 56.430 + (n - 1) \times 0.540, 1 \leq n \leq 32$, a formula for calculating a lowest frequency is $f_L(n)[GHz] = 56.160 + (n - 1) \times 0.540, 1 \leq n \leq 32$, and a formula for calculating a highest frequency is $f_H(n)[GHz] = 56.700 + (n - 1) \times 0.540, 1 \leq n \leq 32$.

1080 MHz channel division: A formula for calculating a center frequency is $f_C(n)[GHz] = 56.700 + (n - 1) \times 1.080, 1 \leq n \leq 16$, a formula for calculating a lowest frequency is $f_L(n)[GHz] = 56.160 + (n - 1) \times 1.080, 1 \leq n \leq 16$, and a formula for calculating a highest frequency is $f_H(n)[GHz] = 57.240 + (n - 1) \times 1.080, 1 \leq n \leq 16$.

2160 MHz channel division: A formula for calculating a center frequency is $f_C(n)[GHz] = 57.240 + (n - 1) \times 2.160, 1 \leq n \leq 8$, a formula for calculating a lowest frequency is $f_L(n)[GHz] = 56.160 + (n - 1) \times 2.160, 1 \leq n \leq 8$, and a formula for calculating a highest frequency is $f_H(n)[GHz] = 58.320 + (n - 1) \times 2.160, 1 \leq n \leq 8$.

4320 MHz channel division: A formula for calculating a center frequency is $f_C(n)[GHz] = 58.320 + (n - 1) \times 4.320, 1 \leq n \leq 4$, a formula for calculating a lowest frequency is $f_L(n)[GHz] = 56.160 + (n - 1) \times 4.320, 1 \leq n \leq 4$, and a formula for calculating a highest frequency is $f_H(n)[GHz] = 60.480 + (n - 1) \times 4.320, 1 \leq n \leq 4$.

8640 MHz channel division: A formula for calculating a center frequency is $f_C(n)[GHz] = 60.480 + (n - 1) \times 8640, n = 1,2$, a formula for calculating a lowest frequency is $f_L(n)[GHz] = 56.160 + (n - 1) \times 8640, n = 1,2$, and a formula for calculating a highest frequency is $f_H(n)[GHz] = 64.800 + (n - 1) \times 8640, n = 1,2$.

It should be understood that the division manners in Example 8 and Example 9 are merely examples for description, and locations of the center frequency, the lowest frequency, and the highest frequency of the channel are not specifically limited. A channel division manner may be used provided that the bandwidth is divided based on the minimum channel bandwidth of the millimeter wave band and a subcarrier spacing is proper.

In the channel division manner provided in Embodiment 2 of this application, a spectrum resource in the first frequency band can be used as much as possible through smaller-granularity channel division. This reduces a resource waste and improves resource utilization. In addition, according to Embodiment 3, the signal in the first frequency band, the signal in the second frequency band, and the signal in the millimeter wave band can be transmitted by reusing the same crystal oscillator. In addition, a correspondence between a bandwidth and an IDFT size/a DFT size (or a quantity of subcarriers) in the second frequency band is reused in the first frequency band, so that the first frequency band and the second frequency band can share a signal processing device, for example, an IDFT device or a DFT device is reused. Therefore, according to Embodiment 3 above, hardware complexity can be reduced, hardware device overheads can be reduced, and device costs can be reduced.

## Embodiment 4

In Embodiment 4 of this application, the bandwidth is also divided based on a minimum channel bandwidth of a millimeter wave band. In other words, a channel boundary in Embodiment 4 is consistent with a channel boundary of the millimeter wave band in the first frequency band.

It is assumed that the minimum channel bandwidth of the millimeter wave band is 2160 MHz. In Embodiment 4 of this application, the bandwidth is divided based on 2160 MHz, in other words, the channel boundary in Embodiment 4 is consistent with the channel boundary of the millimeter wave band in the first frequency band.

It is assumed that the minimum channel bandwidth of the millimeter wave band is 540 MHz. In Embodiment 4 of this application, the bandwidth is divided based on 540 MHz, in other words, the channel boundary in Embodiment 4 is consistent with the channel boundary of the millimeter wave band in the first frequency band.

A difference between Embodiment 4 and Embodiment 3 includes that, for example, bisection or aggregation is performed based on the minimum channel bandwidth of the millimeter wave band in Embodiment 3, but bisection or aggregation is performed based on a first subband in Embodiment 4, where a bandwidth of the first subband is less than the minimum channel bandwidth of the millimeter wave band, the first subband is selected from the minimum channel bandwidth supported in a millimeter wave band protocol IEEE 802.11ad/ay or 802.11aj, and center frequencies of the millimeter wave band and the first subband overlap. That the center frequencies of the millimeter wave band and the first subband overlap may also be understood as that the center frequencies of the millimeter wave band and the first subband are the same. For example, the minimum channel bandwidth of the millimeter wave band is 540 MHz, and the bandwidth of the first subband is 360 MHz, 480 MHz, 500 MHz, 520 MHz, or the like. The minimum channel bandwidth of the millimeter wave band is 2160 MHz, and the bandwidth of the first subband is 1000 MHz, 1800 MHz, 1940 MHz, 2000 MHz, 2100 MHz, or the like. In a possible implementation, the bandwidth of the first subband may be an integer multiple of 20 MHz.

For ease of understanding, the following uses an example in which the minimum channel bandwidth of the millimeter wave band is 2160 MHz and the first subband is 2000 MHz for description. In Embodiment 4, a bandwidth supported in the first frequency band may be an integer multiple of the minimum channel bandwidth of the second frequency band, or may not be an integer multiple of the minimum channel bandwidth of the second frequency band. Optionally, if a bandwidth of a channel in the first frequency band is not an integer multiple of the minimum channel bandwidth of the second frequency band, a channel carrier frequency may be implemented by using a fractional-N phase-locked loop, in other words, a plurality of sampling clocks are implemented by using an external crystal oscillator and through internal fractional frequency multiplication.

According to the solution provided in Embodiment 4, a millimeter wave band device with a low frequency band (namely, the second frequency band) can be compatible, so that a signal in a high frequency band, a signal in a low frequency band, and a signal in a millimeter wave band can be transmitted by reusing a same crystal oscillator. This can reduce hardware complexity and reduce hardware overheads.

The following describes a channel division method for the first frequency band by using an example with reference to a specific frequency band.

Example 10: The minimum channel bandwidth supported in the first frequency band is 250 MHz, in other words, the bandwidth of the first fundamental channel is 250 MHz. The bandwidth supported in the first frequency band may include one or more bandwidths of 250 MHz, 500 MHz, 1000 MHz, 2000 MHz, and 4000 MHz. In this example, a center frequency of 2000 MHz overlaps a center frequency of 2160 MHz obtained through division based on the millimeter wave band. A 1000 MHz channel is obtained by performing bisection once on the 2000 MHz channel, a 500 MHz channel is obtained by performing bisection twice on the 2000 MHz channel, and a 250 MHz channel is obtained by performing bisection for three times on the 2000 MHz channel. A 4000 MHz channel is obtained by aggregating two 2000 MHz channels. It should be understood that the two 2000 MHz channels included in the 4000 MHz bandwidth are inconsecutive.

Optionally, for the quantity of subcarriers (or the IDFT size/DFT size) corresponding to each channel bandwidth in a channel division manner in Example 10, refer to related descriptions of the example 8 in Example 3 in Embodiment 1. Details are not described herein again.

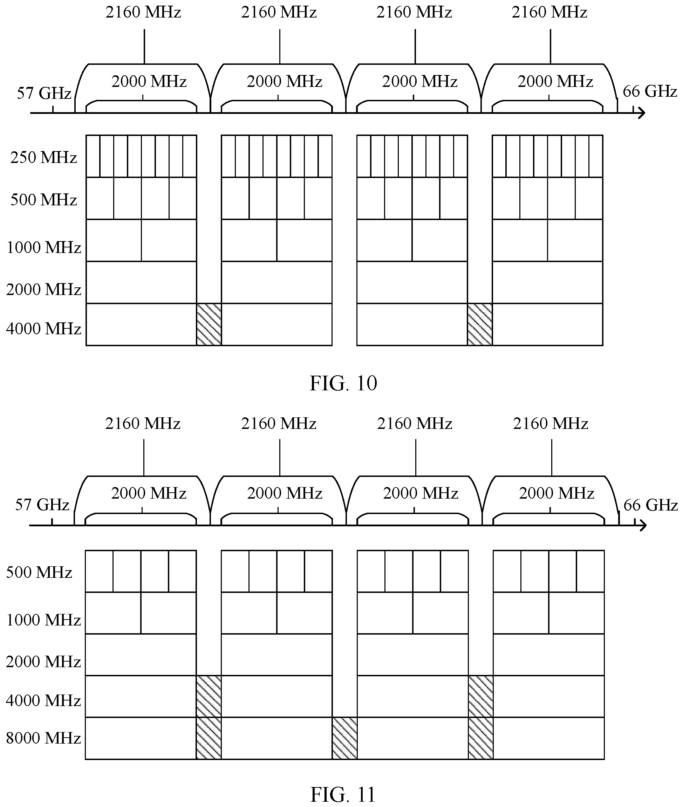

For example, the first frequency band is a 57-66 GHz frequency band. The first frequency band may be divided into 32 250 MHz channels, 16 500 MHz channels, eight 1000 MHz channels, four 2000 MHz channels, or two 4000 MHz channels, as shown in FIG. 10.

A channel division manner for the 57-66 GHz frequency band is described herein. In this division method, remaining bandwidths at a front portion and a rear portion of the first frequency band are respectively 320 MHz and 200 MHz.

250 MHz channel division: The 57-66 GHz frequency band is divided based on the millimeter wave band, to obtain four 2160 MHz frequency bands, which are successively denoted as a $1^{st}$ 2160 MHz frequency band, a $2^{nd}$ 2160 MHz frequency band, a $3^{rd}$ 2160 MHz frequency band, and a $4^{th}$ 2160 MHz frequency band. 2000 MHz is selected from each of the foregoing 2160 MHz frequency bands, to obtain four 2000 MHz frequency bands, which are successively denoted as a $1^{st}$ 2000 MHz frequency band, a $2^{nd}$ 2000 MHz frequency band, a $3^{rd}$ 2000 MHz frequency band, and a $4^{th}$ 2000 MHz frequency band. A center frequency of the 2000 MHz frequency band selected from each 2160 MHz frequency band overlaps a center frequency of the 2160 MHz frequency band. For example, a center frequency of the $1^{st}$ 2160 MHz frequency band overlaps or is the same as a center frequency of the $1^{st}$ 2000 MHz frequency band. It may be understood that, for selection of the 2000 MHz frequency band in this embodiment, refer to the foregoing manner, and details are not described again subsequently.

The $1^{st}$ 2000 MHz frequency band is bisected for three times, to obtain eight 250 MHz channels, where a formula for calculating center frequencies of the eight 250 MHz channels is $f_C(n)[GHz] = 57.445 + (n-1) \times 0.250, 1 \leq n \leq 8$, a formula for calculating a lowest frequency is $f_L(n)[GHz] = 57.320 + (n-1) \times 0.250, 1 \leq n \leq 8$, and a formula for calculating a highest frequency is $f_H(n)[GHz] = 57.570 + (n-1) \times 0.250, 1 \leq n \leq 8$.

The 2nd 2000 MHz frequency band is bisected for three times, to obtain eight 250 MHz channels, where a formula for calculating center frequencies of the eight 250 MHz channels is $f_C(n)[GHz] = 59.605 + (n - 9) \times 0.250, 9 \leq n \leq 16$, a formula for calculating a lowest frequency is $f_L(n)[GHz] = 59.480 + (n - 9) \times 0.250, 9 \leq n \leq 16$, and a formula for calculating a highest frequency is $f_H(n)[GHz] = 59.730 + (n - 9) \times 0.250, 9 \leq n \leq 16$.

The 3rd 2000 MHz frequency band is bisected for three times, to obtain eight 250 MHz channels, where a formula for calculating center frequencies of the eight 250 MHz channels is $f_C(n)[GHz] = 61.765 + (n - 17) \times 0.250, 17 \leq n \leq 24$, a formula for calculating a lowest frequency is $f_L(n)[GHz] = 61.640 + (n - 17) \times 0.250, 17 \leq n \leq 24$, and a formula for calculating a highest frequency is $f_H(n)[GHz] = 61.890 + (n - 17) \times 0.250, 17 \leq n \leq 24$.

The 4th 2000 MHz frequency band is bisected for three times, to obtain eight 250 MHz channels, where a formula for calculating center frequencies of the eight 250 MHz channels is $f_C(n)[GHz] = 63.925 + (n - 25) \times 0.250, 25 \leq n \leq 32$, a formula for calculating a lowest frequency is $f_L(n)[GHz] = 63.800 + (n - 25) \times 0.250, 25 \leq n \leq 32$, and a formula for calculating a highest frequency is $f_H(n)[GHz] = 64.050 + (n - 25) \times 0.250, 25 \leq n \leq 32$.

500 MHz channel division: The 57-66 GHz frequency band is divided based on the millimeter wave band, to obtain four 2160 MHz frequency bands, which are successively denoted as a 1st 2160 MHz frequency band, a 2nd 2160 MHz frequency band, a 3rd 2160 MHz frequency band, and a 4th 2160 MHz frequency band. 2000 MHz is selected from each of the foregoing 2160 MHz frequency bands, to obtain four 2000 MHz frequency bands, which are successively denoted as a 1st 2000 MHz frequency band, a 2nd 2000 MHz frequency band, a 3rd 2000 MHz frequency band, and a 4th 2000 MHz frequency band. A center frequency of the 2000 MHz frequency band selected from each 2160 MHz frequency band overlaps a center frequency of the 2160 MHz frequency band. For example, a center frequency of the 1st 2160 MHz frequency band overlaps or is the same as a center frequency of the 1st 2000 MHz frequency band.

The 1st 2000 MHz frequency band is bisected twice, to obtain four 500 MHz channels, where a formula for calculating center frequencies of the four 500 MHz channels is $f_C(n)[GHz] = 57.570 + (n - 1) \times 0.500, 1 \leq n \leq 4$, a formula for calculating a lowest frequency is $f_L(n)[GHz] = 57.320 + (n - 1) \times 0.500, 1 \leq n \leq 4$, and a formula for calculating a highest frequency is $f_H(n)[GHz] = 57.820 + (n - 1) \times 0.500, 1 \leq n \leq 4$.

The 2nd 2000 MHz frequency band is bisected twice, to obtain four 500 MHz channels, where a formula for calculating center frequencies of the four 500 MHz channels is $f_C(n)[GHz] = 59.730 + (n - 5) \times 0.500, 5 \leq n \leq 8$, a formula for calculating a lowest frequency is $f_L(n)[GHz] = 59.480 + (n - 5) \times 0.500, 5 \leq n \leq 8$, and a formula for calculating a highest frequency is $f_H(n)[GHz] = 59.980 + (n - 5) \times 0.500, 5 \leq n \leq 8$.

The 3rd 2000 MHz frequency band is bisected twice, to obtain four 500 MHz channels, where a formula for calculating center frequencies of the four 500 MHz channels is $f_C(n)[GHz] = 61.890 + (n - 9) \times 0.500, 9 \leq n \leq 12$, a formula for calculating a lowest frequency is $f_L(n)[GHz] = 61.640 + (n - 9) \times 0.500, 9 \leq n \leq 12$, and a formula for calculating a highest frequency is $f_H(n)[GHz] = 62.140 + (n - 9) \times 0.500, 9 \leq n \leq 12$.

The 4th 2000 MHz frequency band is bisected twice, to obtain four 500 MHz channels, where a formula for calculating center frequencies of the four 500 MHz channels is $f_C(n)[GHz] = 64.050 + (n - 13) \times 0.500, 13 \leq n \leq 16$, a formula for calculating a lowest frequency is $f_L(n)[GHz] = 63.800 + (n - 13) \times 0.500, 13 \leq n \leq 16$, and a formula for calculating a highest frequency is $f_H(n)[GHz] = 64.300 + (n - 13) \times 0.500, 13 \leq n \leq 16$.

1000 MHz channel division: The 57-66 GHz frequency band is divided based on the millimeter wave band, to obtain four 2160 MHz frequency bands, which are successively denoted as a 1st 2160 MHz frequency band, a 2nd 2160 MHz frequency band, a 3rd 2160 MHz frequency band, and a 4th 2160 MHz frequency band. 2000 MHz is selected from each of the foregoing 2160 MHz frequency bands, to obtain four 2000 MHz frequency bands, which are successively denoted as a 1st 2000 MHz frequency band, a 2nd 2000 MHz frequency band, a 3rd 2000 MHz frequency band, and a 4th 2000 MHz frequency band. A center frequency of the 2000 MHz frequency band selected from each 2160 MHz frequency band overlaps a center frequency of the 2160 MHz frequency band. For example, a center frequency of the 1st 2160 MHz frequency band overlaps or is the same as a center frequency of the 1st 2000 MHz frequency band.

The 1st 2000 MHz frequency band is bisected once, to obtain two 1000 MHz channels, where center frequencies of the two 1000 MHz channels are $f_C(n)[GHz] = 57.820 + (n - 1) \times 1.000, 1 \leq n \leq 2$, a formula for calculating a lowest frequency is $f_L(n)[GHz] = 57.320 + (n - 1) \times 1.000, 1 \leq n \leq 2$, and a formula for calculating a highest frequency is $f_H(n)[GHz] = 58.320 + (n - 1) \times 1.000, 1 \leq n \leq 2$.

The 2nd 2000 MHz frequency band is bisected once, to obtain two 1000 MHz channels, where center frequencies of the two 1000 MHz channels are $f_C(n)[GHz] = 59.980 + (n - 3) \times 1.000, 3 \leq n \leq 4$, a formula for calculating a lowest frequency is $f_L(n)[GHz] = 59.480 + (n - 3) \times 1.000, 3 \leq n \leq 4$, and a formula for calculating a highest frequency is $f_H(n)[GHz] = 60.480 + (n - 3) \times 1.000, 3 \leq n \leq 4$.

The 3rd 2000 MHz frequency band is bisected once, to obtain two 1000 MHz channels, where center frequencies of the two 1000 MHz channels are $f_C(n)[GHz] = 62.140 + (n - 5) \times 1.000, 5 \leq n \leq 6$, a formula for calculating a lowest frequency is $f_L(n)[GHz] = 61.640 + (n - 5) \times 1.000, 5 \leq n \leq 6$, and a formula for calculating a highest frequency is $f_H(n)[GHz] = 62.640 + (n - 5) \times 1.000, 5 \leq n \leq 6$.

The 4th 2000 MHz frequency band is bisected once, to obtain two 1000 MHz channels, where center frequencies of the two 1000 MHz channels are $f_C(n)[GHz] = 64.300 + (n - 7) \times 1.000, 7 \leq n \leq 8$, a formula for calculating a lowest frequency is $f_L(n)[GHz] = 63.800 + (n - 7) \times 1.000, 7 \le n \le 8$, and a formula for calculating a highest frequency is $f_H(n)[GHz] = 64.800 + (n - 7) \times 1.000, 7 \le n \le 8$.

2000 MHz channel division: The 57-66 GHz frequency band is divided based on the millimeter wave band, to obtain four 2160 MHz frequency bands, which are successively denoted as a 1st 2160 MHz frequency band, a 2nd 2160 MHz frequency band, a 3rd 2160 MHz frequency band, and a 4th 2160 MHz frequency band. 2000 MHz is selected from each of the foregoing 2160 MHz frequency bands, to obtain four 2000 MHz frequency bands, which are successively denoted as a 1st 2000 MHz frequency band, a 2nd 2000 MHz frequency band, a 3rd 2000 MHz frequency band, and a 4th 2000 MHz frequency band. A center frequency of the 2000 MHz frequency band selected from each 2160 MHz frequency band overlaps a center frequency of the 2160 MHz frequency band. For example, a center frequency of the 1st 2160 MHz frequency band overlaps or is the same as a center frequency of the 1st 2000 MHz frequency band. A formula for calculating center frequencies of the four 2000 MHz channels is $f_C(n)[GHz] = 58.320 + (n - 1) \times 2.160, 1 \le n \le 4$, a formula for calculating a lowest frequency is $f_L(n)[GHz] = 57.320 + (n - 1) \times 2.160, 1 \le n \le 4$, and a formula for calculating a highest frequency is $f_H(n)[GHz] = 59.320 + (n - 1) \times 2.160, 1 \le n \le 4$.

4000 MHz channel division: The 57-66 GHz frequency band is divided based on the millimeter wave band, to obtain four 2160 MHz frequency bands, which are successively denoted as a 1st 2160 MHz frequency band, a 2nd 2160 MHz frequency band, a 3rd 2160 MHz frequency band, and a 4th 2160 MHz frequency band. 2000 MHz is selected from each of the foregoing 2160 MHz frequency bands, to obtain four 2000 MHz frequency bands, which are successively denoted as a 1st 2000 MHz frequency band, a 2nd 2000 MHz frequency band, a 3rd 2000 MHz frequency band, and a 4th 2000 MHz frequency band. A center frequency of the 2000 MHz frequency band selected from each 2160 MHz frequency band overlaps a center frequency of the 2160 MHz frequency band. For example, a center frequency of the 1st 2160 MHz frequency band overlaps or is the same as a center frequency of the 1st 2000 MHz frequency band. Every two of the four 2000 MHz frequency bands are aggregated in ascending order of frequencies, to obtain two 4000 MHz channels. It may also be understood that the 1st 2000 MHz band and the 2nd 2000 MHz band are aggregated to obtain a 1st 4000 MHz channel, and the 3rd 2000 MHz band and the 4th 2000 MHz band are aggregated to obtain a 2nd 4000 MHz channel. The 1st 4000 MHz channel has a center frequency of 59.400, a lowest frequency of 57.320, and a highest frequency of 61.480. The 2nd 4000 MHz channel has a center frequency of 63.720, a lowest frequency of 61.640, and a highest frequency of 65.800.

Each 4000 MHz channel is formed by aggregating two inconsecutive 2000 MHz channels.

For example, the first frequency band includes a 42.3-47.0 GHz frequency band and a 47.2-48.4 GHz frequency band. The first frequency band may be divided into 20 250 MHz channels, 10 500 MHz channels, five 1000 MHz channels, two 2000 MHz channels, or one 4000 MHz channel. In addition, center frequencies of the 500 MHz channel and the 1000 MHz channel need to respectively overlap center frequencies of a 540 MHz channel and a 1080 MHz channel in the 42.3-47.0 GHz frequency band and the 47.2-48.4 GHz frequency band in Embodiment 3. In this division method, remaining bandwidths at a front portion and a rear portion of the 42.3-47.0 GHz frequency band are respectively 110 MHz and 310 MHz, and remaining bandwidths at a front portion and a rear portion of the 47.2-48.4 GHz frequency band are respectively 70 MHz and 90 MHz.

250 MHz channel division: 42.3-47.0 GHz is divided based on the millimeter wave band, to obtain eight 540 MHz frequency bands, and 500 MHz is selected from each 540 MHz frequency band, to obtain eight 500 MHz frequency bands. A center frequency of a 500 MHz frequency band selected from one 500 MHz frequency band overlaps a center frequency of the 540 MHz frequency band. Each 500 MHz frequency band is bisected once, to obtain two 250 MHz channels.

A formula for calculating a center frequency of a 1st 250 MHz channel in each 500 MHz frequency band is

$$f_C(n)[GHz] = 42.535 + \frac{(n-1)}{2} \times 0.540$$

, $n = 1,3,5, ...,15$ , a formula for calculating a lowest frequency is

$$f_C(n)[GHz] = 42.410 + \frac{(n-1)}{2} \times 0.540$$

, $n = 1,3,5, ...,15$, and a formula for calculating a highest frequency is

$$f_C(n)[GHz] = 42.660 + \frac{(n-1)}{2} \times 0.540$$

, $n = 1,3,5, ...,15$.

A formula for calculating a center frequency of a 2nd 250 MHz channel in each 500 MHz frequency band is

$$f_C(n)[GHz] = 42.875 + \left(\frac{n}{2} - 1\right) \times 0.540$$

, $n = 2,4,6, ...,16$, a formula for calculating a lowest frequency is

$$f_C(n)[GHz] = 42.660 + \left(\frac{n}{2} - 1\right) \times 0.540$$

, $n = 2,4,6, ...,16$, and a formula for calculating a highest frequency

is $f_C(n)[GHz] = 42.910 + \left(\frac{n}{2} - 1\right) \times 0.540$, $n = 2,4,6, ...,16$.

47.2-48.4 GHz is divided based on the millimeter wave band, to obtain two 540 MHz frequency bands, and 500 MHz is selected from each 540 MHz frequency band, to obtain two 500 MHz frequency bands. A center frequency of a 500 MHz frequency band selected from one 500 MHz frequency band overlaps a center frequency of the 540 MHz frequency band. Each 500 MHz frequency band is bisected once, to obtain two 250 MHz channels.

A formula for calculating a center frequency of a 1st 250 MHz channel in each 500 MHz frequency band is

$$f_C(n)[GHz] = 47.395 + \frac{(n-1)}{2} \times 0.540$$

, $n$ = 17,19, a formula for calculating a lowest frequency is

$$f_C(n)[GHz] = 47.270 + \frac{(n-1)}{2} \times 0.540$$

, $n$ = 17,19, and a formula for calculating a highest frequency is

$$f_C(n)[GHz] = 47.520 + \frac{(n-1)}{2} \times 0.540$$

, $n$ = 17,19.

A formula for calculating a center frequency of a 2nd 250 MHz channel in each 500 MHz frequency band is

$$f_C(n)[GHz] = 47.645 + \left(\frac{n}{2} - 1\right) \times 0.540$$

, $n$ = 18,20 , a formula for calculating a lowest frequency is

$$f_C(n)[GHz] = 47.520 + \left(\frac{n}{2} - 1\right) \times 0.540$$

, $n$ = 18,20, and a formula for calculating a highest frequency is

$$f_C(n)[GHz] = 47.770 + \left(\frac{n}{2} - 1\right) \times 0.540$$

, $n$ = 18,20.

500 MHz channel division: 42.3-47.0 GHz is divided based on the millimeter wave band, to obtain eight 540 MHz frequency bands, and 500 MHz is selected from each 540 MHz frequency band, to obtain eight 500 MHz frequency bands. A center frequency of a 500 MHz frequency band selected from one 500 MHz frequency band overlaps a center frequency of the 540 MHz frequency band.

A formula for calculating a center frequency of each 500 MHz frequency band is $f_C(n)[GHz]$ = 42.660 + $(n$ - 1) $\times$ 0.540,$1 \le n \le 8$ , a formula for calculating a lowest frequency is $f_L(n)[GHz]$ = 42.410 + $(n$ - 1) $\times$ 0.540,$1 \le n \le 8$, and a formula for calculating a highest frequency is $f_H(n)[GHz]$ = 42.910 + $(n$ - 1) $\times$ 0.540,$1 \le n \le 8$.

47.2-48.4 GHz is divided based on the millimeter wave band, to obtain two 540 MHz frequency bands, and 500 MHz is selected from each 540 MHz frequency band, to obtain two 500 MHz frequency bands. A center frequency of a 500 MHz frequency band selected from one 500 MHz frequency band overlaps a center frequency of the 540 MHz frequency band. Each 500 MHz frequency band is bisected once, to obtain two 250 MHz channels.

A formula for calculating a center frequency of each 500 MHz frequency band is $f_C(n)[GHz]$ = 47.520 + $(n$ - 9) $\times$ 0.540,$9 \le n \le 10$, a formula for calculating a lowest frequency is $f_L(n)[GHz]$ = 47.270 + $(n$ - 9) $\times$ 0.540,$9 \le n \le 10$, and a formula for calculating a highest frequency is $f_H(n)[GHz]$ = 47.770 + $(n$ - 9) $\times$ 0.540,$9 \le n \le 10$.

1000 MHz channel division: 42.3-47.0 GHz is divided based on the millimeter wave band, to obtain eight 540 MHz frequency bands, and 500 MHz is selected from each 540 MHz frequency band, to obtain eight 500 MHz frequency bands. A center frequency of a 500 MHz frequency band selected from one 500 MHz frequency band overlaps a center frequency of the 540 MHz frequency band. Every two of the eight 500 MHz frequency bands are aggregated in ascending order of frequencies, to obtain four 1000 MHz channels.

A formula for calculating a center frequency of the 1000 MHz channel is $f_C(n)[GHz]$ = 42.930 + $(n$ - 1) $\times$ 1.080,$1 \le n \le 4$, a formula for calculating a lowest frequency is $f_L(n)[GHz]$ = 42.430 + $(n$ - 1) $\times$ 1.080,$1 \le n \le 4$, and a formula for calculating a highest frequency is $f_H(n)[GHz]$ = 43.430 + $(n$ - 1) $\times$ 1.080,$1 \le n \le 4$.

47.2-48.4 GHz is divided based on the millimeter wave band, to obtain two 540 MHz frequency bands, and 500 MHz is selected from each 540 MHz frequency band, to obtain two 500 MHz frequency bands. A center frequency of a 500 MHz frequency band selected from one 500 MHz frequency band overlaps a center frequency of the 540 MHz frequency band. The two 500 MHz frequency bands are aggregated, to obtain one 1000 MHz channel.

A formula for calculating a center frequency of the 1000 MHz channel is $f_C(n)[GHz]$ = 47.790 + $(n$ - 5) $\times$ 1.080, $n$ = 5, a formula for calculating a lowest frequency is $f_L(n)[GHz]$ = 47.290 + $(n$ - 5) $\times$ 1.080, $n$ = 5, and a formula for calculating a highest frequency is $f_H(n)[GHz]$ = 48.290 + $(n$ - 5) $\times$ 1.080, $n$ = 5.

2000 MHz channel division: 42.3-47.0 GHz is divided based on the millimeter wave band, to obtain eight 540 MHz frequency bands, and 500 MHz is selected from each 540 MHz frequency band, to obtain eight 500 MHz frequency bands. A center frequency of a 500 MHz frequency band selected from one 500 MHz frequency band overlaps a center frequency of the 540 MHz frequency band. Every four of the eight 500 MHz frequency bands are aggregated in ascending order of frequencies, to obtain two 2000 MHz channels.

One 2000 MHz channel has a center frequency of 43.47, a lowest frequency of 42.43, and a highest frequency of 44.51. The other 2000 MHz channel has a center frequency of 45.63, a lowest frequency of 44.59, and a highest frequency of 46.67. Each 2000 MHz channel is formed by aggregating two inconsecutive 1000 MHz channels.

4000 MHz channel division: 42.3-47.0 GHz is divided based on the millimeter wave band, to obtain eight 540 MHz frequency bands, and 500 MHz is selected from each 540 MHz frequency band, to obtain eight 500 MHz frequency bands.

A center frequency of a 500 MHz frequency band selected from one 500 MHz frequency band overlaps a center frequency of the 540 MHz frequency band. The eight 500 MHz frequency bands are aggregated, to obtain one 4000 MHz channel. The 4000 MHz channel has a center frequency of 44.55, a lowest frequency of 42.43, and a highest frequency of 46.67. The channel is formed by aggregating eight inconsecutive 500 MHz channels.

For example, the first frequency band is a 56.16-73.44 GHz frequency band. The first frequency band may be divided into 64 250 MHz channels, 32 500 MHz channels, 16 1000 MHz channels, eight 2000 MHz channels, four 4000 MHz channels, or two 8000 MHz channels.

A channel division manner for the 56.16-73.44 GHz frequency band is described herein. In this division method, remaining bandwidths at a front portion and a rear portion of the first frequency band are respectively 80 MHz and 80 MHz.

250 MHz channel division: The 56.16-73.44 GHz frequency band is divided based on the millimeter wave band, to obtain eight 2160 MHz frequency bands, and 2000 MHz is selected from each 2160 MHz frequency band, to obtain eight 2000 MHz frequency bands. A center frequency of a 2000 MHz frequency band selected from one 2160 MHz frequency band overlaps a center frequency of the 2160 MHz frequency band. Each 2000 MHz is bisected for three times, to obtain eight 250 MHz channels.

A formula for calculating a center frequency of a $1^{st}$ 250 MHz channel in each 2000 MHz frequency band is

$$f_C(n)[GHz] = 56.365 + \frac{(n-1)}{8} \times 2.160$$

, $n = 1,9,17, ...,57$ , a formula for calculating a lowest frequency is

$$f_L(n)[GHz] = 56.240 + \frac{(n-1)}{8} \times 2.160$$

, $n = 1,9,17, ...,57$, and a formula for calculating a highest frequency is

$$f_H(n)[GHz] = 56.490 + \frac{(n-1)}{8} \times 2.160$$

, $n = 1,9,17, ... , 57$.

A formula for calculating a center frequency of a $2^{nd}$ 250 MHz channel in each 2000 MHz frequency band is

$$f_C(n)[GHz] = 56.615 + \frac{(n-2)}{8} \times 2.160$$

, $n = 2,10,18, ...,58$, a formula for calculating a lowest frequency is

$$f_L(n)[GHz] = 56.490 + \frac{(n-2)}{8} \times 2.160$$

, $n = 2,10,18, ...,58$, and a formula for calculating a highest frequency is

$$f_H(n)[GHz] = 56.740 + \frac{(n-2)}{8} \times 2.160$$

, $n = 2,10,18, ...,58$.

A formula for calculating a center frequency of a $3^{rd}$ 250 MHz channel in each 2000 MHz frequency band is

$$f_C(n)[GHz] = 56.865 + \frac{(n-3)}{8} \times 2.160$$

, $n = 3,11,19, ...,59$, a formula for calculating a lowest frequency is

$$f_L(n)[GHz] = 56.740 + \frac{(n-3)}{8} \times 2.160$$

, $n = 3,11,19, ...,59$, and a formula for calculating a highest frequency is

$$f_H(n)[GHz] = 56.990 + \frac{(n-3)}{8} \times 2.160$$

, $n = 3,11,19, ...,59$.

A formula for calculating a center frequency of a $4^{th}$ 250 MHz channel in each 2000 MHz frequency band is

$$f_C(n)[GHz] = 57.115 + \frac{(n-4)}{8} \times 2.160$$

$n = 4,12,20, ...,60$, a formula for calculating a lowest frequency is

$$f_L(n)[GHz] = 56.990 + \frac{(n-4)}{8} \times 2.160$$

, $n = 4,12,20, ...,60$, and a formula for calculating a highest frequency is

$$f_H(n)[GHz] = 57.240 + \frac{(n-4)}{8} \times 2.160$$

, $n = 4,12,20, ...,60$.

A formula for calculating a center frequency of a fifth 250 MHz channel in each 2000 MHz frequency band is

$$f_C(n)[GHz] = 57.365 + \frac{(n-5)}{8} \times 2.160$$

, $n = 5,13,21, ...,61$, a formula for calculating a lowest frequency is

$$f_L(n)[GHz] = 57.240 + \frac{(n-5)}{8} \times 2.160$$

, $n = 5,13,21, ...,61$, and a formula for calculating a highest frequency is

$$f_H(n)[GHz] = 57.490 + \frac{(n-5)}{8} \times 2.160$$

, $n = 5,13,21, ...,61$.

A formula for calculating a center frequency of a sixth 250 MHz channel in each 2000 MHz frequency band is

$$f_C(n)[GHz] = 57.615 + \frac{(n-6)}{8} \times 2.160$$

, $n = 6,14,22, ...,62$, a formula for calculating a lowest frequency is

$$f_L(n)[GHz] = 57.490 + \frac{(n-6)}{8} \times 2.160$$

, $n = 6,14,22, ...,62$, and a formula for calculating a highest frequency is

$$f_H(n)[GHz] = 57.740 + \frac{(n-6)}{8} \times 2.160$$

, $n = 6,14,22, ...,62$.

A formula for calculating a center frequency of a seventh 250 MHz channel in each 2000 MHz frequency band is

$$f_C(n)[GHz] = 57.865 + \frac{(n-7)}{8} \times 2.160$$

, $n = 7,15,23, ...,63$, a formula for calculating a lowest frequency is

$$f_L(n)[GHz] = 57.740 + \frac{(n-7)}{8} \times 2.160$$

, $n = 7,15,23, ...,63$, and a formula for calculating a highest frequency is

$$f_H(n)[GHz] = 57.990 + \frac{(n-7)}{8} \times 2.160$$

, $n = 7,15,23, ...,63$.

A formula for calculating a center frequency of an eighth 250 MHz channel in each 2000 MHz frequency band is

$$f_C(n)[GHz] = 58.115 + \frac{(n-8)}{8} \times 2.160$$

, $n = 8,16,24, ...,64$, a formula for calculating a lowest frequency is

$$f_L(n)[GHz] = 57.990 + \frac{(n-8)}{8} \times 2.160$$

, $n = 8,16,24, ...,64$, and a formula for calculating a highest frequency is

$$f_H(n)[GHz] = 58.240 + \frac{(n-8)}{8} \times 2.160$$

, $n = 8,16,24, ...,64$.

500 MHz channel division: The 56.16-73.44 GHz frequency band is divided based on the millimeter wave band, to obtain eight 2160 MHz frequency bands, and 2000 MHz is selected from each 2160 MHz frequency band, to obtain eight 2000 MHz frequency bands. A center frequency of a 2000 MHz frequency band selected from one 2160 MHz frequency band overlaps a center frequency of the 2160 MHz frequency band. Each 2000 MHz is bisected twice, to obtain four 500 MHz channels.

A formula for calculating a center frequency of a 1st 500 MHz channel in each 2000 MHz frequency band is

$$f_C(n)[GHz] = 56.49 + \frac{(n-1)}{4} \times 2.160$$

, $n = 1,5,9, ...,29$ , a formula for calculating a lowest frequency is

$$f_L(n)[GHz] = 56.240 + \frac{(n-1)}{4} \times 2.160$$

, $n = 1,5,9, ...,29$, and a formula for calculating a highest frequency is

$$f_H(n)[GHz] = 56.740 + \frac{(n-1)}{4} \times 2.160$$

, $n = 1,5,9, ...,29$.

A formula for calculating a center frequency of a 2nd 500 MHz channel in each 2000 MHz frequency band is

$$f_C(n)[GHz] = 56.990 + \frac{(n-2)}{4} \times 2.160$$

, $n = 2,6,10, ...,30$ , a formula for calculating a lowest frequency is

$$f_L(n)[GHz] = 56.740 + \frac{(n-2)}{4} \times 2.160$$

, $n = 2,6,10, ...,30$, and a formula for calculating a highest frequency is

$$f_H(n)[GHz] = 57.240 + \frac{(n-2)}{4} \times 2.160$$

, $n = 2,6,10, ...,30$.

A formula for calculating a center frequency of a 3rd 500 MHz channel in each 2000 MHz frequency band is

$$f_C(n)[GHz] = 57.490 + \frac{(n-3)}{4} \times 2.160$$

, $n = 3,7,11, ...,31$, a formula for calculating a lowest frequency is

$$f_L(n)[GHz] = 57.240 + \frac{(n-3)}{4} \times 2.160$$

, $n = 3,7,11, ...,31$, and a formula for calculating a highest frequency is

$$f_H(n)[GHz] = 57.740 + \frac{(n-3)}{4} \times 2.160$$

, $n = 3,7,11, ...,31$.

A formula for calculating a center frequency of a 4th 500 MHz channel in each 2000 MHz frequency band is

$$f_C(n)[GHz] = 57.990 + \frac{(n-4)}{4} \times 2.160$$

, $n = 4,8,12, ...,32$ , a formula for calculating a lowest frequency is

$$f_L(n)[GHz] = 57.740 + \frac{(n-4)}{4} \times 2.160$$

, $n = 4,8,12, ...,32$, and a formula for calculating a highest frequency is

$$f_H(n)[GHz] = 58.240 + \frac{(n-4)}{4} \times 2.160$$

, $n = 4,8,12, ...,32$.

1000 MHz channel division: The 56.16-73.44 GHz frequency band is divided based on the millimeter wave band, to obtain eight 2160 MHz frequency bands, and 2000 MHz is selected from each 2160 MHz frequency band, to obtain eight 2000 MHz frequency bands. A center frequency of a 2000 MHz frequency band selected from one 2160 MHz frequency band overlaps a center frequency of the 2160 MHz frequency band. Each 2000 MHz is bisected once, to obtain two 1000 MHz channels.

A formula for calculating a center frequency of a 1st 1000 MHz channel in each 2000 MHz frequency band is

$$f_C(n)[GHz] = 56.740 + \frac{(n-1)}{2} \times 2.160$$

, $n$ = 1,3,5, ...,15 , a formula for calculating a lowest frequency is

$$f_L(n)[GHz] = 56.240 + \frac{(n-1)}{2} \times 2.160$$

, $n$ = 1,3,5, ...,15, and a formula for calculating a highest frequency is

$$f_H(n)[GHz] = 57.240 + \frac{(n-1)}{2} \times 2.160$$

, $n$ = 1,3,5, ...,15.

A formula for calculating a center frequency of a 2nd 1000 MHz channel in each 2000 MHz frequency band is

$$f_C(n)[GHz] = 57.740 + \frac{(n-2)}{2} \times 2.160$$

, $n$ = 2,4,6, ...,16 , a formula for calculating a lowest frequency is

$$f_L(n)[GHz] = 57.240 + \frac{(n-2)}{2} \times 2.160$$

, $n$ = 2,4,6, ...,16, and a formula for calculating a highest frequency is

$$f_H(n)[GHz] = 58.240 + \frac{(n-2)}{2} \times 2.160$$

, $n$ = 2,4,6, ...,16.

2000 MHz channel division: The 56.16-73.44 GHz frequency band is divided based on the millimeter wave band, to obtain eight 2160 MHz frequency bands, and 2000 MHz is selected from each 2160 MHz frequency band, to obtain eight 2000 MHz frequency bands. A center frequency of a 2000 MHz frequency band selected from one 2160 MHz frequency band overlaps a center frequency of the 2160 MHz frequency band.

A formula for calculating a center frequency of each 2000 MHz frequency band is $f_C(n)[GHz]$ = 57.240 + $(n$ - 1) $\times$ 2.160, $1 \leq n \leq 8$ , a formula for calculating a lowest frequency is $f_L(n)[GHz]$ = 56.240 + $(n$ - 1) $\times$ 2.160, $1 \leq n \leq 8$, and a formula for calculating a highest frequency is $f_H(n)[GHz]$ = 58.240 + $(n$ - 1) $\times$ 2.160, $1 \leq n \leq 8$.

4000 MHz channel division: The 56.16-73.44 GHz frequency band is divided based on the millimeter wave band, to obtain eight 2160 MHz frequency bands, and 2000 MHz is selected from each 2160 MHz frequency band, to obtain eight 2000 MHz frequency bands. A center frequency of a 2000 MHz frequency band selected from one 2160 MHz frequency band overlaps a center frequency of the 2160 MHz frequency band.

Every two of the eight 2000 MHz frequency bands are aggregated in ascending order of frequencies, to obtain four 4000 MHz channels, where each 4000 MHz channel is obtained by aggregating two inconsecutive 2000 MHz channels. A formula for calculating center frequencies of the four 4000 MHz channels is $f_C(n)[GHz]$ = 58.320 + $(n$ - 1) $\times$ 4.320, $1 \leq n \leq 4$, a formula for calculating a lowest frequency is $f_L(n)[GHz]$ = 56.240 + $(n$ - 1) $\times$ 4.320, $1 \leq n \leq 4$, and a formula for calculating a highest frequency is $f_H(n)[GHz]$ = 60.400 + $(n$ - 1) $\times$ 4.320, $1 \leq n \leq 4$.

Example 11: The minimum channel bandwidth supported in the first frequency band is 500 MHz, in other words, the bandwidth of the first fundamental channel is 500 MHz. The bandwidth supported in the first frequency band may include one or more bandwidths of 500 MHz, 1000 MHz, 2000 MHz, 4000 MHz, and 8000 MHz. In this example, a center frequency of 2000 MHz overlaps a center frequency of 2160 MHz obtained through division based on the millimeter wave band. A 1000 MHz channel is obtained by performing bisection on the 2000 MHz channel, and a 500 MHz channel is obtained by performing bisection twice on the 2000 MHz channel. A 4000 MHz channel is obtained by aggregating two 2000 MHz channels. An 8000 MHz channel is obtained by aggregating four 2000 MHz channels. It should be understood that the two 2000 MHz channels included in the 4000 MHz bandwidth are inconsecutive, and the four 2000 MHz channels included in the 8000 MHz bandwidth are inconsecutive.

Optionally, for the quantity of subcarriers (or the IDFT size/DFT size) corresponding to each channel bandwidth in a channel division manner in Example 11, refer to related descriptions of the example 9 in Example 3 in Embodiment 1. Details are not described herein again.

For example, the first frequency band is a 57-66 GHz frequency band. The first frequency band may be divided into 16 500 MHz channels, eight 1000 MHz channels, four 2000 MHz channels, two 4000 MHz channels, or one 8000 MHz channel, as shown in FIG. 11.

A channel division manner for the 57-66 GHz frequency band is described herein. In this division method, remaining bandwidths at a front portion and a rear portion of the first frequency band are respectively 320 MHz and 200 MHz.

500 MHz channel division: The 57-66 GHz frequency band is divided based on the millimeter wave band, to obtain four 2160 MHz frequency bands, and 2000 MHz is selected from each 2160 MHz frequency band, to obtain four 2000 MHz frequency bands. A center frequency of a 2000 MHz frequency band selected from one 2160 MHz frequency band overlaps a center frequency of the 2160 MHz frequency band.

A 1st 2000 MHz frequency band is bisected twice, to obtain four 500 MHz channels, where a formula for calculating center frequencies of the four 500 MHz channels is $f_C(n)[GHz] = 57.570 + (n - 1) \times 0.500, 1 \leq n \leq 4$, a formula for calculating a lowest frequency is $f_L(n)[GHz] = 57.320 + (n - 1) \times 0.500, 1 \leq n \leq 4$, and a formula for calculating a highest frequency is $f_H(n)[GHz] = 57.820 + (n - 1) \times 0.500, 1 \leq n \leq 4$.

A 2nd 2000 MHz frequency band is bisected twice, to obtain four 500 MHz channels, where a formula for calculating center frequencies of the four 500 MHz channels is $f_C(n)[GHz] = 59.730 + (n - 5) \times 0.500, 5 \leq n \leq 8$, a formula for calculating a lowest frequency is $f_L(n)[GHz] = 59.480 + (n - 5) \times 0.500, 5 \leq n \leq 8$, and a formula for calculating a highest frequency is $f_H(n)[GHz] = 59.980 + (n - 5) \times 0.500, 5 \leq n \leq 8$.

A 3rd 2000 MHz frequency band is bisected twice, to obtain four 500 MHz channels, where a formula for calculating center frequencies of the four 500 MHz channels is $f_C(n)[GHz] = 61.890 + (n - 9) \times 0.500, 9 \leq n \leq 12$, a formula for calculating a lowest frequency is $f_L(n)[GHz] = 61.640 + (n - 9) \times 0.500, 9 \leq n \leq 12$, and a formula for calculating a highest frequency is $f_H(n)[GHz] = 62.140 + (n - 9) \times 0.500, 9 \leq n \leq 12$.

A 4th 2000 MHz frequency band is bisected twice, to obtain four 500 MHz channels, where a formula for calculating center frequencies of the four 500 MHz channels is $f_C(n)[GHz] = 64.050 + (n - 13) \times 0.500, 13 \leq n \leq 16$, a formula for calculating a lowest frequency is $f_L(n)[GHz] = 63.800 + (n - 13) \times 0.500, 13 \leq n \leq 16$, and a formula for calculating a highest frequency is $f_H(n)[GHz] = 64.300 + (n - 13) \times 0.500, 13 \leq n \leq 16$.

1000 MHz channel division: The 57-66 GHz frequency band is divided based on the millimeter wave band, to obtain four 2160 MHz frequency bands, and 2000 MHz is selected from each 2160 MHz frequency band, to obtain four 2000 MHz frequency bands. A center frequency of a 2000 MHz frequency band selected from one 2160 MHz frequency band overlaps a center frequency of the 2160 MHz frequency band.

A 1st 2000 MHz frequency band is bisected once, to obtain two 1000 MHz channels, where center frequencies of the two 1000 MHz channels are $f_C(n)[GHz] = 57.820 + (n - 1) \times 1.000, 1 \leq n \leq 2$, a formula for calculating a lowest frequency is $f_L(n)[GHz] = 57.320 + (n - 1) \times 1.000, 1 \leq n \leq 2$, and a formula for calculating a highest frequency is $f_H(n)[GHz] = 58.320 + (n - 1) \times 1.000, 1 \leq n \leq 2$.

A 2nd 2000 MHz frequency band is bisected once, to obtain two 1000 MHz channels, where center frequencies of the two 1000 MHz channels are $f_C(n)[GHz] = 59.980 + (n - 3) \times 1.000, 3 \leq n \leq 4$, a formula for calculating a lowest frequency is $f_L(n)[GHz] = 59.480 + (n - 3) \times 1.000, 3 \leq n \leq 4$, and a formula for calculating a highest frequency is $f_H(n)[GHz] = 60.480 + (n - 3) \times 1.000, 3 \leq n \leq 4$.

A 3rd 2000 MHz frequency band is bisected once, to obtain two 1000 MHz channels, where center frequencies of the two 1000 MHz channels are $f_C(n)[GHz] = 62.140 + (n - 5) \times 1.000, 5 \leq n \leq 6$, a formula for calculating a lowest frequency is $f_L(n)[GHz] = 61.640 + (n - 5) \times 1.000, 5 \leq n \leq 6$, and a formula for calculating a highest frequency is $f_H(n)[GHz] = 62.640 + (n - 5) \times 1.000, 5 \leq n \leq 6$.

A 4th 2000 MHz frequency band is bisected once, to obtain two 1000 MHz channels, where center frequencies of the two 1000 MHz channels are $f_C(n)[GHz] = 64.300 + (n - 7) \times 1.000, 7 \leq n \leq 8$, a formula for calculating a lowest frequency is $f_L(n)[GHz] = 63.800 + (n - 7) \times 1.000, 7 \leq n \leq 8$, and a formula for calculating a highest frequency is $f_H(n)[GHz] = 64.800 + (n - 7) \times 1.000, 7 \leq n \leq 8$.

2000 MHz channel division: The 57-66 GHz frequency band is divided based on the millimeter wave band, to obtain four 2160 MHz frequency bands, and 2000 MHz is selected from each 2160 MHz frequency band, to obtain four 2000 MHz frequency bands. A center frequency of a 2000 MHz frequency band selected from one 2160 MHz frequency band overlaps a center frequency of the 2160 MHz frequency band. A formula for calculating center frequencies of the four 2000 MHz channels is $f_C(n)[GHz] = 58.320 + (n - 1) \times 2.160, 1 \leq n \leq 4$, a formula for calculating a lowest frequency is $f_L(n)[GHz] = 57.320 + (n - 1) \times 2.160, 1 \leq n \leq 4$, and a formula for calculating a highest frequency is $f_H(n)[GHz] = 59.320 + (n - 1) \times 2.160, 1 \leq n < 4$.

4000 MHz channel division: The 57-66 GHz frequency band is divided based on the millimeter wave band, to obtain four 2160 MHz frequency bands, and 2000 MHz is selected from each 2160 MHz frequency band, to obtain four 2000 MHz frequency bands. A center frequency of a 2000 MHz frequency band selected from one 2160 MHz frequency band overlaps a center frequency of the 2160 MHz frequency band.

Every two of the four 2000 MHz frequency bands are aggregated in ascending order of frequencies, to obtain two 4000 MHz channels. One 4000 MHz channel has a center frequency of 59.400, a lowest frequency of 57.320, and a highest frequency of 61.480. The other 4000 MHz channel has a center frequency of 63.720, a lowest frequency of 61.640, and a highest frequency of 65.800.

Each 4000 MHz channel is formed by aggregating two inconsecutive 2000 MHz channels.

8000 MHz channel division: The 57-66 GHz frequency band is divided based on the millimeter wave band, to obtain four 2160 MHz frequency bands, and 2000 MHz is selected from each 2160 MHz frequency band, to obtain four 2000 MHz frequency bands. A center frequency of a 2000 MHz frequency band selected from one 2160 MHz frequency band overlaps a center frequency of the 2160 MHz frequency band. The four 2000 MHz frequency bands are aggregated, to obtain an 8000 MHz channel. The 8000 MHz channel has a center frequency of 61.560, a lowest frequency of 57.320, and a highest frequency of 65.800. The channel is formed by aggregating four inconsecutive 2000 MHz channels.

For example, the first frequency band includes a 42.3-47.0 GHz frequency band and a 47.2-48.4 GHz frequency band. The first frequency band may be divided into 10 500 MHz channels, five 1000 MHz channels, two 2000 MHz channels, or one 4000 MHz channel. In addition, center frequencies of the 500 MHz channel and the 1000 MHz channel need to respectively overlap center frequencies of a 540 MHz channel and a 1080 MHz channel in the 42.3-47.0 GHz frequency band and the 47.2-48.4 GHz frequency band in Embodiment 3. In this division method, remaining bandwidths at a front portion and a rear portion of the 42.3-47.0 GHz frequency band are respectively 110 MHz and 310 MHz, and remaining bandwidths at a front portion and a rear portion of the 47.2-48.4 GHz frequency band are respectively 70 MHz and 90 MHz.

500 MHz channel division: 42.3-47.0 GHz is divided based on the millimeter wave band, to obtain eight 540 MHz frequency bands, and 500 MHz is selected from each 540 MHz frequency band, to obtain eight 500 MHz frequency bands. A center frequency of a 500 MHz frequency band selected from one 500 MHz frequency band overlaps a center frequency of the 540 MHz frequency band.

A formula for calculating a center frequency of each 500 MHz frequency band is $f_C(n)[GHz] = 42.660 + (n - 1) \times 0.540, 1 \leq n \leq 8$, a formula for calculating a lowest frequency is $f_L(n)[GHz] = 42.410 + (n - 1) \times 0.540, 1 \leq n \leq 8$, and a formula for calculating a highest frequency is $f_H(n)[GHz] = 42.910 + (n - 1) \times 0.540, 1 \leq n \leq 8$.

47.2-48.4 GHz is divided based on the millimeter wave band, to obtain two 540 MHz frequency bands, and 500 MHz is selected from each 540 MHz frequency band, to obtain two 500 MHz frequency bands. A center frequency of a 500 MHz frequency band selected from one 500 MHz frequency band overlaps a center frequency of the 540 MHz frequency band. Each 500 MHz frequency band is bisected once, to obtain two 250 MHz channels.

A formula for calculating a center frequency of each 500 MHz frequency band is $f_C(n)[GHz] = 47.520 + (n - 9) \times 0.540, 9 \leq n \leq 10$, a formula for calculating a lowest frequency is $f_L(n)[GHz] = 47.270 + (n - 9) \times 0.540, 9 \leq n \leq 10$, and a formula for calculating a highest frequency is $f_H(n)[GHz] = 47.770 + (n - 9) \times 0.540, 9 \leq n \leq 10$.

1000 MHz channel division: 42.3-47.0 GHz is divided based on the millimeter wave band, to obtain eight 540 MHz frequency bands, and 500 MHz is selected from each 540 MHz frequency band, to obtain eight 500 MHz frequency bands. A center frequency of a 500 MHz frequency band selected from one 500 MHz frequency band overlaps a center frequency of the 540 MHz frequency band. Every two of the eight 500 MHz frequency bands are aggregated in ascending order of frequencies, to obtain four 1000 MHz channels.

A formula for calculating a center frequency of the 1000 MHz channel is $f_C(n)[GHz] = 42.930 + (n - 1) \times 1.080, 1 \leq n \leq 4$, a formula for calculating a lowest frequency is $f_L(n)[GHz] = 42.430 + (n - 1) \times 1.080, 1 \leq n \leq 4$, and a formula for calculating a highest frequency is $f_H(n)[GHz] = 43.430 + (n - 1) \times 1.080, 1 \leq n \leq 4$.

47.2-48.4 GHz is divided based on the millimeter wave band, to obtain two 540 MHz frequency bands, and 500 MHz is selected from each 540 MHz frequency band, to obtain two 500 MHz frequency bands. A center frequency of a 500 MHz frequency band selected from one 500 MHz frequency band overlaps a center frequency of the 540 MHz frequency band. The two 500 MHz frequency bands are aggregated, to obtain one 1000 MHz channel.

A formula for calculating a center frequency of the 1000 MHz channel is $f_C(n)[GHz] = 47.790 + (n - 5) \times 1.080, n = 5$, a formula for calculating a lowest frequency is $f_L(n)[GHz] = 47.290 + (n - 5) \times 1.080, n = 5$, and a formula for calculating a highest frequency is $f_H(n)[GHz] = 48.290 + (n - 5) \times 1.080, n = 5$.

2000 MHz channel division: 42.3-47.0 GHz is divided based on the millimeter wave band, to obtain eight 540 MHz frequency bands, and 500 MHz is selected from each 540 MHz frequency band, to obtain eight 500 MHz frequency bands. A center frequency of a 500 MHz frequency band selected from one 500 MHz frequency band overlaps a center frequency of the 540 MHz frequency band. Every four of the eight 500 MHz frequency bands are aggregated in ascending order of frequencies, to obtain two 1000 MHz channels.

One 2000 MHz channel has a center frequency of 43.47, a lowest frequency of 42.43, and a highest frequency of 44.51. The other 2000 MHz channel has a center frequency of 45.63, a lowest frequency of 44.59, and a highest frequency of 46.67. Each 2000 MHz channel is formed by aggregating two inconsecutive 1000 MHz channels.

4000 MHz channel division: A center frequency is 44.55, a lowest frequency is 42.43, and a highest frequency is 46.67. The channel is formed by aggregating two inconsecutive 2000 MHz channels.

For example, the first frequency band is a 56.16-73.44 GHz frequency band. The first frequency band may be divided into 32 500 MHz channels, 16 1000 MHz channels, eight 2000 MHz channels, four 4000 MHz channels, or two 8000 MHz channels.

A channel division manner for the 56.16-73.44 GHz frequency band is described herein. In this division method, remaining bandwidths at a front portion and a rear portion of the first frequency band are respectively 80 MHz and 80 MHz.

500 MHz channel division: The 56.16-73.44 GHz frequency band is divided based on the millimeter wave band, to obtain eight 2160 MHz frequency bands, and 2000 MHz is selected from each 2160 MHz frequency band, to obtain eight 2000 MHz frequency bands. A center frequency of a 2000 MHz frequency band selected from one 2160 MHz frequency band overlaps a center frequency of the 2160 MHz frequency band. Each 2000 MHz is bisected twice, to obtain four 500 MHz channels.

A formula for calculating a center frequency of a 1st 500 MHz channel in each 2000 MHz frequency band is

$$f_C(n)[GHz] = 56.49 + \frac{(n-1)}{4} \times 2.160$$

, n = 1,5,9, ...,29 , a formula for calculating a lowest frequency is

$$f_L(n)[GHz] = 56.240 + \frac{(n-1)}{4} \times 2.160$$

, n = 1,5,9, ...,29, and a formula for calculating a highest frequency is

$$f_H(n)[GHz] = 56.740 + \frac{(n-1)}{4} \times 2.160$$

, n = 1,5,9, ...,29.

A formula for calculating a center frequency of a 2nd 500 MHz channel in each 2000 MHz frequency band is

$$f_C(n)[GHz] = 56.990 + \frac{(n-2)}{4} \times 2.160$$

, n = 2,6,10, ...,30 , a formula for calculating a lowest frequency is

$$f_L(n)[GHz] = 56.740 + \frac{(n-2)}{4} \times 2.160$$

, n = 2,6,10, ...,30, and a formula for calculating a highest frequency is

$$f_H(n)[GHz] = 57.240 + \frac{(n-2)}{4} \times 2.160$$

, n = 2,6,10, ...,30.

A formula for calculating a center frequency of a 3rd 500 MHz channel in each 2000 MHz frequency band is

$$f_C(n)[GHz] = 57.490 + \frac{(n-3)}{4} \times 2.160$$

, n = 3,7,11, ...,31, a formula for calculating a lowest frequency is

$$f_L(n)[GHz] = 57.240 + \frac{(n-3)}{4} \times 2.160$$

, n = 3,7,11, ...,31, and a formula for calculating a highest frequency is

$$f_H(n)[GHz] = 57.740 + \frac{(n-3)}{4} \times 2.160$$

, n = 3,7,11, ...,31.

A formula for calculating a center frequency of a 4th 500 MHz channel in each 2000 MHz frequency band is

$$f_C(n)[GHz] = 57.990 + \frac{(n-4)}{4} \times 2.160$$

, n = 4,8,12, ...,32 , a formula for calculating a lowest frequency is

$$f_L(n)[GHz] = 57.740 + \frac{(n-4)}{4} \times 2.160$$

, n = 4,8,12, ...,32, and a formula for calculating a highest frequency is

$$f_H(n)[GHz] = 58.240 + \frac{(n-4)}{4} \times 2.160$$

, n = 4,8,12, ...,32.

1000 MHz channel division: The 56.16-73.44 GHz frequency band is divided based on the millimeter wave band, to obtain eight 2160 MHz frequency bands, and 2000 MHz is selected from each 2160 MHz frequency band, to obtain eight 2000 MHz frequency bands. A center frequency of a 2000 MHz frequency band selected from one 2160 MHz frequency band overlaps a center frequency of the 2160 MHz frequency band. Each 2000 MHz is bisected once, to obtain two 1000 MHz channels.

A formula for calculating a center frequency of a 1st 1000 MHz channel in each 2000 MHz frequency band is

$$f_C(n)[GHz] = 56.740 + \frac{(n-1)}{2} \times 2.160$$

, n = 1,3,5, ...,15 , a formula for calculating a lowest frequency is

$$f_L(n)[GHz] = 56.240 + \frac{(n-1)}{2} \times 2.160$$

, n = 1,3,5, ...,15, and a formula for calculating a highest frequency is

$$f_H(n)[GHz] = 57.240 + \frac{(n-1)}{2} \times 2.160$$

, n = 1,3,5, ...,15.

A formula for calculating a center frequency of a 2nd 1000 MHz channel in each 2000 MHz frequency band is

$$f_C(n)[GHz] = 57.740 + \frac{(n-2)}{2} \times 2.160$$

, n = 2,4,6, ...,16 , a formula for calculating a lowest frequency is

$$f_L(n)[GHz] = 57.240 + \frac{(n-2)}{2} \times 2.160$$

, n = 2,4,6, ...,16, and a formula for calculating a highest frequency is

$$f_H(n)[GHz] = 58.240 + \frac{(n-2)}{2} \times 2.160$$

, n = 2,4,6, ...,16.

2000 MHz channel division: The 56.16-73.44 GHz frequency band is divided based on the millimeter wave band, to obtain eight 2160 MHz frequency bands, and 2000 MHz is selected from each 2160 MHz frequency band, to obtain eight 2000 MHz frequency bands. A center frequency of a 2000 MHz frequency band selected from one 2160 MHz frequency band overlaps a center frequency of the 2160 MHz frequency band.

A formula for calculating a center frequency of each 2000 MHz frequency band is $f_C(n)[GHz]$ = 57.240 + $(n - 1) \times$ 2.160, $1 \leq n \leq 8$, a formula for calculating a lowest frequency is $f_L(n)[GHz]$ = 56.240 + $(n - 1) \times 2.160, 1 \leq n \leq 8$, and a formula for calculating a highest frequency is $f_H(n)[GHz]$ = 58.240 + $(n - 1) \times 2.160, 1 \leq n \leq 8$.

4000 MHz channel division: The 56.16-73.44 GHz frequency band is divided based on the millimeter wave band, to obtain eight 2160 MHz frequency bands, and 2000 MHz is selected from each 2160 MHz frequency band, to obtain eight 2000 MHz frequency bands. A center frequency of a 2000 MHz frequency band selected from one 2160 MHz frequency band overlaps a center frequency of the 2160 MHz frequency band.

Every two of the eight 2000 MHz frequency bands are aggregated in ascending order of frequencies, to obtain four 4000 MHz channels, where each 4000 MHz channel is obtained by aggregating two inconsecutive 2000 MHz channels. A formula for calculating center frequencies of the four 4000 MHz channels is $f_C(n)[GHz]$ = 58.320 + $(n - 1) \times$ 4.320, $1 \leq n \leq 4$, a formula for calculating a lowest frequency is $f_L(n)[GHz]$ = 56.240 + $(n - 1) \times 4.320, 1 \leq n \leq 4$, and a formula for calculating a highest frequency is $f_H(n)[GHz]$ = 60.400 + $(n - 1) \times 4.320, 1 \leq n \leq 4$.

8000 MHz channel division: The 56.16-73.44 GHz frequency band is divided based on the millimeter wave band, to obtain eight 2160 MHz frequency bands, and 2000 MHz is selected from each 2160 MHz frequency band, to obtain eight 2000 MHz frequency bands. A center frequency of a 2000 MHz frequency band selected from one 2160 MHz frequency band overlaps a center frequency of the 2160 MHz frequency band. Every four of the eight 2000 MHz frequency bands are aggregated in ascending order of frequencies, to obtain two 8000 MHz channels, where each 8000 MHz channel is obtained by aggregating four inconsecutive 2000 MHz channels.

A formula for calculating center frequencies of the two 8000 MHz channels is $f_C(n)[GHz]$ = 60.480 + $(n - 1) \times$ 8.640, $1 \leq n \leq 2$, a formula for calculating a lowest frequency is $f_L(n)[GHz]$ = 56.240 + $(n - 1) \times 8.640, 1 \leq n \leq 2$, and a formula for calculating a highest frequency is $f_H(n)[GHz]$ = 64.720 + $(n - 1) \times 8.640, 1 \leq n \leq 2$.

It should be understood that the division manners in Example 10 and Example 11 are merely examples for description, and locations of the center frequency, the lowest frequency, and the highest frequency of the channel are not specifically limited. A channel division manner may be used provided that a bandwidth is divided based on the minimum channel bandwidth of the millimeter wave band and a bandwidth obtained through bisection is less than the minimum channel bandwidth of the millimeter wave band.

In the channel division manner provided in Embodiment 4 of this application, a spectrum resource in the first frequency band can be used as much as possible through smaller-granularity channel division. This reduces a resource waste and improves resource utilization. In Embodiment 4, a part of bandwidth is selected from the minimum channel bandwidth supported in the millimeter wave band, so that interference between channels can be further reduced.

In addition, according to Embodiment 4, the signal in the first frequency band, the signal in the second frequency band, and the signal in the millimeter wave band can be transmitted by reusing the same crystal oscillator. In addition, a correspondence between a bandwidth and an IDFT size/a DFT size (or a quantity of subcarriers) in the second frequency band is reused in the first frequency band, so that the first frequency band and the second frequency band can share a signal processing device, for example, an IDFT device or a DFT device is reused. Therefore, according to Embodiment 4 above, hardware complexity can be reduced, hardware device overheads can be reduced, and device costs can be reduced.

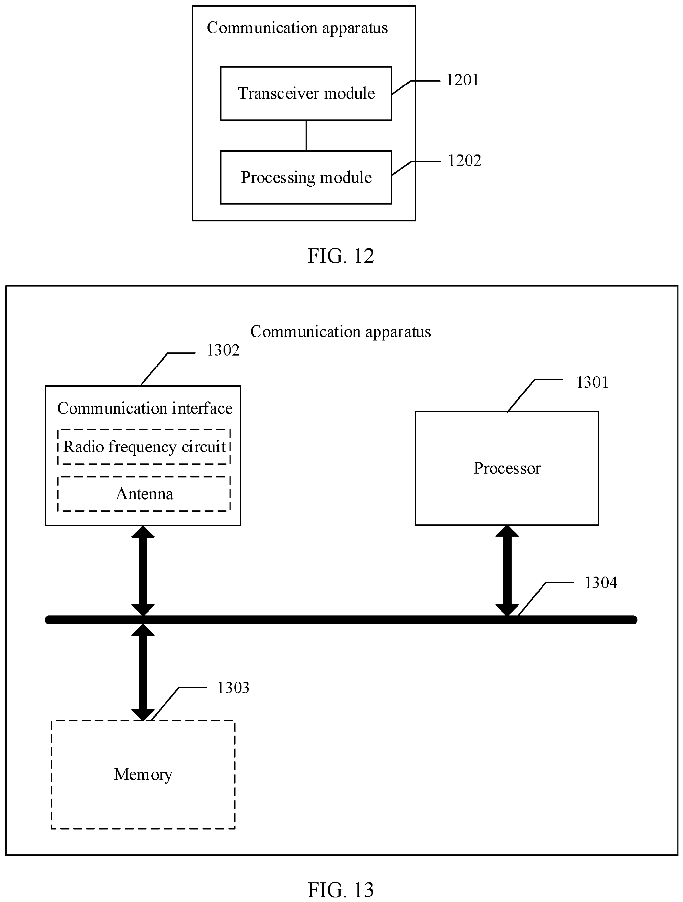

Based on a same inventive concept as the method embodiment, an embodiment of this application provides a communication apparatus. A structure of the communication apparatus may be shown in FIG. 12. The communication apparatus includes a transceiver module 1201 and a processing module 1202. Optionally, the transceiver module 1201 may include a transmit module (transport module, Tx module) and a receive module (receive module, Rx module). The transmit module is configured to send a signal, and the receive module is configured to receive a signal. The communication apparatus may further include a radio frequency unit (radio frequency unit, RF unit). The radio frequency unit may be configured to transmit a signal to a receiver device. The transmit module may transmit a to-be-sent signal to the radio frequency unit for sending. The receive module may receive the signal from the radio frequency unit, and send the signal to the processing module 1202 for further processing.

In an implementation, the communication apparatus may be specifically configured to implement the method performed by the first device in the embodiment shown in FIG. 3. The apparatus may be the first device, or may be a chip or a chipset in the first device, or a part that is of the chip and that is configured to perform a function of a related method. The processing module 1202 is configured to generate a first OFDM signal. The transceiver module 1201 is configured to send the first OFDM signal on a first channel in a first frequency band, where a quantity of subcarriers corresponding to the first channel is greater than or equal to a quantity of subcarriers corresponding to a second channel in a second frequency band, a lowest frequency of the first frequency band is higher than a highest frequency of the second frequency band, the first channel includes $2^M$ first fundamental channels, the second channel includes $2^M$ second fundamental channels, a bandwidth of the first fundamental channel is a minimum channel bandwidth supported in the first frequency band, a bandwidth of the second fundamental channel is a minimum channel bandwidth supported in the second frequency band, the bandwidth of the first fundamental channel is greater than the bandwidth of the second fundamental channel, and M is an integer greater than or equal to 0.

In an implementation, the communication apparatus may be specifically configured to implement the method performed by the second device in the embodiment shown in FIG. 3. The apparatus may be the second device, or may be a chip or a chipset in the second device, or a part that is of the chip and that is configured to perform a function of a related method. The transceiver module 1201 is configured to receive a first OFDM signal on a first channel in a first frequency band, where a quantity of subcarriers corresponding to the first channel is greater than or equal to a quantity of subcarriers corresponding to a second channel in a second frequency band, a lowest frequency of the first frequency band is higher than a highest frequency of the second frequency band, the first channel includes $2^M$ first fundamental channels, the second channel includes $2^M$ second fundamental channels, a bandwidth of the first fundamental channel is a minimum channel bandwidth supported in the first frequency band, a bandwidth of the second fundamental channel is a minimum channel bandwidth supported in the second frequency band, the bandwidth of the first fundamental channel is greater than the bandwidth of the second fundamental channel, and M is an integer greater than or equal to 0. The processing module 1202 is configured to process the first OFDM signal.

For details, refer to related descriptions in Embodiment 1 to Embodiment 4. Details are not described herein again.

Division into modules in embodiments of this application is an example, is merely logical function division, and may be other division during actual implementation. In addition, functional modules in embodiments of this application may be integrated into one processor, or each of the modules may exist alone physically, or two or more modules may be integrated into one module. The integrated module may be implemented in a form of hardware, or may be implemented in a form of a software functional module. It may be understood that for functions or implementations of the modules in embodiments of this application, further refer to related descriptions in the method embodiment.

In a possible implementation, the communication apparatus may be shown in FIG. 13. The apparatus may be a communication device or a chip in the communication device. The communication device may be the first device in the foregoing embodiment or the second device in the foregoing embodiment. The apparatus includes a processor 1301 and a communication interface 1302, and may further include a memory 1303. The processing module 1202 may be a processor 1301. The transceiver module 1201 may be a communication interface 1302. FIG. 13 shows only main components of the communication apparatus. In addition to the processor 1301 and the communication interface 1302, the communication apparatus may further include the memory 1303 and an input/output apparatus (not shown in the figure).

The processor 1301 is configured to execute program code stored in the memory 1303, and is specifically configured to perform an action of the processing module 1202. Details are not described herein again in this application. The communication interface 1302 is specifically configured to perform an action of the transceiver module 1201. Details are not described herein again in this application.

The processor 1301 may be a CPU, a digital processing unit, or the like. The processor 1301 may be configured to process a communication protocol and communication data, control the entire communication apparatus, execute a software program, and process data of the software program, and may be configured to perform, for example, but not limited to, baseband-related processing. The communication interface 1302 may be configured to receive and send a signal, and may be configured to perform, for example, but not limited to, radio frequency receiving and sending. The foregoing devices may be respectively disposed on chips that are independent of each other, or at least some or all of the components may be disposed on a same chip. For example, the processor 1301 may be further divided into an analog baseband processor and a digital baseband processor. The analog baseband processor and a transceiver may be integrated on a same chip, and the digital baseband processor may be disposed on an independent chip. With continuous development of integrated circuit technologies, more and more devices may be integrated on a same chip. For example, the digital baseband processor may be integrated on a same chip with a plurality of application processors (for example, but not limited to a geometric processor and a multimedia processor). The chip may be referred to as a system-on-chip (system on chip). Whether devices are independently disposed on different chips or are integrated and disposed on one or more chips usually depends on a specific requirement of a product design. Specific implementation forms of the devices are not limited in embodiments of the present invention.

The communication interface 1302 may be a transceiver, an interface circuit such as a transceiver circuit, a transceiver chip, or the like. Optionally, the communication interface 1302 may include a radio frequency circuit and an antenna. The radio frequency circuit is mainly configured to: perform conversion between a baseband signal and a radio frequency signal, and process the radio frequency signal. The antenna is mainly configured to receive or send a radio frequency signal in a form of an electromagnetic wave. The input/output apparatus, such as a touchscreen, a display, or a keyboard, is mainly configured to: receive data input by a user and output data to the user.

The memory 1303 is configured to store a program executed by the processor 1301. The memory 1303 may be a nonvolatile memory such as a hard disk drive (hard disk drive, HDD) or a solid-state drive (solid-state drive, SSD), or may be a volatile memory (volatile memory) such as a random access memory (random-access memory, RAM). The memory 1303 is any other medium that can be used to carry or store expected program code in a form of an instruction or a data structure and that can be accessed by a computer, but is not limited thereto.

After the communication apparatus is powered on, the processor 1301 may read the software program in the memory 1303, interpret and execute instructions of the software program, and process data of the software program. When data needs to be sent wirelessly, the processor 1301 performs baseband processing on the to-be-sent data, and then outputs a baseband signal to the radio frequency circuit. The radio frequency circuit performs radio frequency processing on the baseband signal, and then sends a radio frequency signal in a form of an electromagnetic wave through the antenna. When data is sent to the communication apparatus, the radio frequency circuit receives the radio frequency signal through the antenna, converts the radio frequency signal into a baseband signal, and outputs the baseband signal to the processor 1301. The processor 1301 converts the baseband signal into data and processes the data.

In another implementation, the radio frequency circuit and the antenna may be disposed independent of the processor that performs baseband processing. For example, in a distributed scenario, the radio frequency circuit and the antenna may be remotely disposed independent of the communication apparatus.

A specific connection medium between the communication interface 1302, the processor 1301, and the memory 1303 is not limited in embodiments of this application. In this embodiment of this application, the memory 1303, the processor 1301, and the communication interface 1302 are connected through a bus 1304 in FIG. 13. The bus is represented by using a thick line in FIG. 13. A manner of connection between other components is merely an example for description, and is not limited thereto. The bus may be classified into an address bus, a data bus, a control bus, or the like. For ease of representation, only one thick line is used for representation in FIG. 13, but this does not mean that there is only one bus or only one type of bus.

Optionally, the communication apparatus may be an independent device or may be a part of a large device. For example, the communication apparatus may be:

(1) an independent integrated circuit (integrated circuit, IC), a chip, or a chip system or subsystem;
(2) a set of one or more ICs, where optionally, the IC set may alternatively include a storage component configured to store data and instructions;
(3) an application-specific integrated circuit (application-specific integrated circuit, ASIC) such as a modem (Modem);
(4) a module that can be embedded in another device;
(5) a receiver, an intelligent terminal, a wireless device, a handset, a mobile unit, a vehicle-mounted device, a cloud device, an artificial intelligence device, or the like; or
(6) another device, or the like.

An embodiment of the present invention further provides a computer-readable storage medium, configured to store computer software instructions that need to be executed for execution of the foregoing processor, and the computer-readable storage medium includes a program that needs to be executed for execution of the foregoing processor.

An embodiment of this application further provides a communication system, including a communication apparatus configured to implement a function of the first device in the embodiment shown in FIG. 3 and a communication apparatus configured to implement a function of the second device in the embodiment shown in FIG. 3.

Persons skilled in the art should understand that embodiments of this application may be provided as a method, a system, or a computer program product. Therefore, this application may use a form of hardware only embodiments, software only embodiments, or embodiments with a combination of software and hardware. In addition, this application may use a form of a computer program product that is implemented on one or more computer-usable storage media (including but not limited to a disk memory, a CD-ROM, an optical memory, and the like) that include computer-usable program code.

This application is described with reference to the flowcharts and/or block diagrams of the method, the device (system), and the computer program product according to this application. It should be understood that computer program instructions may be used to implement each procedure and/or each block in the flowcharts and/or the block diagrams and a combination of a procedure and/or a block in the flowcharts and/or the block diagrams. These computer program instructions may be provided for a general-purpose computer, a dedicated computer, an embedded processor, or a processor of another programmable data processing device to generate a machine, so that the instructions executed by a computer or a processor of another programmable data processing device generate an apparatus for implementing a specific function in one or more procedures in the flowcharts and/or in one or more blocks in the block diagrams.

These computer program instructions may be stored in a computer-readable memory that can indicate the computer or another programmable data processing device to work in a specific manner, so that the instructions stored in the computer-readable memory generate an artifact that includes an instruction apparatus. The instruction apparatus implements a specific function in one or more procedures in the flowcharts and/or in one or more blocks in the block diagrams.

The computer program instructions may alternatively be loaded onto a computer or another programmable data processing device, so that a series of operations and steps are performed on the computer or the another programmable device, so that computer-implemented processing is generated. Therefore, the instructions executed on the computer or the another programmable device provide steps for implementing a specific function in one or more procedures in the flowcharts and/or in one or more blocks in the block diagrams.

It is clearly that persons skilled in the art can make various modifications and variations to this application without departing from the scope of this application. This application is intended to cover these modifications and variations of this application provided that they fall within the scope of protection defined by the following claims and their equivalent technologies.

**Claims**

1. A communication method, wherein the method comprises:

   generating a first orthogonal frequency division multiplexing OFDM signal; and
   sending the first OFDM signal on a first channel in a first frequency band, wherein a quantity of subcarriers corresponding to the first channel is greater than or equal to a quantity of subcarriers corresponding to a second channel in a second frequency band, a lowest frequency of the first frequency band is higher than a highest frequency of the second frequency band, the first channel comprises $2^M$ first fundamental channels, the second channel comprises $2^M$ second fundamental channels, a bandwidth of the first fundamental channel is a minimum channel bandwidth supported in the first frequency band, a bandwidth of the second fundamental channel is a minimum channel bandwidth supported in the second frequency band, the bandwidth of the first fundamental channel is greater than the bandwidth of the second fundamental channel, and M is an integer greater than or equal to 0.

2. A communication method, wherein the method comprises:

   receiving a first orthogonal frequency division multiplexing OFDM signal on a first channel in a first frequency band, wherein a quantity of subcarriers corresponding to the first channel is greater than or equal to a quantity of subcarriers corresponding to a second channel in a second frequency band, a lowest frequency of the first frequency band is higher than a highest frequency of the second frequency band, the first channel comprises $2^M$ first fundamental channels, the second channel comprises $2^M$ second fundamental channels, a bandwidth of the first fundamental channel is a minimum channel bandwidth supported in the first frequency band, a bandwidth of the second fundamental channel is a minimum channel bandwidth supported in the second frequency band, the bandwidth of the first fundamental channel is greater than the bandwidth of the second fundamental channel, and M is an integer greater than or equal to 0; and
   processing the first OFDM symbol.

3. The method according to claim 1 or 2, wherein a subcarrier spacing of the first channel is greater than or equal to a threshold.

4. The method according to any one of claims 1 to 3, wherein the bandwidth of the first fundamental channel is N times the bandwidth of the second fundamental channel, and N is an integer greater than 1.

5. The method according to claim 4, wherein the bandwidth of the first fundamental channel is 320 MHz.

6. The method according to claim 5, wherein the quantity of subcarriers corresponding to the first channel meets any one of the following:

   if the bandwidth of the first channel is 320 MHz, the first channel corresponds to 64 subcarriers;
   if the bandwidth of the first channel is 640 MHz, the first channel corresponds to 128 subcarriers;
   if the bandwidth of the first channel is 1280 MHz, the first channel corresponds to 256 subcarriers;
   if the bandwidth of the first channel is 2560 MHz, the first channel corresponds to 512 subcarriers; or
   if the bandwidth of the first channel is 5120 MHz, the first channel corresponds to 1024 subcarriers.

7. The method according to claim 4, wherein the bandwidth of the first fundamental channel is 640 MHz.

8. The method according to claim 7, wherein the quantity of subcarriers corresponding to the first channel meets any one of the following:

   if the bandwidth of the first channel is 640 MHz, the first channel corresponds to 64 subcarriers;

if the bandwidth of the first channel is 1280 MHz, the first channel corresponds to 128 subcarriers;
if the bandwidth of the first channel is 2560 MHz, the first channel corresponds to 256 subcarriers; or
if the bandwidth of the first channel is 5120 MHz, the first channel corresponds to 512 subcarriers; or
if the bandwidth of the first channel is 10240 MHz, the first channel corresponds to 1024 subcarriers.

9. The method according to claim 4, wherein the bandwidth of the first fundamental channel is 80 MHz.

10. The method according to claim 9, wherein the quantity of subcarriers corresponding to the first channel meets any one of the following:

if the bandwidth of the first channel is 80 MHz, the first channel corresponds to 64 subcarriers;
if the bandwidth of the first channel is 160 MHz, the first channel corresponds to 128 subcarriers;
if the bandwidth of the first channel is 320 MHz, the first channel corresponds to 256 subcarriers;
if the bandwidth of the first channel is 640 MHz, the first channel corresponds to 512 subcarriers; or
if the bandwidth of the first channel is 1280 MHz, the first channel corresponds to 1024 subcarriers.

11. The method according to claim 4, wherein the bandwidth of the first fundamental channel is 160 MHz.

12. The method according to claim 11, wherein the quantity of subcarriers corresponding to the first channel meets any one of the following:

if the bandwidth of the first channel is 160 MHz, the first channel corresponds to 64 subcarriers;
if the bandwidth of the first channel is 320 MHz, the first channel corresponds to 128 subcarriers;
if the bandwidth of the first channel is 640 MHz, the first channel corresponds to 256 subcarriers;
if the bandwidth of the first channel is 1280 MHz, the first channel corresponds to 512 subcarriers; or
if the bandwidth of the first channel is 2560 MHz, the first channel corresponds to 1024 subcarriers.

13. The method according to any one of claims 1 to 3, wherein the bandwidth of the first fundamental channel is obtained by separately performing R times of bisection on a frequency band obtained by dividing the first frequency band based on a minimum channel bandwidth supported in a millimeter wave band, wherein R is an integer greater than or equal to 0.

14. The method according to claim 13, wherein the bandwidth of the first fundamental channel is 270 MHz.

15. The method according to claim 14, wherein the quantity of subcarriers corresponding to the first channel meets any one of the following:

if the bandwidth of the first channel is 270 MHz, the first channel corresponds to 64 subcarriers;
if the bandwidth of the first channel is 540 MHz, the first channel corresponds to 128 subcarriers;
if the bandwidth of the first channel is 1080 MHz, the first channel corresponds to 256 subcarriers;
if the bandwidth of the first channel is 2160 MHz, the first channel corresponds to 512 subcarriers; or
if the bandwidth of the first channel is 4320 MHz, the first channel corresponds to 1024 subcarriers.

16. The method according to claim 13, wherein the bandwidth of the first fundamental channel is 540 MHz.

17. The method according to claim 16, wherein the quantity of subcarriers corresponding to the first channel meets any one of the following:

if the bandwidth of the first channel is 540 MHz, the first channel corresponds to 64 subcarriers;
if the bandwidth of the first channel is 1080 MHz, the first channel corresponds to 128 subcarriers;
if the bandwidth of the first channel is 2160 MHz, the first channel corresponds to 256 subcarriers; or
if the bandwidth of the first channel is 4320 MHz, the first channel corresponds to 512 subcarriers; or
if the bandwidth of the first channel is 8640 MHz, the first channel corresponds to 1024 subcarriers.

18. The method according to any one of claims 1 to 3, wherein the bandwidth of the first fundamental channel is obtained by performing K times of bisection on a first subband, a bandwidth of the first subband is less than a minimum channel bandwidth supported in a millimeter wave band, and K is an integer greater than or equal to 0.

19. The method according to claim 18, wherein the bandwidth of the first fundamental channel is 250 MHz.

20. The method according to claim 19, wherein the quantity of subcarriers corresponding to the first channel meets any one of the following:

if the bandwidth of the first channel is 250 MHz, the first channel corresponds to 64 subcarriers;
if the bandwidth of the first channel is 500 MHz, the first channel corresponds to 128 subcarriers;
if the bandwidth of the first channel is 1000 MHz, the first channel corresponds to 256 subcarriers;
if the bandwidth of the first channel is 2000 MHz, the first channel corresponds to 512 subcarriers; or
if the bandwidth of the first channel is 4000 MHz, the first channel corresponds to 1024 subcarriers.

21. The method according to claim 18, wherein the bandwidth of the first fundamental channel is 500 MHz.

22. The method according to claim 21, wherein the quantity of subcarriers corresponding to the first channel meets any one of the following:

if the bandwidth of the first channel is 500 MHz, the first channel corresponds to 64 subcarriers;
if the bandwidth of the first channel is 1000 MHz, the first channel corresponds to 128 subcarriers;
if the bandwidth of the first channel is 2000 MHz, the first channel corresponds to 256 subcarriers; or
if the bandwidth of the first channel is 4000 MHz, the first channel corresponds to 512 subcarriers; or
if the bandwidth of the first channel is 8000 MHz, the first channel corresponds to 1024 subcarriers.

23. The method according to any one of claims 1 to 22, wherein the first frequency band is a 60 GHz frequency band, or the first frequency band is a 45 GHz frequency band; and
the second frequency band is a 2.45 GHz frequency band, or the second frequency band is a 6 GHz frequency band.

24. A communication apparatus, comprising a memory and a processor, wherein

the memory is configured to store instructions; and
the processor is configured to execute the instructions, to implement the method according to claim 1 or any one of claims 3 to 23.

25. A communication apparatus, comprising a memory and a processor, wherein

the memory is configured to store instructions; and
the processor is configured to execute the instructions, to implement the method according to any one of claims 2 to 23.

26. A computer-readable storage medium, wherein the computer-readable storage medium is configured to store computer instructions, and when the computer instructions are run on a computer, the computer is enabled to perform the method according to any one of claims 1 to 23.

27. A chip, comprising a memory and a processor, wherein

the memory is configured to store instructions; and
the processor is configured to execute the instructions, so that a communication apparatus comprising the chip implements the method according to claim 1 or any one of claims 3 to 23.

28. A chip, comprising a memory and a processor, wherein

the memory is configured to store instructions; and
the processor is configured to execute the instructions, so that a communication apparatus comprising the chip implements the method according to any one of claims 2 to 23.

FIG. 1

FIG. 2

First device

Second device

S301: Generate a first
OFDM signal

S302: Send the first OFDM signal on a
first channel in a first frequency band

S303: Process the first
OFDM symbol

FIG. 3

| 320 MHz | | | | | | | | | | | | | | | | | | | | | | | | | | | | | | | | | | | |
| 640 MHz | | | | | | | | | | | | | | | | | | |
| 1280 MHz | | | | | | | | | |
| 2560 MHz | | | | |
| 5120 MHz | | |

FIG. 4

28 320 MHz channels, 14 640 MHz channels, seven 1280 MHz channels, three 2560 MHz channels, or one 5120 MHz channel

FIG. 5

FIG. 6

14 640 MHz channels, seven 1280 MHz channels, three 2560 MHz channels, or one 5120 MHz channel

FIG. 7

57 GHz    2160 MHz    2160 MHz    2160 MHz    2160 MHz    66 GHz

270 MHz

540 MHz

1080 MHz

2160 MHz

4320 MHz

FIG. 8

240 MHz    2160 MHz    2160 MHz    2160 MHz    2160 MHz    120 MHz

57 GHz       66 GHz      Frequency

FIG. 9

FIG. 10

FIG. 11

Communication apparatus

Transceiver module — 1201

Processing module — 1202

FIG. 12

Communication apparatus

1302

Communication interface

Radio frequency circuit

Antenna

1301

Processor

1304

1303

Memory

FIG. 13

## INTERNATIONAL SEARCH REPORT

| International application No. |
| --- |
| **PCT/CN2023/083271** |

**A.    CLASSIFICATION OF SUBJECT MATTER**

H04L5/00(2006.01)i

According to International Patent Classification (IPC) or to both national classification and IPC

**B.    FIELDS SEARCHED**

Minimum documentation searched (classification system followed by classification symbols)

IPC: H04W H04L H04B

Documentation searched other than minimum documentation to the extent that such documents are included in the fields searched

Electronic data base consulted during the international search (name of data base and, where practicable, search terms used)

CNABS, CNKI, VEN, VCN, 3GPP, IEEE: 正交频分复用, 频段, 子载波, 带宽, OFDM, IDFT, DFT, FFT, IFFT, subcarrier, bandwidth, 60GHz, 6GHz, 802.11ay, 802.11aj

**C.    DOCUMENTS CONSIDERED TO BE RELEVANT**

| Category* | Citation of document, with indication, where appropriate, of the relevant passages | Relevant to claim No. |
| --- | --- | --- |
| A | CN 109428700 A (HUAWEI TECHNOLOGIES CO., LTD.) 05 March 2019 (2019-03-05) description, paragraphs 2-69 and 85-271 | 1-28 |
| A | CN 107634925 A (ZTE CORP.) 26 January 2018 (2018-01-26) entire document | 1-28 |
| A | US 2019182089 A1 (LG ELECTRONICS INC.) 13 June 2019 (2019-06-13) entire document | 1-28 |
| A | WO 2019146986 A1 (SAMSUNG ELECTRONICS CO., LTD.) 01 August 2019 (2019-08-01) entire document | 1-28 |
| A | CHARTER COMMUNICATIONS. "Waveform Enhancements for 60GHz operation" *3GPP TSG-RAN WG1 Meeting #101-e R1-2003777*, 05 June 2020 (2020-06-05), entire document | 1-28 |
| A | MEDIATEK INC. "On required changes to NR using existing DL/UL NR waveform for operation in 60GHz band" *3GPP TSG RAN WG1 #102-e R1-2006989*, 28 August 2020 (2020-08-28), entire document | 1-28 |

☐ Further documents are listed in the continuation of Box C.          ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **08 June 2023** | **14 June 2023** |

| Name and mailing address of the ISA/CN | Authorized officer |
| --- | --- |
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2023/083271**

| Patent document cited in search report | | | Publication date (day/month/year) | Patent family member(s) | | | Publication date (day/month/year) |
|---|---|---|---|---|---|---|---|
| CN | 109428700 | A | 05 March 2019 | EP | 3667996 | A1 | 17 June 2020 |
| | | | | EP | 3667996 | A4 | 19 August 2020 |
| | | | | US | 2020204325 | A1 | 25 June 2020 |
| | | | | WO | 2019042291 | A1 | 07 March 2019 |
| CN | 107634925 | A | 26 January 2018 | US | 2019327041 | A1 | 24 October 2019 |
| | | | | US | 10944519 | B2 | 09 March 2021 |
| | | | | US | 2022173846 | A1 | 02 June 2022 |
| | | | | EP | 3512171 | A1 | 17 July 2019 |
| | | | | EP | 3512171 | A4 | 24 June 2020 |
| | | | | US | 2021266119 | A1 | 26 August 2021 |
| | | | | US | 11374706 | B2 | 28 June 2022 |
| | | | | WO | 2018014781 | A1 | 25 January 2018 |
| US | 2019182089 | A1 | 13 June 2019 | EP | 3654601 | A1 | 20 May 2020 |
| | | | | EP | 3654601 | A4 | 08 July 2020 |
| | | | | EP | 3654601 | B1 | 11 August 2021 |
| | | | | US | 10659267 | B2 | 19 May 2020 |
| | | | | US | 2020235977 | A1 | 23 July 2020 |
| | | | | US | 11057255 | B2 | 06 July 2021 |
| | | | | KR | 20190019202 | A | 26 February 2019 |
| | | | | KR | 102083567 | B1 | 02 March 2020 |
| | | | | WO | 2019013432 | A1 | 17 January 2019 |
| | | | | CN | 110999246 | A | 10 April 2020 |
| WO | 2019146986 | A1 | 01 August 2019 | EP | 3729906 | A1 | 28 October 2020 |
| | | | | EP | 3729906 | A4 | 13 January 2021 |
| | | | | KR | 20200090949 | A | 29 July 2020 |
| | | | | KR | 102361790 | B1 | 14 February 2022 |
| | | | | US | 2021153249 | A1 | 20 May 2021 |
| | | | | US | 2019230706 | A1 | 25 July 2019 |
| | | | | US | 10912128 | B2 | 02 February 2021 |
| | | | | CN | 111758293 | A | 09 October 2020 |

Form PCT/ISA/210 (patent family annex) (July 2022)

**REFERENCES CITED IN THE DESCRIPTION**

**Patent documents cited in the description**

- CN 202210369283